# EUROPEAN PATENT APPLICATION

(11) **EP 4 395 263 A1**
(43) Date of publication of application: **03.07.2024**
(21) Application number: 23216823.7
(22) Date of filing: 14.12.2023
(51) Int. Cl.: H04L 45/02, H04L 45/12, H04L 45/00, H04L 45/18, H04L 45/50, H04L 45/741

(54) **AUTONOMOUS PATH CONSTRUCTION AND ROUTING**

(30) Priority: 27.12.2022 US 202218088913
(71) Applicant: Nokia Solutions and Networks Oy, 02610 Espoo (FI)
(72) Inventor: DUTTA, Pranjal Kumar, Sunnyvale, 94086 (US)
(74) Representative: Swindell & Pearson Limited

(57) **Abstract**

Various example embodiments for supporting autonomous path construction and routing in a communication network are presented. Various example embodiments for supporting autonomous path construction and routing in a communication network may be configured to support autonomous path construction based on flooding of path state advertisements within the communication network. Various example embodiments for supporting autonomous path construction and routing in a communication network may be configured to support autonomous path construction based on flooding of path state advertisements including information supporting construction of full sets of loop-free unequal cost paths between all pairs of network elements in the communication network. Various example embodiments for supporting autonomous path construction and routing in a communication network may be configured to support routing based on autonomously constructed paths that include loop-free unequal cost paths between pairs of network elements in the communication network.

## Description

### TECHNICAL FIELD

Various example embodiments relate generally to communication systems and, more particularly but not exclusively, to construction of paths and routing of packets along paths.

### BACKGROUND

In communication networks, various communications technologies may be used to support various types of communications.

### SUMMARY

In at least some example embodiments, an apparatus includes at least one processor and at least one memory storing instructions that, when executed by the at least one processor, cause the apparatus to create, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node and send, by the node toward the adjacent node via the link, the path state advertisement. In at least some example embodiments, the address associated with the node includes an address of the node or an address learned by the node. In at least some example embodiments, the path field is empty and the cost field is empty. In at least some example embodiments, the path field includes an identifier of the link and the cost field includes a cost of the link. In at least some example embodiments, the path state advertisement includes a path identifier assigned by the node for the path to the node.

In at least some example embodiments, a non-transitory computer readable medium includes program instructions that, when executed by an apparatus, cause the apparatus at least to create, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node and send, by the node toward the adjacent node via the link, the path state advertisement. In at least some example embodiments, the address associated with the node includes an address of the node or an address learned by the node. In at least some example embodiments, the path field is empty and the cost field is empty. In at least some example embodiments, the path field includes an identifier of the link and the cost field includes a cost of the link. In at least some example embodiments, the path state advertisement includes a path identifier assigned by the node for the path to the node.

In at least some example embodiments, a method includes creating, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node and sending, by the node toward the adjacent node via the link, the path state advertisement. In at least some example embodiments, the address associated with the node includes an address of the node or an address learned by the node. In at least some example embodiments, the path field is empty and the cost field is empty. In at least some example embodiments, the path field includes an identifier of the link and the cost field includes a cost of the link. In at least some example embodiments, the path state advertisement includes a path identifier assigned by the node for the path to the node.

In at least some example embodiments, an apparatus includes means for creating, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node and means for sending, by the node toward the adjacent node via the link, the path state advertisement. In at least some example embodiments, the address associated with the node includes an address of the node or an address learned by the node. In at least some example embodiments, the path field is empty and the cost field is empty. In at least some example embodiments, the path field includes an identifier of the link and the cost field includes a cost of the link. In at least some example embodiments, the path state advertisement includes a path identifier assigned by the node for the path to the node.

In at least some example embodiments, an apparatus includes at least one processor and at least one memory storing instructions that, when executed by the at least one processor, cause the apparatus to receive, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node, modify, by the first node, the path state advertisement to form a modified path state advertisement, and send, by the first node toward a third node via a second link between the first node and the third node, the modified path state advertisement. In at least some example embodiments, to modify the path state advertisement to form the modified path state advertisement, the instructions, when executed by the at least one processor, cause the apparatus at least to update the set of identifiers in the path field of the path state advertisement to include an identifier of the first link and update the cost in the cost field of the path state advertisement by adding the cost of the first link. In at least some example embodiments, the path field includes an identifier of the first link, wherein the cost includes a link cost of the first link. In at least some example embodiments, to modify the path state advertisement to form the modified path state advertisement, the instructions, when executed by the at least one processor, cause the apparatus at least to update the set of identifiers in the path field of the path state advertisement to include an identifier of the second link and update the cost in the cost field of the path state advertisement by adding the cost of the second link. In at least some example embodiments, the instructions, when executed by the at least one processor, cause the apparatus at least to maintain, by the node in a forwarding table of the node, a path state entry for the destination node, wherein the path state entry includes a mapping of the address associated with the destination node to the set of identifiers and the cost. In at least some example embodiments, the path state advertisement includes a path identifier assigned by the second node for the path to the destination node. In at least some example embodiments, the modified path state advertisement includes a path identifier assigned by the node for the path to the destination node. In at least some example embodiments, the instructions, when executed by the at least one processor, cause the apparatus at least to maintain, by the node in a path identifier mapping table of the node, a mapping of the path identifier assigned by the node for the path to the destination node to the path identifier assigned by the second node for the path to the destination node. In at least some example embodiments, the modified path state advertisement includes a path identifier assigned by the node for the path to the destination node.

In at least some example embodiments, a non-transitory computer readable medium includes program instructions that, when executed by an apparatus, cause the apparatus at least to receive, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node, modify, by the first node, the path state advertisement to form a modified path state advertisement, and send, by the first node toward a third node via a second link between the first node and the third node, the modified path state advertisement. In at least some example embodiments, to modify the path state advertisement to form the modified path state advertisement, the program instructions, when executed by the apparatus, cause the apparatus at least to update the set of identifiers in the path field of the path state advertisement to include an identifier of the first link and update the cost in the cost field of the path state advertisement by adding the cost of the first link. In at least some example embodiments, the path field includes an identifier of the first link, wherein the cost includes a link cost of the first link. In at least some example embodiments, to modify the path state advertisement to form the modified path state advertisement, the program instructions, when executed by the apparatus, cause the apparatus at least to update the set of identifiers in the path field of the path state advertisement to include an identifier of the second link and update the cost in the cost field of the path state advertisement by adding the cost of the second link. In at least some example embodiments, the program instructions, when executed by the apparatus, cause the apparatus at least to maintain, by the node in a forwarding table of the node, a path state entry for the destination node, wherein the path state entry includes a mapping of the address associated with the destination node to the set of identifiers and the cost. In at least some example embodiments, the path state advertisement includes a path identifier assigned by the second node for the path to the destination node. In at least some example embodiments, the modified path state advertisement includes a path identifier assigned by the node for the path to the destination node. In at least some example embodiments, the program instructions, when executed by the apparatus, cause the apparatus at least to maintain, by the node in a path identifier mapping table of the node, a mapping of the path identifier assigned by the node for the path to the destination node to the path identifier assigned by the second node for the path to the destination node. In at least some example embodiments, the modified path state advertisement includes a path identifier assigned by the node for the path to the destination node.

In at least some example embodiments, a method includes receiving, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node, modifying, by the first node, the path state advertisement to form a modified path state advertisement, and sending, by the first node toward a third node via a second link between the first node and the third node, the modified path state advertisement. In at least some example embodiments, modifying the path state advertisement to form the modified path state advertisement includes updating the set of identifiers in the path field of the path state advertisement to include an identifier of the first link and updating the cost in the cost field of the path state advertisement by adding the cost of the first link. In at least some example embodiments, the path field includes an identifier of the first link, wherein the cost includes a link cost of the first link. In at least some example embodiments, modifying the path state advertisement to form the modified path state advertisement includes updating the set of identifiers in the path field of the path state advertisement to include an identifier of the second link and updating the cost in the cost field of the path state advertisement by adding the cost of the second link. In at least some example embodiments, the method includes maintaining, by the node in a forwarding table of the node, a path state entry for the destination node, wherein the path state entry includes a mapping of the address associated with the destination node to the set of identifiers and the cost. In at least some example embodiments, the path state advertisement includes a path identifier assigned by the second node for the path to the destination node. In at least some example embodiments, the modified path state advertisement includes a path identifier assigned by the node for the path to the destination node. In at least some example embodiments, the method includes maintaining, by the node in a path identifier mapping table of the node, a mapping of the path identifier assigned by the node for the path to the destination node to the path identifier assigned by the second node for the path to the destination node. In at least some example embodiments, the modified path state advertisement includes a path identifier assigned by the node for the path to the destination node.

In at least some example embodiments, an apparatus includes means for receiving, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node, means for modifying, by the first node, the path state advertisement to form a modified path state advertisement, and means for sending, by the first node toward a third node via a second link between the first node and the third node, the modified path state advertisement. In at least some example embodiments, the means for modifying the path state advertisement to form the modified path state advertisement includes means for updating the set of identifiers in the path field of the path state advertisement to include an identifier of the first link and means for updating the cost in the cost field of the path state advertisement by adding the cost of the first link. In at least some example embodiments, the path field includes an identifier of the first link, wherein the cost includes a link cost of the first link. In at least some example embodiments, the means for modifying the path state advertisement to form the modified path state advertisement includes means for updating the set of identifiers in the path field of the path state advertisement to include an identifier of the second link and means for updating the cost in the cost field of the path state advertisement by adding the cost of the second link. In at least some example embodiments, the apparatus includes means for maintaining, by the node in a forwarding table of the node, a path state entry for the destination node, wherein the path state entry includes a mapping of the address associated with the destination node to the set of identifiers and the cost. In at least some example embodiments, the path state advertisement includes a path identifier assigned by the second node for the path to the destination node. In at least some example embodiments, the modified path state advertisement includes a path identifier assigned by the node for the path to the destination node. In at least some example embodiments, the apparatus includes means for maintaining, by the node in a path identifier mapping table of the node, a mapping of the path identifier assigned by the node for the path to the destination node to the path identifier assigned by the second node for the path to the destination node. In at least some example embodiments, the modified path state advertisement includes a path identifier assigned by the node for the path to the destination node.

In at least some example embodiments, an apparatus includes at least one processor and at least one memory storing instructions that, when executed by the at least one processor, cause the apparatus to receive, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node and support, by the node based on the path state advertisement, communication of a packet toward the destination node. In at least some example embodiments, to support communication of the packet toward the destination node, the instructions, when executed by the at least one processor, cause the apparatus at least to select, by the node from a set of available paths to the destination based on the cost of the path to the destination node, the path to the destination node and forward, by the node via the path to the destination node, the packet. In at least some example embodiments, to support communication of the packet toward the destination node, the instructions, when executed by the at least one processor, cause the apparatus at least to include, by the node within the packet, a source route including the set of identifiers of the set of elements of the path to the destination node and forward, by the node toward a second node associated with a first identifier in the set of identifiers of the set of elements of the path to the destination node, the packet. In at least some example embodiments, the path state advertisement is received from a second node, wherein the path state advertisement includes a path identifier assigned by the second node for the path to the destination node. In at least some example embodiments, to support communication of the packet toward the destination node, the instructions, when executed by the at least one processor, cause the apparatus at least to include, by the node within the packet, the path identifier assigned by the second node for the path to the destination node and forward, by the node toward the second node, the packet.

In at least some example embodiments, a non-transitory computer readable medium includes program instructions that, when executed by an apparatus, cause the apparatus at least to receive, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node and support, by the node based on the path state advertisement, communication of a packet toward the destination node. In at least some example embodiments, to support communication of the packet toward the destination node, the program instructions, when executed by the apparatus, cause the apparatus at least to select, by the node from a set of available paths to the destination based on the cost of the path to the destination node, the path to the destination node and forward, by the node via the path to the destination node, the packet. In at least some example embodiments, to support communication of the packet toward the destination node, the program instructions, when executed by the apparatus, cause the apparatus at least to include, by the node within the packet, a source route including the set of identifiers of the set of elements of the path to the destination node and forward, by the node toward a second node associated with a first identifier in the set of identifiers of the set of elements of the path to the destination node, the packet. In at least some example embodiments, the path state advertisement is received from a second node, wherein the path state advertisement includes a path identifier assigned by the second node for the path to the destination node. In at least some example embodiments, to support communication of the packet toward the destination node, the program instructions, when executed by the apparatus, cause the apparatus at least to include, by the node within the packet, the path identifier assigned by the second node for the path to the destination node and forward, by the node toward the second node, the packet.

In at least some example embodiments, a method includes receiving, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node and supporting, by the node based on the path state advertisement, communication of a packet toward the destination node. In at least some example embodiments, supporting communication of the packet toward the destination node includes selecting, by the node from a set of available paths to the destination based on the cost of the path to the destination node, the path to the destination node and forwarding, by the node via the path to the destination node, the packet. In at least some example embodiments, supporting communication of the packet toward the destination node includes including, by the node within the packet, a source route including the set of identifiers of the set of elements of the path to the destination node and forwarding, by the node toward a second node associated with a first identifier in the set of identifiers of the set of elements of the path to the destination node, the packet. In at least some example embodiments, the path state advertisement is received from a second node, wherein the path state advertisement includes a path identifier assigned by the second node for the path to the destination node. In at least some example embodiments, supporting communication of the packet toward the destination node includes including, by the node within the packet, the path identifier assigned by the second node for the path to the destination node and forwarding, by the node toward the second node, the packet.

In at least some example embodiments, an apparatus includes means for receiving, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node and means for supporting, by the node based on the path state advertisement, communication of a packet toward the destination node. In at least some example embodiments, the means for supporting communication of the packet toward the destination node includes means for selecting, by the node from a set of available paths to the destination based on the cost of the path to the destination node, the path to the destination node and means for forwarding, by the node via the path to the destination node, the packet. In at least some example embodiments, the means for supporting communication of the packet toward the destination node includes means for including, by the node within the packet, a source route including the set of identifiers of the set of elements of the path to the destination node and means for forwarding, by the node toward a second node associated with a first identifier in the set of identifiers of the set of elements of the path to the destination node, the packet. In at least some example embodiments, the path state advertisement is received from a second node, wherein the path state advertisement includes a path identifier assigned by the second node for the path to the destination node. In at least some example embodiments, the means for supporting communication of the packet toward the destination node includes means for including, by the node within the packet, the path identifier assigned by the second node for the path to the destination node and means for forwarding, by the node toward the second node, the packet.

In at least some example embodiments, an apparatus includes at least one processor and at least one memory storing instructions that, when executed by the at least one processor, cause the apparatus to receive, by a node, a set of path state advertisements for a respective set of paths from the node to a destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node, maintain, by the node for the destination node based on the set of path state advertisements, unequal cost multipath routing information for the paths from the node to the destination node, and forward, by the node toward the destination node based on the unequal cost multipath routing information, a packet.

In at least some example embodiments, a non-transitory computer readable medium includes program instructions that, when executed by an apparatus, cause the apparatus at least to receive, by a node, a set of path state advertisements for a respective set of paths from the node to a destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node, maintain, by the node for the destination node based on the set of path state advertisements, unequal cost multipath routing information for the paths from the node to the destination node, and forward, by the node toward the destination node based on the unequal cost multipath routing information, a packet.

In at least some example embodiments, a method includes receiving, by a node, a set of path state advertisements for a respective set of paths from the node to a destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node, maintaining, by the node for the destination node based on the set of path state advertisements, unequal cost multipath routing information for the paths from the node to the destination node, and forwarding, by the node toward the destination node based on the unequal cost multipath routing information, a packet.

In at least some example embodiments, an apparatus includes means for receiving, by a node, a set of path state advertisements for a respective set of paths from the node to a destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node, means for maintaining, by the node for the destination node based on the set of path state advertisements, unequal cost multipath routing information for the paths from the node to the destination node, and means for forwarding, by the node toward the destination node based on the unequal cost multipath routing information, a packet.

### BRIEF DESCRIPTION OF THE DRAWINGS

The teachings herein can be readily understood by considering the following detailed description in conjunction with the accompanying drawings, in which:
FIG. 1 depicts an example embodiment of a communication network configured to support various example embodiments of autonomous path construction and routing presented herein;
FIG. 2 depicts an example embodiment of a packet switching network for illustrating various packet routing paradigms;
FIG. 3 depicts an example embodiment of a packet switching network for illustrating a shortest path routing paradigm;
FIG. 4 depicts an example embodiment of a packet switching network for illustrating a stateful explicit path routing paradigm;
FIG. 5 depicts an example embodiment of a packet switching network for illustrating a stateless explicit path routing paradigm;
FIG. 6 depicts an example of micro-loops in a network during network convergence in the network;
FIG. 7 depicts an example of a micro-loop in a network during a fast-reroute during a fast reroute operation in the network;
FIG. 8 depicts an example of a macro-loop in a network during a fast-reroute operation in the network;
FIG. 9 depicts an example embodiment of forwarding tables maintained at the destination node H of the packet switching network of FIG. 2;
FIG. 10 depicts an example embodiment of forwarding tables maintained at the node F of the packet switching network of FIG. 2;
FIG. 11 depicts an example embodiment of forwarding tables maintained at the node G of the packet switching network of FIG. 2;
FIGs. 12A and 12B depict an example embodiment of forwarding tables maintained at the node D of the packet switching network of FIG. 2;
FIGs. 13A-13C depict an example embodiment of forwarding tables maintained at the node A of the packet switching network of FIG. 2;
FIGs. 14A-14B depict an example embodiment of forwarding tables maintained at the node A of the packet switching network of FIG. 2 after node A converges after the failure of node F of the packet switching network of FIG. 2;
FIGs. 15A-15B depict an example embodiment of forwarding tables maintained at the node A of the packet switching network of FIG. 2 after node A selects a subset of optimal paths to node H of the packet switching network of FIG. 2;
FIG. 16 depicts an example embodiment of a method for use by a node for originating a Path State Advertisement;
FIG. 17 depicts an example embodiment of a method for use by a node for processing a Path State Advertisement;
FIG. 18 depicts an example embodiment of a method for use by a node for performing loop detection on a Path State Advertisement (PSA) received on a link;
FIG. 19 depicts an example embodiment of a method for use by an ingress node for sending a packet on a path to a destination node;
FIG. 20 depicts an example embodiment of a method for use by an ingress node for resolution of a path to a destination node;
FIG. 21 depicts an example embodiment of a method for use by a transit node or an egress node to process a received packet encoded with a Path-ID;
FIG. 22 depicts an example embodiment of a method for use by a transit router or an egress router to process a received packet encoded with a source route;
FIG. 23 depicts an example embodiment of an IPv4 Header configured for use in supporting PSA distribution through the IPv4 data plane;
FIG. 24 depicts an example embodiment of a Topology Discovery Option configured for use in supporting PSA distribution through the IPv4 data plane;
FIG. 25 depicts an example embodiment of a PSA Bundle configured to support advertising of one or more PSAs on a link in an IPv4 data plane;
FIG. 26 depicts an example embodiment of a PSA configured for use in supporting PSA distribution through the IPv4 data plane;
FIG. 27 depicts an example embodiment of a PSA Acknowledgement Bundle configured to support acknowledgment of one or more PSAs in the IPv4 data plane;
FIG. 28 depicts an example embodiment of a PSA Request Bundle configured for use to request PSAs from a neighboring router in the IPv4 data plane;
FIG. 29 depicts an example embodiment of a PSA Request configured for use in supporting PSA distribution through the IPv4 data plane;
FIG. 30 depicts an example embodiment of an IPv6 Header configured for use in supporting PSA distribution through the IPv6 data plane;
FIG. 31 depicts an example embodiment of a Hop-by-Hop Options Header configured for use in supporting PSA distribution through the IPv6 data plane;
FIG. 32 depicts an example embodiment of a TLV-encoded option configured for use in a Hop-by-Hop Options Header configured for use in supporting PSA distribution through the IPv6 data plane;
FIG. 33 depicts an example embodiment of a Topology Discovery Option configured for use in supporting PSA distribution through the IPv6 data plane;
FIG. 34 depicts an example embodiment of a PSA Bundle configured to support advertising of one or more PSAs on a link in an IPv6 data plane;
FIG. 35 depicts an example embodiment of a PSA configured for use in supporting PSA distribution through the IPv6 data plane;
FIG. 36 depicts an example embodiment of a PSA Acknowledgement Bundle configured to support acknowledgment of one or more PSAs in the IPv6 data plane;
FIG. 37 depicts an example embodiment of a PSA Request Bundle configured for use to request PSAs from a neighboring router in the IPv6 data plane;
FIG. 38 depicts an example embodiment of a PSA Request configured for use in supporting PSA distribution through the IPv6 data plane;
FIG. 39 depicts an example embodiment of a Path-ID Option configured for use in supporting encoding of a Path-ID in IPv6 data packets;
FIG. 40 depicts an example embodiment of a Path-ID Option Type configured for use in supporting encoding of a Path-ID in IPv6 data packets;
FIG. 41 depicts an example embodiment of an IPv4 Source Routing Option configured for supporting encoding of a Path in IPv4 data packets;
FIG. 42 depicts an example embodiment of a Route Data field configured for use in an IPv4 Source Route Option configured for supporting encoding of a Path in IPv4 data packets;
FIG. 43 depicts an example embodiment of an IPv6 Routing Header configured for supporting encoding of a Path in IPv6 data packets;
FIG. 44 depicts an example embodiment of a Topology Discovery Header configured to support topology discovery in the Ethernet data plane;
FIG. 45 depicts an example embodiment for insertion of a Topology Discovery Header within an untagged Ethernet packet for supporting topology discovery in the Ethernet data plane;
FIG. 46 depicts an example embodiment for insertion of a Topology Discovery Header within a tagged Ethernet packet for supporting topology discovery in the Ethernet data plane;
FIG. 47 depicts an example embodiment of a PSA Bundle configured to support advertising of one or more PSAs on a link in an Ethernet data plane;
FIG. 48 depicts an example embodiment of a PSA configured for use in supporting PSA distribution through the Ethernet data plane;
FIG. 49 depicts an example embodiment of a PSA Acknowledgement Bundle configured to support acknowledgment of one or more PSAs in the Ethernet data plane;
FIG. 50 depicts an example embodiment of a PSA Request Bundle configured for use to request PSAs from a neighboring router in the Ethernet data plane;
FIG. 51 depicts an example embodiment of a PSA Request configured for use in supporting PSA distribution through the Ethernet data plane;
FIG. 52 depicts an example embodiment of a Path-ID Header configured for supporting encoding of a Path-ID in Ethernet packets;
FIG. 53 depicts an example embodiment for insertion of a Path-ID within an untagged Ethernet packet;
FIG. 54 depicts an example embodiment for insertion of a Path-ID within a tagged Ethernet packet;
FIG. 55 depicts an example embodiment of a Path Header configured for supporting encoding of a Path-ID in Ethernet packets;
FIG. 56 depicts an example embodiment for insertion of a Path within an untagged Ethernet packet;
FIG. 57 depicts an example embodiment for insertion of a Path within a tagged Ethernet packet;
FIG. 58 depicts an example embodiment of an LDP Label Mapping Message configured to support PSA distribution in the MPLS control plane;
FIG. 59 depicts an example embodiment of an LDP FEC TLV configured to support PSA distribution in the MPLS control plane;
FIG. 60 depicts an example embodiment of an LDP Prefix Path FEC Element configured to support PSA distribution in the MPLS control plane;
FIG. 61 depicts an example embodiment of an LDP Generic Label Stack TLV configured to support PSA distribution in the MPLS control plane;
FIG. 62 depicts an example embodiment of an LDP Path Vector TLV configured to support PSA distribution in the MPLS control plane;
FIG. 63 depicts an example embodiment of a method for supporting autonomous path construction in a communication network;
FIG. 64 depicts an example embodiment of a method for supporting autonomous path construction in a communication network;
FIG. 65 depicts an example embodiment of a method for supporting routing of packets over autonomously constructed paths in a communication network;
FIG. 66 depicts an example embodiment of a method for supporting routing of packets over autonomously constructed paths in a communication network; and
FIG. 67 depicts an example embodiment of a computer suitable for use in performing various functions presented herein.

To facilitate understanding, identical reference numerals have been used herein, wherever possible, in order to designate identical or similar elements that are common among the various figures.

### DETAILED DESCRIPTION

Various example embodiments for supporting autonomous path construction and routing in a communication network are presented. Various example embodiments for supporting autonomous path construction and routing in a communication network may be configured to support autonomous path construction based on flooding of path state advertisements within the communication network. Various example embodiments for supporting autonomous path construction and routing in a communication network may be configured to support autonomous path construction based on flooding of path state advertisements including information supporting construction of sets of loop-free unequal cost paths between all pairs of network elements in the communication network. Various example embodiments for supporting autonomous path construction and routing in a communication network may be configured to support routing based on autonomously constructed paths that include sets of loop-free unequal cost paths between pairs of network elements in the communication network. It will be appreciated that these and various other example embodiments for supporting autonomous path construction and routing in a communication network, and advantages or potential advantages of example embodiments for supporting autonomous path construction and routing in a communication network, may be further understood by way of reference to the various figures, which are discussed further below.

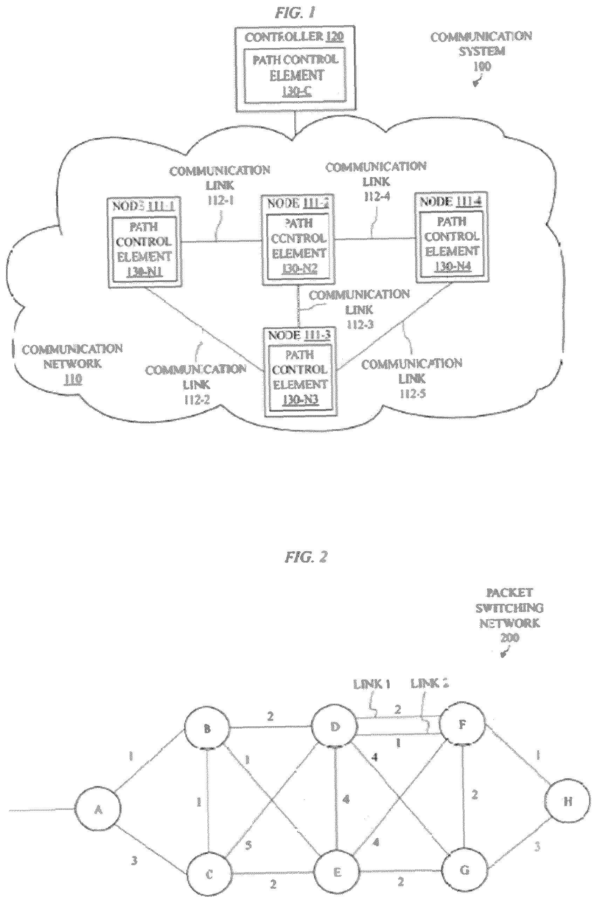

FIG. 1 depicts an example embodiment of a communication network configured to support various example embodiments of autonomous path construction and routing presented herein.

The communication system 100 includes a communication network 110 and a controller 120. The communication network 110 may be configured to support communication using various communication methodologies. The controller 120 may be configured to provide various control functions for the communication network 110. It will be appreciated that the communication system 100, although primarily presented as having a specific implementation, may be implemented in various other ways.

The communication network 110 includes a set of nodes 111-1 to 111-4 (collectively, nodes 111) and a set of communication links 112-1 to 112-5 (collectively, communication links 112). The nodes 111-1 and 111-2 are connected by communication link 112-1, the nodes 111-1 and 111-3 are connected by communication link 112-2, the nodes 111-2 and 111-3 are connected by communication link 112-3, the nodes 111-2 and 111-4 are connected by communication link 112-4, and the nodes 111-3 and 111-4 are connected by communication link 112-5. It will be appreciated that the communication network 110, although primarily presented with respect to a specific topology (i.e., specific numbers and arrangements of nodes 111 and communication links 112), may be implemented in various other topologies (e.g., using other numbers and/or other arrangements of nodes 111 and/or communication links 112).

The communication network 110 may be configured to support communication using various communication capabilities (e.g., various communication methodologies, various communication protocols, or the like, as well as various combinations thereof). For example, the communication network 110 may be a packet switching network configured to support communication of packets based on various packet switching technologies. For example, the communication network may be configured to support communications using Internet Protocol (IP), Multiprotocol Label Switching (MPLS), Ethernet, or the like, as well as various combinations thereof. It will be appreciated that the communication network 110 may be configured to support communications based on various other communication capabilities (e.g., various other communications protocols, various other combinations of communication protocols, or the like, as well as various combinations thereof).

The controller 120 may be configured to provide various control functions for the communication network 110, including for the nodes 111 and the communication links 112 which connect the nodes 111. For example, the controller 120 may be configured to support network management functions, network provisioning functions, service provisioning functions, network monitoring functions, network fault detection functions, network fault mitigation functions, or the like, as well as various combinations thereof. It will be appreciated that the set of control functions provided by the controller 120 for the communication network 110 may vary depending on various aspects of the communication network 110 (e.g. the type of packet switching technology used, the set of communication protocols used, or the like, as well as various combinations thereof).

The communication system 100 is configured to support autonomous path construction and routing within the communication network 110. The communication network 110 may be configured to support autonomous path construction and routing. The nodes 111-1 - 111-4 include path control elements 130-N1 - 130-N4 (collectively, path control elements 130-N), respectively, configured to support various example embodiments of autonomous path construction and routing as presented herein. The controller 120 includes a path control element 130-C configured to support various example embodiments of autonomous path construction and routing as presented herein. It will be appreciated that the communication system 100 may be configured in various other ways to support various example embodiments of autonomous path construction and routing as presented herein.

Various example embodiments presented herein are configured to support simplified and efficient routing of packets in packet switched networks. Various example embodiments presented herein are configured to support routing of packets in packet switched networks without requiring a node to compute the paths to a destination, as all loop-free paths to a destination are automatically made available to the node by a topology distribution mechanism, thereby supporting zero convergence time on topology changes. Various example embodiments presented herein are configured to support routing of packets in packet switched networks using optimal utilization of network resources and maximization of throughput by load balancing packets to a specific destination across all possible paths to the destination in the network. Various example embodiments presented herein are configured to support routing of packets in packet switched networks without necessitating a routing protocol (control plane) to distribute topology information since, instead, an in-band technique can be used for distribution of topology information (where "in-band" means that the topology information can be distributed using the data plane header alone, i.e., the header that is used by a node for making forwarding decisions on the packet). It will be appreciated that these, as well as various other example embodiments, may be further understood by first considering various aspects of packet switched networks.

Traditionally, a packet switched network supports one of the following paradigms for routing packets: shortest path routing or explicit path routing. These paradigms of packet routing may be further understood by considering the example packet switched networks of FIG. 2, FIG. 3, FIG. 4, and FIG. 5.

FIG. 2 depicts an example embodiment of a packet switching network for illustrating various packet routing paradigms.

As depicted in FIG. 2, the packet switching network 200 includes a set of eight nodes denoted as node A through node H. The nodes are interconnected by communication links having costs associated therewith.

The identifier/address of node X is denoted as X. For example, in an IP network, node H is uniquely identified in the network with its loopback IP address, which is denoted as H here. A link from node X to node Y is denoted as X-Y wherein nodes are in alphabetical order. For example, the link between A and C is A-C and not C-A. If node X has multiple links to node Y, then the first link is denoted as X1-Y1, the second link is denoted as X2-Y2, and so on. For example, node D and node F have two links between them. So, link-1 from node D to node F is denoted as D1-F1 and link-2 from node D to node F is denoted as D2-F2. In link X-Y, the identifier/address assigned to the link by node Y is denoted as X->Y and identifier/address assigned to the link by node X is denoted as Y->X. For example, in an IP network, B->D is the IP address assigned by node D on its end of the B-D link and D->B is the IP address assigned by node B on its end of B-D link.

In packet switched networks, as indicated above, one routing paradigm for routing packets is shortest path routing. In shortest path routing, paths to destinations are computed by a Shortest Path Tree (SPT) algorithm, which is also known as Dijkstra's Algorithm. A packet to a destination follows the shortest path to the destination along the network. It is possible that there could be multiple equal cost shortest paths to a destination. In that case, the packets to the destination are load balanced across all equal cost multiple paths (ECMP). The packets can be distributed across all ECMP paths in two ways: (a) flow-based load balancing or (b) per-packet load balancing.

In flow-based load balancing, the load balancing is performed by hashing certain fields in a packet header to choose the next-hop link from the set of ECMP links. The combination of such fields in a packet header constitutes a "flow" from an ECMP load balancing perspective. If a majority of the packets hash to the same next-hop then it results in unfair load balancing in ECMP.

In per-packet load balancing, packets are distributed over the set of ECMP links in a round-robin fashion, thereby guaranteeing fair load balancing. However, packets of a flow get distributed over all ECMP links and such packets may get re-ordered as the packets reach the intended destination.

It will be appreciated that there could be several alternate paths to a destination with higher costs, which are not used to forward packets to the destination. It will be further appreciated that, since all packets to a destination are forwarded along the shortest path, it leads to congestion along the shortest path while leaving all other possible alternate paths unutilized for packets to the destination.

In IP networks, for example, Interior Gateway Protocols (IGPs) running in each of the routers flood the status of adjacent links and local networks across the network.

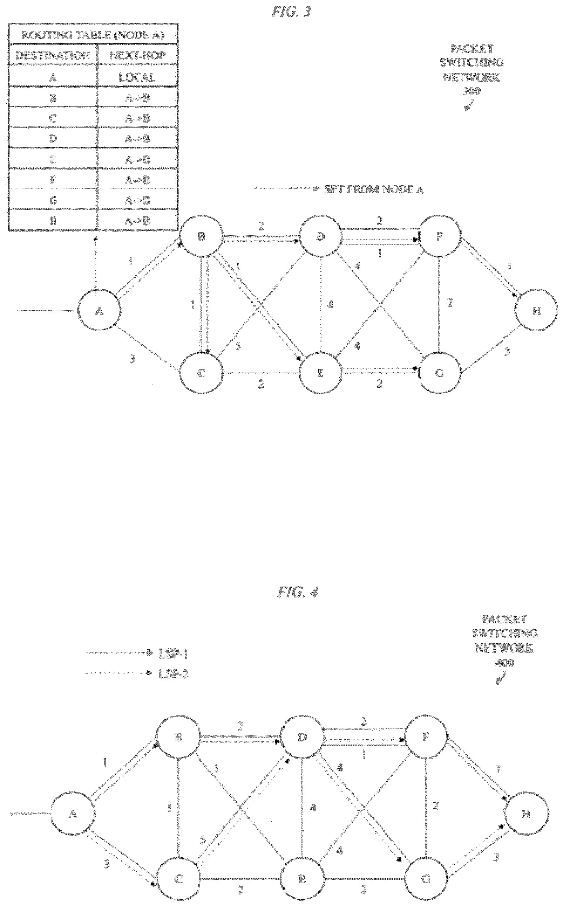

FIG. 3 depicts an example embodiment of a packet switching network for illustrating a shortest path routing paradigm.

As depicted in FIG. 3, the packet switching network 300 includes a set of eight nodes denoted as node A through node H. The nodes are interconnected by communication links having costs associated therewith.

As depicted in FIG. 3, the packet switching network 300 has been configured to support an SPT from node A to each of the other nodes of the network. The routing table at node A for the SPT also is depicted in FIG. 3. In the case of an IP network, the destination entries in the routing table may be IP prefixes (e.g., IP addresses of the nodes).

In FIG. 3, as an example, assume that node A sends a packet to node H. Node A looks up its routing table for an entry for node H and finds next-hop A->B. So, node A sends the packet on A->B link. On receiving the packet, node B looks up its routing table and forwards the packet on the B->D link (as per the SPT computed by node B). On receiving the packet, node D looks up its routing table and forwards the packet on the D1->F1 link (as per the SPT computed by node D). On receiving the packet, node F looks up its routing table and forwards the packet on the F->H link (as per the SPT computed by node F). On receiving the packet, node H looks up its routing table and finds the next-hop as "Local", meaning itself, so the packet is delivered to its destination.

In MPLS networks, the shortest path label switched paths (LSPs) to destinations are set-up by the Label Distribution Protocol (LDP) or Segment Routing (SR), which are based on the shortest path IP routes computed by the IGPs.

In a Shortest Path Bridging (SPB) based Ethernet network, the shortest paths to various destination bridges are computed by the Intermediate-System-to-Intermediate-System (IS-IS). Ethernet packets from a source bridge to a destination bridge are sent along the shortest path to the destination bridge.

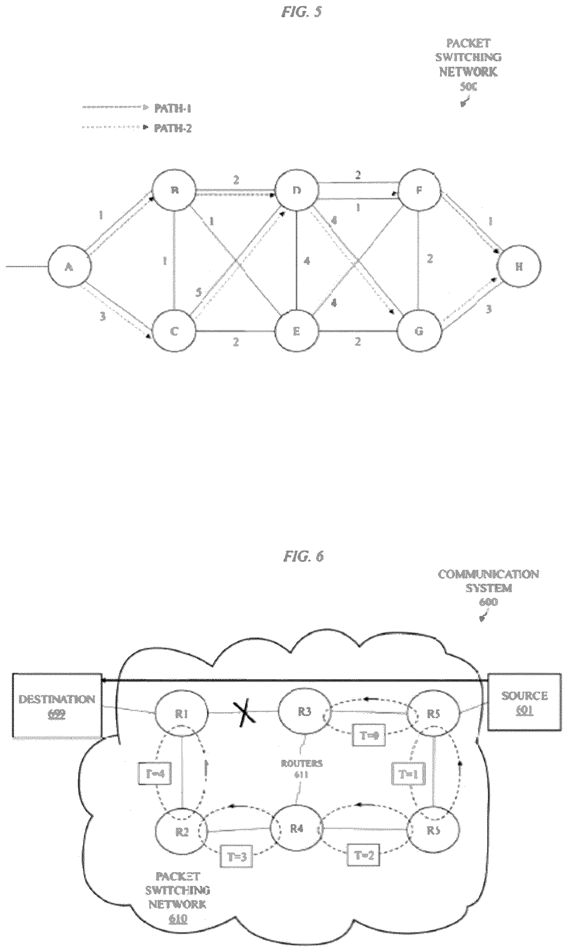

In packet switched networks, as indicated above, one routing paradigm for routing packets is explicit path routing. In this paradigm, a node classifies the packets ingressing into the network into packet flows, where each packet flow is based on certain fields in packets or other characteristics of the packets. For the packet flow, an explicit path including a set of nodes and/or links is setup from the source node to a destination node. Then packets belonging to the flow are sent along the explicit path. An explicit path computed for the flow may be based on Quality of Service (QoS) requirements of the flow, which are called "traffic engineered" (TE) paths. Explicit paths may be stateful or stateless. Unlike shortest path routing, there could be any number of explicit paths between a source node and a destination node. Explicit path routing may be further understood by way of reference to FIG. 4 (stateful explicit path routing) and FIG. 5 (stateless explicit path routing), which are discussed further below.

In explicit path routing, as indicated above, stateful explicit path routing may be supported. In this approach, a signaling protocol (control plane) is used to set up states for the flow in the nodes along the explicit path. For example, an MPLS-based explicit path, which is called a Traffic Engineered Labeled Switched Path (TE-LSP) could be set-up by signaling protocols such as Resource Reservation Protocol - Traffic Engineering (RSVP-TE), Constraint-based Routing Label Distribution Protocol (CR-LDP), or the like. Stateful explicit path routing may be further understood by considering the packet switching network of FIG. 4.

FIG. 4 depicts an example embodiment of a packet switching network for illustrating a stateful explicit path routing paradigm.

As depicted in FIG. 4, the packet switching network 400 includes a set of eight nodes denoted as node A through node H. The nodes are interconnected by communication links having costs associated therewith.

As depicted in FIG. 4, the packet switching network 400 has been configured to support two MPLS LSPs from node A to node H, which are denoted as LSP-1 and LSP-2. The LSP-1 follows the explicit path of links {A->B, B->D, D->F, F->H} and the LSP-2 follows the explicit path {A->C, C->D, D->G, G->H}. Each node along a path maintains state for the LSP both in the control plane (e.g., RSVP-TE, CR-LDP, or the like) and in the MPLS dataplane.

In FIG. 4, as an example, assume that each node allocates a label for the LSP from its local label space and distributes the label to its upstream node. Here, assume that the label assigned by a node X for LSP-1 is LX-1. For example, node D allocates label LD-1 and distributes it to upstream B. Then, in the MPLS dataplane, node D cross-connects incoming label LD-1 to outgoing label LF-1 (distributed to node D by node F for LSP-1) on D1->F1 link. Node A sends a packet on LSP-1. So, node A pushes label LB-1 onto the packet and sends the MPLS packet on the A->B link. Node B swaps the label LB-1 with the label LD-1 and sends the MPLS packet on the B->D link. Node D swaps the label LD-1 with the label LF-1 and sends the MPLS packet on the D1->F1 link. Node F swaps the label LF-1 with the label LH-1 and sends the MPLS packet on the F->H link. Node H pops the label as the label identifies itself as the node egress for LSP-1.

In explicit path routing, as indicated above, stateless explicit path routing may be supported. A stateless explicit path is called a source routed path. In this model, the nodes along the explicit path do not maintain states of the explicit path. Rather, the source node encodes the set of nodes/links of the explicit path into the packet itself. Each node along the path looks up the topmost entry in the set, pops the entry, and forwards the packet to the next-hop link represented by the entry. In that way, the packet traverses along the explicit path.

FIG. 5 depicts an example embodiment of a packet switching network for illustrating a stateless explicit path routing paradigm.

As depicted in FIG. 5, the packet switching network 500 includes a set of eight nodes denoted as node A through node H. The nodes are interconnected by communication links having costs associated therewith.

As depicted in FIG. 5, the packet switching network 500 has been configured to support two stateless explicit paths from node A to node H, which are denoted as Path-1 and Path-2.

In FIG. 5, as an example, assume that node A wants to send a packet along Path-1. To send a packet along Path-1, node A encodes the source route {B->D, D1->F1, F->H} into the packet. Note that the first link A->B is not encoded since it is the immediate next-hop of A. Node A sends the packet on the A->B link. On receiving the packet, node B pops up the topmost entry B->D in the source route and identifies the entry as the B->D link. So, node B forwards the packet with source route {D1->F1, F->H} on the B->D link. On receiving the packet, node D pops up the topmost entry D1->F1 in the source route and identifies as the entry as the D1->F1 link. So, node D forwards the packet with source route {F->H} on the D1->F1 link. On receiving the packet, node F pops the topmost entry F->H in the source route and identifies as the entry as the F->H link. So, node F forwards the packet on F->H link such that it is delivered to node H.

In MPLS, Segment Routing (SR) using the MPLS dataplane (which also may be denoted as SR-MPLS) is an architecture for sending MPLS packets along a stateless explicit path. Each router or link is assigned a label. Then, the source router (e.g., A) pushes an MPLS label stack onto the packet, where the label stack is the ordered list of labels assigned to the links/nodes in the explicit path.

In Internet Protocol (IP), the IP version 4 (IPv4) Specification and the IP version 6 (IPv6) Specification have source routing support. A list of IP addresses is encoded into the packet, where the list is an ordered list of IP addresses assigned to links/nodes in the explicit path.

Various example embodiments presented herein may be configured to overcome various problems or potential problems associated with the various shortest path routing paradigms discussed above.

Various example embodiments presented herein, as discussed further below, may be configured to overcome various drawbacks or potential drawbacks associated with use of shortest path routing and ECMP routing in packet switching networks. In shortest path routing, all packets to a destination are forwarded along the common shortest path to the destination, while alternate paths to the destination remain unutilized. So, the shortest path may get overloaded, leading to congestion and packet drops. In addition to that, shortest paths to multiple destinations may share common links, thereby exacerbating the congestion in shared links. Equal Cost Multi-Path (ECMP) mitigates the problem to a certain extent by load-balancing packets to a destination along multiple equal cost shortest paths, but ECMP also may suffer from the following limitations: (1) ECMP is topology dependent and is not always possible in all network topologies, and (2) even if ECMP is possible, still non-ECMP alternate paths to a destination remain unutilized. It will be appreciated that various example embodiments presented herein, as discussed further below, may be configured to overcome these and/or various other drawbacks or potential drawbacks associated with use of shortest path routing and ECMP routing in packet switching networks.

Various example embodiments presented herein, as discussed further below, may be configured to overcome various drawbacks or potential drawbacks associated with use of supporting topology changes and use of loop free alternate (LFA) paths and fast rerouting (FRR) in packet switching networks. When there is a topology change (e.g., due to a failure), the nodes in the network recompute the shortest paths to the destinations. Until the recomputation is complete, packets forwarded along a failed path continue to drop. The problem is mitigated by computing LFA paths by nodes for each path to FRR packets when the path fails. However, availability of LFA path is topology dependent and is not always possible in all topologies. It will be appreciated that various example embodiments presented herein, as discussed further below, may be configured to overcome these and/or various other drawbacks or potential drawbacks associated with use of supporting topology changes and use of LFA paths / FRR in packet switching networks.

Various example embodiments presented herein, as discussed further below, may be configured to support loop-free routing of packets in packet switching networks. As discussed further below, loops can be caused by various conditions and can be in the form of micro-loops or macro-loops. Various example embodiments presented herein which may be configured to support loop-free routing of packets in packet switching networks may be further understood by first considering various aspects of loops in packet switching networks.

Loops can occur in a network for several reasons. For example, a transient loop can occur during convergence across the network due to a topology change, during fast reroute (FRR) operations, or the like. For example, a permanent loop can occur due to faulty behavior of a node that can redirect the data packets along a wrong path in such a way that the packets re-enter the already traversed path. It will be appreciated that loops may be formed in response to various other conditions which may arise within packet switching networks.

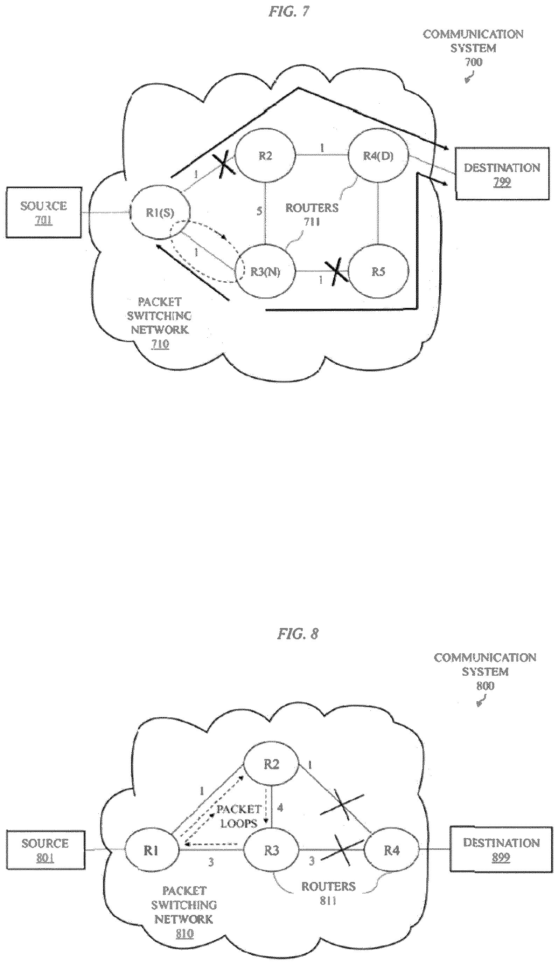

In general, loops in a packet switching network can be classified into two categories: (1) micro-loops in which a packet loops back and forth between two directly connected nodes and (2) macro-loops in which a packet loops between two indirectly connected nodes. Micro-loops and macro-loops may be further understood by considering the examples of FIGs. 6-8, which depict examples of micro-loops which formed as a result of network convergence (e.g., as illustrated in FIG. 6), a micro-loop formed as a result of a FRR operation (e.g., as illustrated in FIG. 7), and a macro-loop formed as a result of a FRR operation (e.g., as illustrated in FIG. 8).

FIG. 6 depicts an example of micro-loops in a network during network convergence in the network. The micro-loops of FIG. 6 may be further understood by first considering various aspects of network operation which may result in the formation of the micro-loops.

In general, paths computed by link state protocols (e.g. Open Shortest Path First (OSPF), Intermediate-System-to-Intermediate-System (IS-IS), OSPF version 3 (OSPFv3) or the like) are susceptible to transient loops for a brief period due to independent decisions made by the protocol in each node in the network. Link state protocols flood the status of locally connected networks and links of every node across the network. From the link state updates, each node in the network builds an identical copy of the topology of the network. Then, based on the topology, each node independently computes paths to every other node and their advertised networks by using Dijkstra's Shortest Path First (SPF) algorithm. After the SPF computation, a node updates its forwarding table used to make forwarding decisions for the packets.

In FIG. 6, a communication system 600 includes a packet switching network 610 configured to support communication from a source 601 to a destination 699. The packet switching network 610 includes six routers 611 which, for ease of reference, are denoted using the notation Rx (illustratively, routers R1-R6).

In FIG. 6, packets from the source 601 to the destination 699 are traversing the path R5->R3->R1. When the link between R3-R1 fails, then R3 will send a link state update packet (R1 will do so too), telling each of the routers that the R3-R1 link has failed. Then, R3 will compute the next best path which is towards R5 and update its forwarding table accordingly. The new best path will be R5->R6->R4->R2->R1, but it is likely that R5 will update its forwarding table after R3 updates its forwarding table. For example, assume that at interval T=0, R5 will send the packets to R3 which will result in a micro-loop R5->R3->R5->R3 until R5 updates its forwarding table to point toward R6. However, it is possible that R6 updates its forwarding table after R5, which means that, at interval T=1, a forwarding loop will appear between R5->R6->R5->R6. The forwarding loop will work its way toward every hop until R1. The durations of micro-loops are proportional to the time taken to propagate the topology change through the network and time taken by each of the routers to compute SPF and update their forwarding tables. It will be appreciated that one potential option to eliminate micro-loops such as the micro-loops presented in FIG. 6 is to speed up the convergence process, but this is unlikely due to the fundamental limits of the speed of light and memory update latency. Accordingly, in at least some embodiments, various example embodiments of loop detection may be employed for detecting micro-loops such as the micro-loops presented in FIG. 6.

FIG. 7 depicts an example of a micro-loop in a network during a fast-reroute during a fast reroute operation in the network. The micro-loop of FIG. 7 may be further understood by first considering various aspects of network operation which may result in the formation of the micro-loop.

As indicated above, FRR provides another example scenario of transient loops. FRR is based upon the Loop Free Alternate (LFA) paths computed by link state protocols. Normally, link state protocols only calculate the shortest path for a destination through the SPF algorithm. So, the idea of LFA is that an alternate path to the destination can be computed during SPF and be used as a backup path as long as the backup path does not cause a forwarding loop, i.e., the shortest path to the destination from a router along the backup path but not including any other node along the backup path.

In order to avoid forwarding loops, a node needs to run some additional calculations to verify that a candidate backup path does not create a forwarding loop. A path that does not cause a forwarding loop is called an LFA path. The node calculates the LFA paths in advance and installs them against the respective primary paths (shortest paths) of a forwarding entry in the forwarding table, so that the LFA paths are available at the nodes when a FRR operation needs to be performed.

RFC 5286, Basic Specification for IP Fast Reroute: Loop-Free Alternates, RFC 5286, offers a method for calculating LFAs in IP networks based on various route inequalities. RFC 5286 is not limited to IP networks but rather, the general idea is applicable to any packet switched networks such as MPLS, Ethernet, or the like.

In FIG. 7, a communication system 700 includes a packet switching network 710 configured to support communication from a source 701 to a destination 799. The packet switching network 710 includes five routers 711 which, for ease of reference, are denoted using the notation Rx (illustratively, routers R1-R5). The source 701 is connected to router R1 and the destination 799 is connected to router R4, such that R1 is the calculating node which is the ingress node for packets into the packet switching network 710 and R4 is the destination under consideration. The metric/costs of the links are shown alongside the links.

In FIG. 7, R1 computes the shortest path to R4 as R1->R2->R4 (of cost 2), where R2 is the primary next-hop. The alternate path R1->R3->R5->R4 (of cost 3) is loop-free, because the shortest path from R3 to R4, i.e., R3->R5->R4, is not through local node R1. Traffic sent by R1 to backup next-hop R3 is not sent back to R1. So, R1 can use R3 as a backup next hop for the path to R4. As a result, R1 programs the forwarding entry to R4 into its forwarding table with R2 as the primary next-hop and R3 as the backup next-hop.

In FIG. 7, when link R1->R2 fails, R1 fast-reroutes the packets via the backup next-hop R3. R3 sends those packets along the primary path R3->R5->R4. However, note that R3 may also compute an LFA path to R4 to protect against failure of its primary next-hop R5. As evident from the topology, the alternate path R3->R1->R2->R4 (cost 3) is loop-free, because the shortest path of R1, i.e., R1->R2->R4 (cost 2), is not via R3. As a result, R3 programs the forwarding entry to R4 into forwarding table with R5 as the primary next-hop and R1 as the backup next-hop.

In FIG. 7, now assume that there is a situation when both the links R1->R2 and R3->R5 fail simultaneously. Then, R1 fast-reroutes the packets to R4 via backup next-hop R3. When the packets reach R3, R3 finds that primary next hop to R4 failed. So, R3 fast-reroutes the packets via its backup next-hop R1. This causes a micro-loop R1->R3->R1->R3 as shown in FIG. 7, until the network re-converges and the route is updated into forwarding table across the network, i.e., the primary path becomes R1->R3->R2->R4.

FIG. 8 depicts an example of a macro-loop in a network during a fast-reroute operation in the network. The macro-loop of FIG. 8 may be further understood by first considering various aspects of network operation which may result in the formation of the macro-loop.

In FIG. 8, a communication system 800 includes a packet switching network 810 configured to support communication from a source 801 to a destination 899. The packet switching network 810 includes four routers 811 which, for ease of reference, are denoted using the notation Rx (illustratively, routers R1-R4). The source 801 is connected to router R1 and the destination 899 is connected to router R4, such that R1 is the calculating node which is the ingress node for packets into the packet switching network 810 and R4 is the egress node of packets under consideration. The metric/costs of the links are shown alongside the links.

In FIG. 8, R1 computed the shortest path as R1->R2->R4 (cost 2) and computed the LFA path as R1->R3->R4(cost 5). R2 computed the shortest path as R2->R4 (cost 1) and computed the LFA path as R2->R3->R4 (cost 7). Although R2 has a better alternate path R2->R1->R3->R4 of cost 6, that path is not LFA because R2 is included in primary path of R1 to R4. R3 computed the shortest path as R3->R4 (cost 3) and computed the LFA path as R3->R1->R2->R4 (cost 4).

In FIG. 8, assume that link R2->R4 and link R3->R4 failed simultaneously. When packets from R1 arrive at R2 destined to R4, R2 finds that link R2->R4 failed, so R2 fast-reroutes the packets via the backup next-hop R3. When the packets arrive at R3, R3 finds that link R3->R4 failed, so it fast-reroutes the packets via the backup next-hop R1. So, the packets are looping along R1->R2->R3->R1->R2->R3, which is a macro-loop as it traverses more than two nodes.

It is noted that the macro-loop of FIG. 8 also can happen in non-failure scenarios. For example, assume that both R2 and R3 are misbehaving nodes such that both computed shortest paths incorrectly or updated forwarding tables incorrectly. When packets from R1 arrive at R2 destined to R4, instead of forwarding on link R2->R4, R2 wrongly sent the packets to R3. When the packets arrive at R3, instead of forwarding on link R3->R4, R3 wrongly sent the packets via next-hop R1. So, the packets are looping along R1->R2->R3->R1->R2->R3. However, unlike the transient loops during convergence, the loop here could be a permanent one.

It will be appreciated that various example embodiments presented herein, as discussed further below, may be configured to support loop-free routing of packets in packet switching networks.

Various example embodiments presented herein may be configured to support a solution in which packets to a destination can be sprayed across all possible paths in the network to the destination, while ensuring optimal utilization of all network resources and guaranteeing that the packet forwarding paths are loop free (even under conditions such as network convergence), thereby reducing or eliminating congestion and increasing or maximizing packet throughput. It will be appreciated that, since all possible paths to a destination are supported, including the shortest path, this paradigm is backwards compatible to shortest path routing.

Various example embodiments presented herein introduce a paradigm for setting up loop-free paths to destinations in a packet switched network. This paradigm solves various problems in shortest path routing networks, such as underutilized links and paths, loops, and so forth. This paradigm is simple, but is applicable to any packet switching network (PSN) technology and can be implemented with relatively minor extensions to existing PSN technologies.

Various example embodiments presented herein are configured to provide a form of unequal cost multi-path (UCMP), where packets to a destination can be load balanced across paths of unequal costs. All possible paths to a destination, which form the set of UCMP paths to the destination, are computed and then used for routing packets through the network.

Various example embodiments presented herein as configured to perform autonomous path construction as follows.

In embodiments of autonomous path construction, a Path State (PS) element is a tuple including an identifier of a destination (denoted as "Dest"), an ordered list of network elements (e.g.. nodes and/or links and denoted as "Path") to reach the destination node (Nd) from a source node (Ns), and a cost which is the cumulative cost of all of the network elements in the path. This "Path State" tuple may be denoted as {Dest, Path, Cost}. The Dest element may be a local address in the destination node Nd or a set of external addresses learned by the destination node Nd that are considered as local for the destination node Nd in the context of the destination node Nd.

In embodiments of autonomous path construction, the Path State is advertised by the originating node, which is ultimately the destination node Nd of the paths that are discovered, on each of its links to the network. The advertisement of a Path State is referred to as a "Path State Advertisement" (PSA), where PSA is represented as {<Path-ID>, Dest, Path, Cost}. Here, "Path-ID" is an optional parameter (hence enclosed in "<>") and it is a unique identifier assigned by an advertising node for the PSA for each advertised link. The originating node Nd creates a PSA with empty Path and with the Cost set to zero. Thus, when an originating node advertises the PSA on a link, the Path is empty and Cost is zero. Here, assume that the Dest for Nd is denoted by Nd.

In embodiments of autonomous path construction, when an upstream node (Nu) receives a PSA from a locally connected link Lu, it performs the following actions.

First, the upstream node Nu checks if the Path in the PSA includes a local link (e.g., a local identifier of one of the links of node Nu). If the Path includes a local link, it means that the PSA was seen by the node Nu before and now it made a loop via the incoming link Lu. A loop may happen since PSAs are flooded by each node. If a loop is detected then the PSA is dropped by the node Nu, otherwise processing of the PSA continues.

Second, the upstream node Nu updates the Cost in the PSA by adding the cost of the incoming link Lu to the Cost in the PSA (denoted as New Cost of PSA = Received Cost of PSA + Cost of Lu).

Third, the upstream node Nu updates the Path in the PSA. The upstream node Nu may update the Path in the PSA by prepending the remote identifier of the incoming link Lu (i.e., the local identifier of the incoming link Lu at the node Nd). Alternatively, the upstream node Nu may update the Path in the PSA by making the node Nd include the identifier of Lu in the Path and, in that case this step does not need to be performed by the upstream node Nu that receives the PSA. It is noted that, unless indicated otherwise, for simplicity and without the loss of generality, embodiments are described herein using the default behavior in which the link Lu is added to the PSA by the upstream node Nu that receives the PSA.

Fourth, the upstream node Nu installs a Path State entry for the node Nd in its forwarding table. The Path State entry for node Nd is installed in the forwarding table of upstream node Nu as {Path, Cost}.

Fifth, the upstream node Nu advertises the PSA for the installed Path State on each link, except for the incoming link Lu. The PSA for the installed Path State includes the updated path and cost information.

Sixth, the upstream node Nu optionally may assign a Path-ID for each advertisement of the PSA, which is included in the PSA advertised on the link. Then each advertised Path-ID is mapped to the Path-ID of the PSA received (if any) on link Lu. A Path-ID Mapping Table may maintain mappings of all advertised Path-IDs to a downstream Path-ID.

In embodiments of autonomous path construction, using the method above, PSAs for the node Nd are flooded across the network. The flooding process guarantees that a Path State to Nd originated from a node Nd traverses to a node Ns via all possible loop-free paths from node Ns to node Nd. For node Ns, each PSA for node Nd represents a unique loop-free path from the node Ns to the node Nd, where the loop-free path is the ordered list of network elements in Path (of the respective PSA). So, a node installs a Path State entry (i.e., {Path, Cost}) from each PSA as a forwarding entry of node Nd in its forwarding table.

It is noted that the set of loop-free paths from node Ns to node Nd represents the maximum possible set of UCMP paths to node Nd. The UCMP paths from node Ns to node Nd are automatically and autonomously set up by the flooding of PSAs without requiring any computational overhead in the node Ns - this is a significant paradigm shift from existing packet routing technologies.

When a network element fails, the failure notification is flooded across the network. Each node that receives the failure notification, deletes all the paths that traverse the failure. The latency of failure notification increases with the size of the network. However, the latency of failure notification does not impact the convergence of traffic since the node encountering the failure already fast-rerouted the packets via alternate paths. So, use of autonomous path construction offers zero convergence time of the network topology and traffic on one or multiple failures, which is a significant improvement over shortest path routing.

When a new link is added to a node or a failed link becomes operational, then the node advertises all known PSAs on the link. This activates new paths to various destinations, where the paths now include the link.

It is noted that the PSAs may be distributed across the network in various ways. In at least some example embodiments, the PSAs may be distributed across the network using the control plane, e.g., with minor extensions to control plane protocols (e.g., OSPF, OSPFv4, IS-IS, BGP-LS, LDP, or the like, as well as various combinations thereof). In at least some example embodiments, the PSAs may be distributed across the network without any control plane protocol by using the data plane, e.g., in-band with minor extensions to the data plane header used for forwarding data packets (e.g., where the extensions may be configured to enable nodes to distinguish PSAs from real data packets). It will be appreciated that PSAs may be distributed across the network in various other ways.

Various example embodiments presented herein are configured to perform packet forwarding, based on paths constructed based on autonomous path construction, as follows. For packet forwarding from the node Ns to the node Nd, the node Ns can load balance traffic to a the node Nd among all possible UCMP paths constructed by the node Ns based on autonomous path construction as discussed above. In at least some example embodiments, since among all of the possible UCMP paths from node Ns to node Nd it is possible that a subset of paths diverge in a only a small number of links, improved fairness of load balancing may be achieved by having node Ns select a subset of the possible UCMP paths to the node Nd for actual forwarding. The subset of UCMP paths from node Ns to node Nd may be selected from the full set of UCMP paths from node Ns to node Nd based on one or more criteria (e.g., maximal disjointness, minimal sharing, or the like, as well as various combinations thereof).

The node Ns can send a packet to the node Nd along a chosen path using one of two supported forwarding methods.

In a first forwarding method, the ordered list of network elements is encoded in the path as a source route. For example, if the ordered list of elements is {hop-1, hop-2, ..., hop-n} then the list is encoded as source route in the packet. Then hop-1 is popped from the source route and the packet with source route = {hop-2, ..., hop-n} is forwarded to the hop-1 (first network element) in the path. Each subsequent node pops the topmost entry in the source route and forwards the packet to the network element of the topmost entry. This pop-and-forward continues in the nodes along the path until the source route becomes empty. i.e., the packet reached Nd.

In a second forwarding method, if Path-ID was included in the PSA for the path, then the Path-ID is encoded into the packet and the packet is forwarded to the first network element in the path, i.e., the network element that advertised the Path-ID to the node Ns. Subsequent nodes look up the Path-ID into the Path-ID Mapping Table and swap the Path-ID with the Path-ID advertised by the next element. The packet is forwarded along the path by swapping of Path-IDs at each node. The key benefit of this method is O(1) overhead on the packet encapsulation as oppose to O(L) overhead in the first forwarding method discussed above, where L is the number of network elements in the path. If a transit node has not received Path-ID in the PSA from the next-hop network element then the node replaces the Path-ID with the source route of the path to D. From that transit node onwards, the packet is forwarded along the path based on the source route using the first forwarding method discussed above.

It will be appreciated that both of the forwarding methods discussed above are loop-free and, thus, solve various problems associated with loops in packet switched networks.

It will be appreciated that FRR is an automatic by-product of the path computation and packet forwarding embodiments discussed above and further hereinbelow, since each node in the network has all possible paths to the destination D. When the source node Ns or a transit node Nu encounters a failure to the immediate next-hop along the chosen path, then the node can FRR the packet along an alternate path from its UCMP set to Nd that does not traverses the failed next-hop. The node removes the existing source route or Path-ID from the packet and pushes the source route or the next-hop Path-ID of the chosen alternate path. This ensures that packets are not dropped when shortest paths to destinations need to be recomputed (e.g., when there are topology changes). FRR works seamlessly irrespective of the number of failures in the network. This also prevents micro and macro loops which might otherwise be possible during FRR operations. In a packet switching technology, if it is not possible for a transit node to determine the destination of a source routed packet, then the destination may be explicitly encoded by the source node into the source route. Herein, this field is generalized as a "global-protected-hop" in the source route, means a node to which the packet needs to be forwarded if a failure occurs in any transit node or link along the path. Then to perform FRR, a transit node may lookup the operational paths to the global-protected-hop. Herein, the source route is denoted as {hop-1, hop-2,...., hop-n, <global-protected-hop>}, wherein "<>" indicates that global-protected-hop is optional and is applicable based on packet switching technology.

It is noted that the path in the UCMP set to the destination node Nd with the lowest cost is the Djikstra's shortest path to the destination node Nd, which is an automatic by-product of example embodiments presented herein without requiring any SPF computation in the source node Ns. So, various example embodiments presented herein provide a replacement of existing shortest path routed networks with the following benefits: (1) no computational overhead in the source node Ns for the shortest path and (2) no computational overhead for LFA paths since LFA paths at each node are automatic by-products of example embodiments presented herein. In case of failure along the shortest path, a node can FRR packets to the destination node Nd via an alternate path in the UCMP set that avoids the failure.

It will be appreciated that various example embodiments presented herein may be applied in various PSN technologies (e.g., IP, MPLS, Ethernet, or the like).

It will be appreciated that such example embodiments may be further understood by considering an example within the context of the network of FIG. 2.

As an example, consider the paths to the destination node H. The notations for links, link identifiers/addresses, and node identifiers/addresses uses herein are same as illustrated with the first example in FIG. 2.

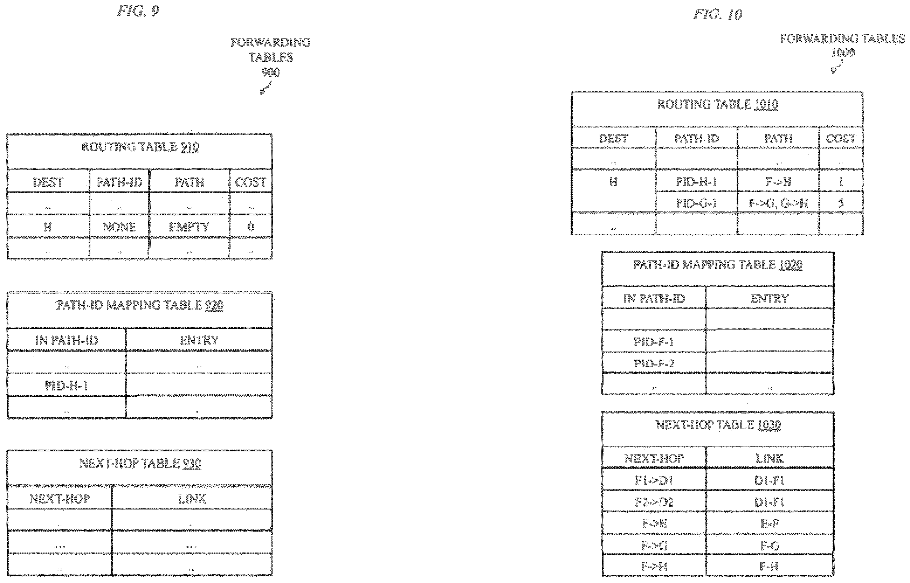

In this example, each node maintains three forwarding tables, including a Routing Table, a Path-ID Mapping Table, and a Next Hop table, which are discussed further below. It is noted that examples of such forwarding tables maintained by Node H are presented in FIG. 9.

As indicated above, each node maintains a Routing Table. The Routing Table is indexed by destination addresses, wherein each destination address maps to the UCMP set for the destination address. Each entry in the UCMP set is a Path State represented by the tuple of {Path-ID, Path, Cost} as derived from the corresponding PSA received from a link to a neighbor (first network element in Path).

As indicated above, each node maintains a Path-ID Mapping Table. The Path-ID Mapping Table is indexed by a Path-ID for a PSA advertised by this node. A Path-ID maps to the corresponding path in the Routing Table.

As indicated above, each node maintains a Next-Hop Table. The Next-Hop Table is indexed by next-hop identifiers of neighboring nodes. Each entry maps to the corresponding link to the next-hop. This table can be automatically learned from the PSAs received on a link. The first hop in the received PSA is a potential next-hop for packets on that link.

In this example, node H originates the Path State = {H, Path = empty} for address H. Node H assigns the Path-ID = PID-H-1 to uniquely identify the Path State. Node H advertises the following two PSAs: (1) PSA-1 on link F-H = {Path-ID = PID-H-1, Dest = H, Path = empty, Cost = 0} and (2) PSA-2 on link G-H = {Path-ID = PID-H-1, Dest = H, Path = empty, Cost = 0}.

As illustrated in FIG. 9, the node H includes a set of forwarding tables 900 that includes a Routing Table 910, a Path-ID Mapping Table 920, and a Next-Hop Table 930.

In node H, entry H in the Routing Table 910 is programmed with Path being empty, which indicates that H is the local address of node H. The Path-ID Mapping Table 920 is programmed with the advertised Path-ID PID-H-1 as the incoming Path-ID which maps to the empty Path for H.

In this example, when node F receives PSA-1 on link F-H, node F checks for a loop, i.e if the Path includes the identifier of a local link. Node F, not finding any loop, accepts PSA-1. Node F adds the cost of F-H link to the cost of PSA, so cost of PSA becomes 1. Node F prepends the F->H link into the Path in the PSA. With the updated Path and Cost, node F installs the Path State entry for H into the Routing Table at node F. Node F also installs into the Next-Hop Table at node F the mapping of next-hop F->H to link F-H, which is learned from the first hop in PSA-1. It is noted that the forwarding tables at node F are illustrated in FIG. 10.

As illustrated in FIG. 10, the node F includes a set of forwarding tables 1000 that includes a Routing Table 1010, a Path-ID Mapping Table 1020, and a Next-Hop Table 1030.

In this example, node F then assigns the Path-ID = PID-F-1 for the PSA and advertises it on links D1-F1, D2-F2, E-F, and F-G. Namely, node F advertises the following PSAs on the respective links: (1) PSA-3 on link D1-F1 = {Path-ID = PID-F-1, Dest = H, Path = {F->H}, Cost = 1}, (2) PSA-4 on link D2-F2 = {Path-ID = PID-F-1, Dest = H, Path = {F->H}, Cost = 1}, (3) PSA-5 on link E-F = {Path-ID = PID-F-1, Dest = H, Path = {F->H}, Cost = 1}, and (4) PSA-6 on link F-G = {Path-ID = PID-F-1, Dest = H, Path = {F->H}, Cost = 1}.

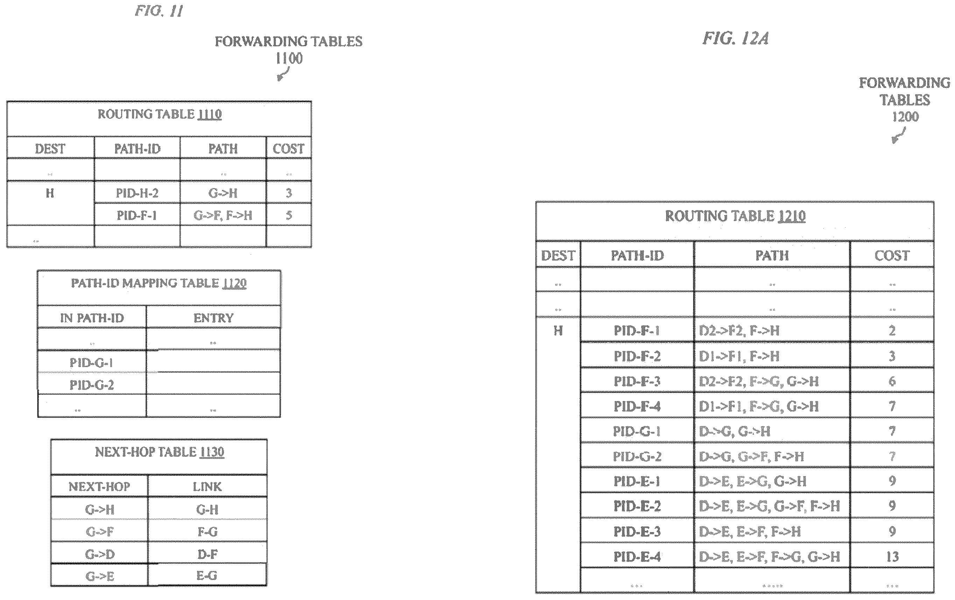

In this example, when node G receives PSA-2 on link G-H, node G checks for a loop, i.e., if the Path contains the identifier of a local link. Node G, not finding any loop, accepts PSA-2. Node G adds the cost of the G-H link to the cost of PSA, so the cost of the PSA becomes 3. Node G prepends G->H into the Path of PSA. With the updated Path and Cost, node G installs the Path State entry for H into the Routing Table at node G. Node G also installs into the Next-Hop Table the mapping of next-hop G->H to link G-H, which is learned from the first hop in PSA-2. It is noted that the forwarding tables at node G are illustrated in FIG. 11.

As illustrated in FIG. 11, the node G includes a set of forwarding tables 1100 that includes a Routing Table 1110, a Path-ID Mapping Table 1120, and a Next-Hop Table 1130.

In this example, node G then assigns the Path-ID = PID-G-1 for the PSA and advertises it on links D-G, EG, and F-G. Namely, node G advertises the following PSAs on the respective links: (1) PSA-7 on link D-G = {Path-ID = PID-G-1, Dest = H, Path = {G->H}, Cost = 3}, (2) PSA-8 on link E-G = {Path-ID = PID-G-1, Dest = H, Path = {G->H}, Cost = 3}, and (3) PSA-9 on link F-G = {Path-ID = PID-G-1, Dest = H, Path = {G->H}, Cost = 3}.

In this example, when node F receives PSA-9 on link F-G, node F checks for a loop, i.e., if the Path contains the identifier of a local link. Node F, not finding any loop, accepts PSA-9. Node F adds the cost of the F-G link to the cost of PSA, so the cost of PSA becomes 5. Node F installs the Path State entry for H into the Routing Table at node F. Node F also installs into the Next-Hop Table the mapping of next-hop F->G to link F-G, which is learned from the first hop in PSA-9. The forwarding tables at node F are shown in FIG. 10.

In this example, node F then assigns the Path-ID = PID-F-2 for the PSA and advertises it on links D1-F1, D2-F2, E-F, and F-H. Namely, node F advertises the following PSAs on the respective links: (1) PSA-10 on link D1-F1 = {Path-ID = PID-F-2, Dest = H, Path = {F->G, G->H}, Cost = 5}, (2) PSA-11on link D2-F2 = {Path-ID = PID-F-2, Dest = H, Path = {F->G, G->H}, Cost = 5}, (3) PSA-12 on link E-F = {Path-ID = PID-F-2, Dest = H, Path = {F->G, G->H}, Cost = 5}, and (4) PSA-13 on link F-H = {Path-ID = PID-F-2, Dest = H, Path = {F->G, G->H}, Cost = 5}.

In this example, when node G receives PSA-6 on link F-G, node G checks for a loop, i.e if the Path contains the identifier of a local link. Node G, not finding any loop, accepts PSA-6. Node G adds the cost of the F-G link to the cost of PSA, so the cost of PSA becomes 3. Node G prepends the G->F link to the Path of the PSA. With the updated Path and Cost, node G installs the Path State entry for H into the Routing Table at node G. Node G also installs into the Next-Hop Table the mapping of next-hop G->F to link F-G, which is learned from the first hop in PSA-6. The forwarding tables at node G are shown in FIG. 11.

In this example, node G then assigns the Path-ID = PID-G-2 for the PSA and advertises it on links D-G, EG, and G-H. Namely, node G advertises the following PSAs on the respective links: (1) PSA-14 on link D-G = {Path-ID = PID-G-2, Dest = H, Path = {G->F, F->H}, Cost = 5}, (2) PSA-15 on link E-G = {Path-ID = PID-G-2, Dest = H, Path = {G->F, F->H}, Cost = 5}, and (3) PSA-16 on link G-H = {Path-ID = PID-G-2, Dest = H, Path = {G->F, F->H}, Cost = 5}.

In this example, when H receives PSA-13 on link F-H, node H checks for a loop and finds a local link identifier G->H. So, node H declares a loop and drops PSA-13. Similarly, when node H receives PSA-16 on link G-H, node H checks for a loop and finds a local link identifier F->H. So H declares loop and also drops PSA-16.

It is noted that, for simplicity, forwarding tables of node F, node G, and node H in FIG. 10, FIG. 11, and FIG. 9, respectively, show only a subset of all possible paths to node H.

Similarly, PSAs for node H get flooded across the network on each possible loop-free path and each node in the network.

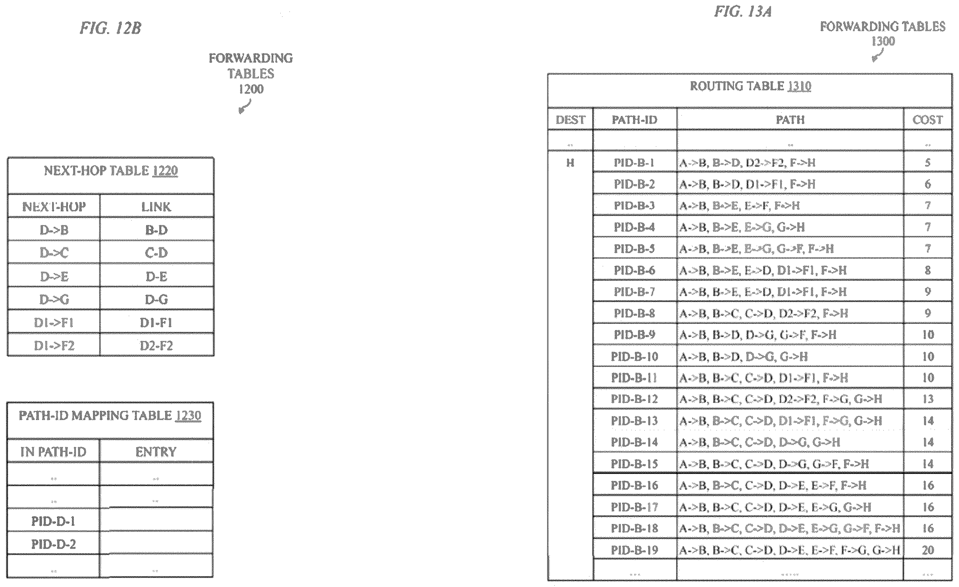

FIGs. 12A and 12B depict an example embodiment of forwarding tables maintained at the node D of the packet switching network of FIG. 2. The forwarding tables 1200 are the resultant forwarding tables at node D after the PSAs for node H get flooded across the network.

As illustrated in FIGs. 12A and 12B, the node D includes a set of forwarding tables 1200 that includes a Routing Table 1210, a Path-ID Mapping Table 1220, and a Next-Hop Table 1230. It is noted that, for simplicity, only a subset of all of the possible paths to node H are included. The path with Path-ID = PID-F-1 is the shortest path from D to H.

FIGs. 13A-13C depict an example embodiment of forwarding tables maintained at the node A of the packet switching network of FIG. 2. The forwarding tables 1300 are the resultant forwarding tables at node A after the PSAs for node H get flooded across the network.

As illustrated in FIGs. 13A-13C, the node A includes a set of forwarding tables 1300 that includes a Routing Table 1310, a Path-ID Mapping Table 1320, and a Next-Hop Table 1330. It is noted that, for simplicity, only a subset of all of the possible paths to node H are included. The path with Path-ID = PID-B-1 is the shortest path from A to H.

Node A, given the forwarding tables of FIGs. 13A-13C, can perform load balancing (e.g., flow-based, per-packet, randomized load balancing (RLB), or the like) of packets to destination node H over the UCMP paths of FIGs. 13A-13C. For example, assume that node A chooses the path with Path-ID = PID-B-2 to send a packet to node H.

In this example, using the first forwarding method discussed above, node A first encodes the source route = {A->B, B->D, D1->F1, F->H, <global-protected-hop = H>} into the packet. Node A pops the first hop A->B and sends the packet to A->B with source route {B->D, D1->F1, F->H, <global-protected-hop = H>}. Subsequent nodes forward the packet along the path by pop-n-forward on the source route.

In this example, using the second forwarding method discussed above, node A encodes the Path-ID = PID-B-2 into the packet and forwards the packet to the first hop of the path, A->B. On receiving the packet, B looks up PID-B2 in its Path-ID Mapping Table, swaps the PID-B2 with the Path-ID to B->D and forwards the packet on B->D link. This swap and forward continues until the packet reaches H.

Now, assume that node F failed. As a result: (1) node D flooded failure of links D1->F1 and D2->F2, (2) node E flooded failure of link E->F, (3) node G flooded failure of link G->H, (4) node H flooded failure of link H->F. On receiving the failure notifications, each of the nodes across the network removes the paths that traverse the failed links. Note that, before the nodes in the network converge upon the failures, the nodes D, E, G, and H perform FRR of packets (source routed on paths over failed links) via alternate paths. For example, packets sent by A with source route = {A->B, B->D, D1->F1, F->H, <global-protected-hop = H>} reach node D with source route = {D1->F1, F->H, <global-protected-hop = H>}. Node D finds the next-hop link D1->F1 has failed, so node D looks up its routing table for an alternate path to node H, which is the global-protected-hop. D identifies the alternate path with the least cost, the one with Path-ID = PID-G-1 (in the routing table 1210 in FIG. 12A). So, node D replaces the source route of the packet with the source route = {D->G, G->H} of the alternate path, and then forwards the packet via the alternate path.

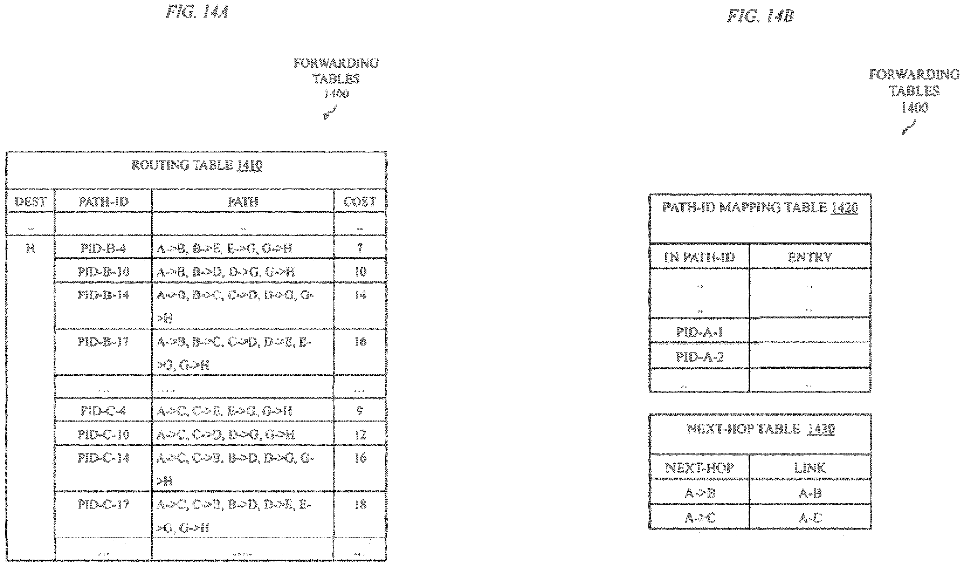

FIGs. 14A-14B depict an example embodiment of forwarding tables maintained at the node A of the packet switching network of FIG. 2 after node A converges after the failure of node F of the packet switching network of FIG. 2.

As illustrated in FIGs. 14A and 14B, the node A includes a set of forwarding tables 1400 that includes a Routing Table 1410, a Path-ID Mapping Table 1420, and a Next-Hop Table 1430.

As illustrated in FIGs. 14A-14B, the number of paths from a node to a destination is proportional to the density (degree of connectivity) in the network. In a highly dense network, a node may have a very large number of paths to each destination and not every path may be optimal. So, a node may select a subset of optimal paths to each destination, based on various criteria. Note that, when a node decides to use a subset of the paths to a destination, then it probably cannot support the second forwarding method discussed above (i.e., Path-ID based forwarding) since this method may require each possible path be programmed into the forwarding table with corresponding advertised Path-ID. In that case, the node will not advertise Path-ID in any of the PSAs.

In at least some example embodiments, in order to select a subset of optimal paths, first, a node may set an upper limit on the number of paths in UCMP set per destination. The node can segregate the paths into groups per neighbor, where each group has the neighbor as the first hop. Further paths in each group are sorted by ascending order of cost. Then, paths are selected from each group in round-robin fashion until the number of paths reaches the upper limit.

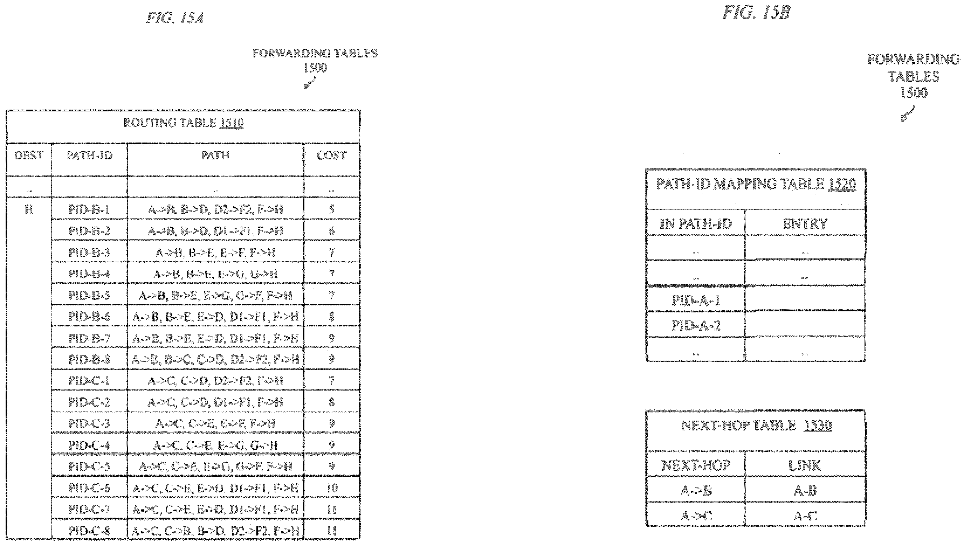

As an example, assume that node A decides to allow a maximum of 16 paths in a UCMP set to a destination. Then paths to node H are segregated into two groups - paths via neighbor B and paths via neighbor C. Then, the 8 paths are picked up from each group. The updated forwarding tables in node A are illustrated in FIGs. 15A-15b. Now node A can perform load balancing of packets to H on 16 UCMP paths.

FIGs. 15A-15B depict an example embodiment of forwarding tables maintained at the node A of the packet switching network of FIG. 2 after node A selects a subset of optimal paths to node H of the packet switching network of FIG. 2.

As illustrated in FIGs. 15A and 15B, the node A includes a set of forwarding tables 1500 that includes a Routing Table 1510, a Path-ID Mapping Table 1520, and a Next-Hop Table 1530.

In at least some example embodiments, in order to select a subset of optimal paths, maximally disjoint criteria may be used. Here, "maximally disjoint" means that the links included by the paths are mutually exclusive between the paths. For example, maximally disjoint paths to a destination (denoted as Dest) may be selected with the following algorithm. In a first step, add a "sharing factor" (SF) to each network element in a path to Dest, where SF is the number of paths to Dest that share the network element. This first step can be performed for all links in all UCMP paths with log(L) operation where L is the total number of network elements across the UCMP set. The by-product of the first step is also the SF for a path, which is the sum of SFs on each network element. In a second step, organize the paths by ascending order of SFs. This second step is a log(P) operation where P is the number of paths in the UCMP set. In a third step, pick the path P1 in the UCMP set with the least SF and add the path into a candidate UCMP set, and then remove all paths from the parent UCMP set that share the links with P1. This third step can be an O(P) operation. Finally, the third step is repeated until the parent UCMP set is empty.

It is noted that the above-described algorithm for maximally disjoint path selection to Dest is suitable for flow-based load balancing. For per-flow load balancing, globally disjoint trees may offer fairness.

It is noted that a node may limit the number of PSAs per destination that the node wants to keep in the control plane and the forwarding plane. If a failure reduces the number of PSAs/installed paths, then a node may request neighbors to replay the PSAs for a destination. It may also specify the maximum number (Nmax) of PSAs to be replayed. A neighbor may replay Nmax PSAs to the requesting node. If a neighbor does not have Nmax PSAs then the neighbor may in turn request the neighboring nodes to replay.

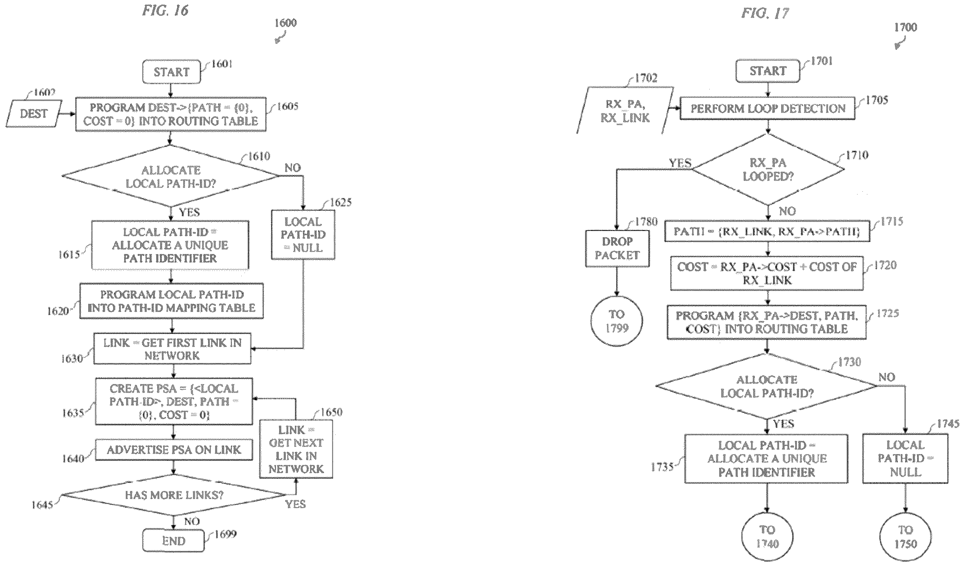

FIG. 16 depicts an example embodiment of a method for use by a node for originating a PSA. It will be appreciated that, although primarily presented herein as being performed serially, at least a portion of the functions of method 1600 may be performed contemporaneously or in a different order than as presented in FIG. 16. At block 1601, the method 1600 begins. The input to the method 1600, as indicated by block 1602, is a destination (Dest) that represents one or more nodes. Block 1605 programs an entry for the destination into the Routing Table with an empty Path and Cost as zero. The empty Path in the entry means that this node is the originator of the PSA for the destination. Block 1610 determines if the node needs to allocate a local Path-ID for the PSA originated for the destination. For example, if a network or the node or the packet switching technology does not support Path-ID-based forwarding then no local Path-ID is to be allocated here. If a determination is made that a local Path-ID is to be allocated then the method 1600 proceeds to block 1615, otherwise the method proceeds to block 1625. Block 1625 sets the local Path-ID as NULL and then the method 1600 proceeds to block 1630. Block 1615 allocates a locally unique Path-ID and then the method 1600 proceeds to block 1620. Block 1620 programs the local Path-ID into the Path-ID Mapping Table, where the entry points to the Path State entry in the Routing Table, and then the method 1600 proceeds to block 1630. Block 1630 retrieves the first link from the node to the network, and then the method 1600 proceeds to block 1635. Block 1635 creates a new PSA for the destination with empty Path and Cost as zero. The PSA includes the Path-ID if not NULL. Block 1640 advertises the PSA on the link. If the PSA is advertised using a control plane protocol then the protocol may have built-in reliable delivery of the PSA to neighboring node(s) on the link. If the PSA is advertised using an "in-band" method then the nodes need to explicitly implement reliable delivery mechanism for in-band PSAs. One option to build reliability is for the neighbor on a link to send acknowledgement (ACK) of receipt of a PSA and, if ACK is not received within a predetermined period, then the sender retransmits the PSA. If the link is a broadcast multi-access link where multiple neighbors are connected, then periodic broadcast of PSAs is an option. Block 1645 checks if there are more links from the node to the network. If there are more links from the node to the network then the method 1600 proceeds to block 1650, otherwise the method 1600 proceeds to block 1699 where the method 1600 ends. Block 1650 retrieves the next link from the node to the network and then the method 1600 returned to block 1635 to advertise PSA on the next link. At block 1699, the method 1600 ends.

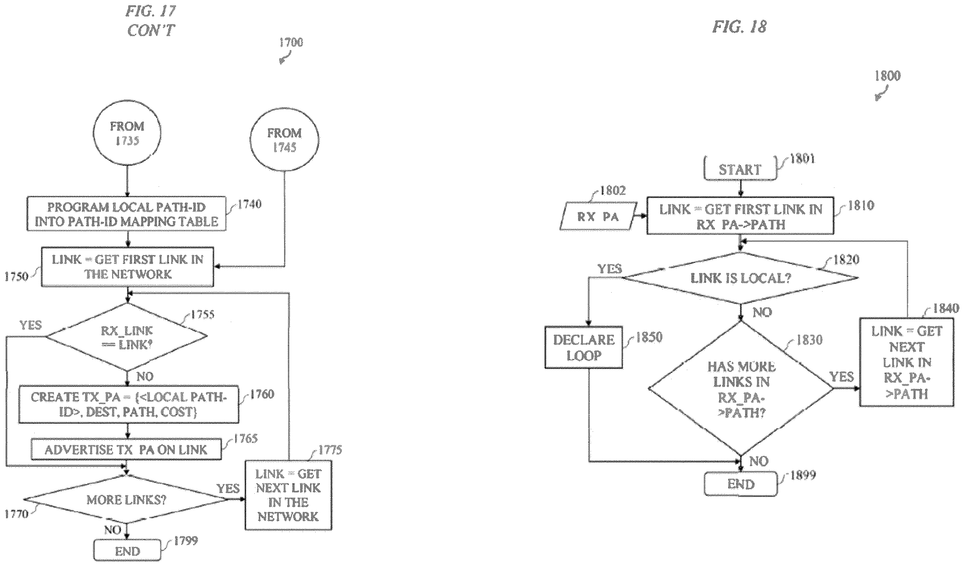

FIG. 17 depicts an example embodiment of a method for use by a node for processing a PSA. It will be appreciated that, although primarily presented herein as being performed serially, at least a portion of the functions of method 1700 may be performed contemporaneously or in a different order than as presented in FIG. 17. At block 1701, the method 1700 begins. The inputs to the method 1700, as indicated by block 1702, include the PSA that is received and needs to be processed (Rx_PSA) and the link on which the PSA is received (Rx_Link). Block 1705 performs a loop detection procedure on the Rx_PSA to check if the Rx_PSA formed a loop, and then the method 1700 proceeds to block 1710. Block 1710 checks if the Rx_PSA formed a loop. If the Rx_PSA formed a loop then the method 1700 proceeds to block 1780, otherwise the method 1700 proceeds to block 1715. Block 1715 builds the path from this node by prepending the Rx_Link to the Path in Rx_PSA, and then the method 1700 proceeds to block 1720. Block 1720 computes the cost of the path from this node by incrementing the cost of Rx_PSA by the cost of the Rx_Link, and then the method 1700 proceeds to block 1725. Block 1725 programs an entry for the Destination of the Rx_PSA into the Routing Table with the Path-ID (if any) and the computed Path and Cost, and then the method 1700 proceeds to block 1730. Block 1730 determines if the node needs to allocate a local Path-ID for the PSA originated for the Destination. For example, if a network or the node or the packet switching technology does not support Path-ID-based forwarding then there is no local Path-ID to be allocated here. Additionally, the node may decide not to allocate a local Path-ID if a Path-ID is not received in Rx_PSA. If a determination is made that a local Path-ID is to be allocated then the method 1700 proceeds to block 1735, otherwise the method 1700 proceeds to block 1745. Block 1745 sets the local Path-ID as NULL and then the method 1700 proceeds to block 1750. Block 1735 allocates a locally unique Path-ID and then the method 1700 proceeds to block 1740. Block 1740 programs the local Path-ID into the Path-ID Mapping Table, where the entry points to the Path entry in the Routing Table, and then the method 1700 proceeds to block 1750. Block 1750 retrieves the first link from the node to the network, and then the method 1700 proceeds to block 1755. Block 1755 checks if the link is the same as Rx_Link. If the link is the same as Rx_Link, then the PSA is not advertised on the incoming link and the method 1700 proceeds to block 1760, otherwise the method 1700 proceeds to block 1770. Block 1760 creates a new PSA for the Destination (denoted as Tx_PSA). The variable fields in the Tx_PSA are as follows: (1) Local Path-ID (if any) is encoded in Path-ID field and (2) the Path and its cost from this node are encoded in the Path and Cost fields, respectively. Block 1765 advertises the Tx_PSA on the link. If the Tx_PSA is advertised using a control plane protocol then the protocol may have built-in reliable delivery of the Tx_PSA to neighboring node(s) on the link. If Tx_PSA is advertised using an "in-band" method then the nodes need to explicitly implement a reliable delivery mechanism for in-band PSAs. One option to build reliability is for the neighbor on a link to send an acknowledgement (ACK) of receipt of a PSA and, if the ACK is not received within a predetermined period, then the sender retransmits the PSA. If the link is a broadcast multi-access link wherein multiple neighbors are connected then periodic broadcast of PSAs is an option. Block 1770 checks if there are more links from the node to the network. If there are more links from the node to the network then the method 1700 proceeds to block 1775, otherwise the method 1700 proceeds to block 1799 where the method 1700 ends. Block 1775 retrieves the next link from the node to the network and then the method 1700 returns to block 1755 to advertise the PSA on the next link. At block 1799, the method 1700 ends.

FIG. 18 depicts an example embodiment of a method for use by a node for performing loop detection on a PSA received on a link. The method 1800 of FIG. 18 may be used to implement block 1702 of the method 1700 of FIG. 17. It will be appreciated that, although primarily presented herein as being performed serially, at least a portion of the functions of method 1800 may be performed contemporaneously or in a different order than as presented in FIG. 18. At block 1801, the method 1800 begins. The input to the method 1800, as indicated by block 1802, includes a PSA received on a link. Block 1810 retrieves the first link identifier in the Path of the PSA, and then the method 1800 proceeds to block 1820. Block 1820 checks if the link identifier is local to the node. If the link identifier is not local to the node then the method 1800 proceeds to block 1830, otherwise the method 1800 proceeds to block 1850. Block 1830 checks if there are more links in the Path. If there are more links in the path then the method 1800 proceeds to block 1840, otherwise the method 1800 proceeds to block 1899 where the method 1800 ends. Block 1840 retrieves the next link identifier in the path, and then the method 1800 returns to block 1820 to repeat subsequent blocks for the next link. Block 1850 declares a loop and then the method 1800 proceeds to block 1899 where the method 1800 ends. At block 1899, the method 1800 ends.

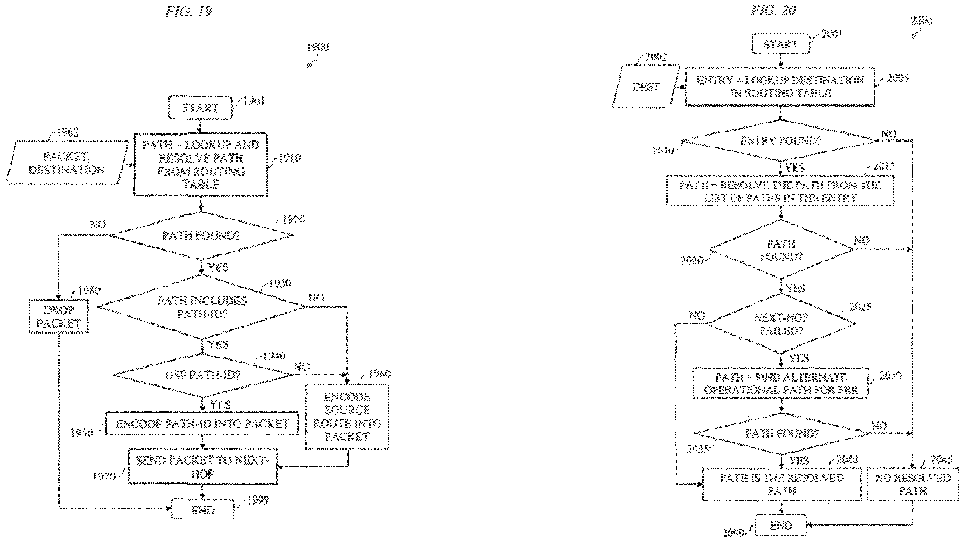

FIG. 19 depicts an example embodiment of a method for use by an ingress node for sending a packet on a path to a destination node. It will be appreciated that, although primarily presented herein as being performed serially, at least a portion of the functions of method 1900 may be performed contemporaneously or in a different order than as presented in FIG. 19. At block 1901, the method 1900 begins. The inputs to the method 1900, as indicated by block 1902, include a packet to be transmitted and the destination of the packet. Block 1910 looks up the destination in the routing table and resolves the path to be used for sending the packet, and then the method 1900 proceeds to block 1920. Block 1920 checks if a path was resolved. If a path was resolved then the method 1900 proceeds to block 1930, otherwise the method 1900 proceeds to block 1980. Block 1930 checks if the Path includes a Path-ID. If the Path includes a Path-ID then the method 1900 proceeds to block 1940, otherwise the method 1900 proceeds to block 1960. Block 1940 checks if the node can encode Path-ID into the packet to get the packet forwarded along the Path. The precise criteria may be configured in various ways. For example, as a policy, if nodes in the network decide to install only a subset of all paths to a destination, then Path-ID based forwarding is not possible since the forwarding state of the path may not be installed in one or more subsequent nodes. If the node can encode Path-ID into the packet then the method 1900 proceeds to block 1950, otherwise the method 1900 proceeds to block 1960. Block 1950 encodes the Path-ID into the packet, and then the method 1900 proceeds to block 1970. Block 1960 encodes the source route into the packet including all hops in the Path (it is noted that Path installed into the Routing Table has the list of all hops, except the first hop since the first hop is programmed as the next-hop of the Path), and then the method 1900 proceeds to block 1970. Block 1970 sends the packet to the next-hop of the Path, and then the method 1900 proceeds to block 1999 where the method 1900 ends. Block 1980 drops the packet and then the method 1900 proceeds to block 1999 where the method 1900 ends.

FIG. 20 depicts an example embodiment of a method for use by an ingress node for resolution of a path to a destination node. It will be appreciated that the method 2000 of FIG. 20 may be used to provide the block 1910 of the method 1900 of FIG. 19. It will be appreciated that, although primarily presented herein as being performed serially, at least a portion of the functions of method 2000 may be performed contemporaneously or in a different order than as presented in FIG. 20. At block 2001, the method 2000 begins. The input to the method 2000, as indicated by block 2002, includes a destination (Dest) for which the path needs to be resolved. Block 2005 looks up the destination in the Routing Table, and then the method 2000 proceeds to block 2010. Block 2010 checks if the destination entry is found in the Routing Table. If the destination entry is found in the Routing Table then the method 2000 proceeds to block 2015, otherwise the method proceeds to block 2045. Block 2015 selects a path from the list of paths in the destination entry. It will be appreciated that various methods for selection of a path may be used. For example, the node may select a path based on per-flow load balancing (i.e., by hashing on certain flow specific fields in the packet), per-packet load balancing, RLB, or the like. Block 2020 checks if a path is found in block 2015. If a path is found then the method proceeds to block 2025, otherwise, if a path is not found (i.e., there are no paths associated with the destination entry), then the method 2000 proceeds to block 2045. Block 2025 checks if the next-hop of the chosen path has failed. If the next-hop of the chosen path has failed then the method proceeds to block 2030, otherwise the method 2000 proceeds to block 2040. Block 2030 finds an alternate path in the destination entry that is operational (this block is for FRR of the packet), and then the method 2000 proceeds to block 2035. Block 2035 checks if an alternate path is found. If an alternate path is found then then method 2000 proceeds to block 2040, otherwise, if an alternate path is not found (which means that none of the paths to the destination are operational), then the method 2000 proceeds to block 2045. Block 2040 declares the chosen path as the resolved path and then the method 2000 proceeds to block 2099 where the method 2000 ends. Block 2045 declares that a path is not resolved and then the method 2000 proceeds to block 2099 where the method 2000 ends. At block 2099, the method 2000 ends.

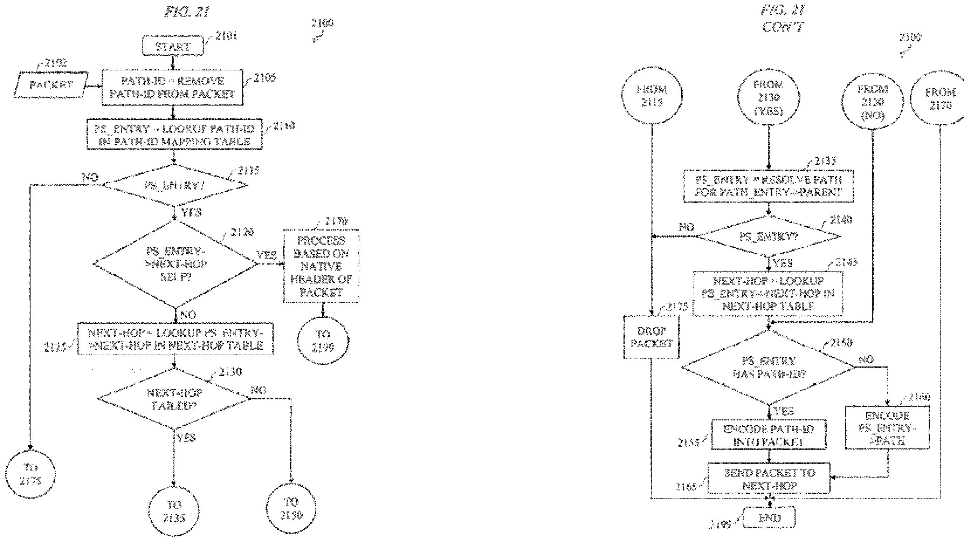

FIG. 21 depicts an example embodiment of a method for use by a transit node or an egress node to process a received packet encoded with a Path-ID. It will be appreciated that, although primarily presented herein as being performed serially, at least a portion of the functions of method 2100 may be performed contemporaneously or in a different order than as presented in FIG. 21. At block 2101, the method 2100 begins. The input to the method 2100, as indicated by block 2102, includes a packet encoded with a Path-ID. Block 2105 removes the Path-ID from the packet, and then the method 2100 proceeds to block 2110. Block 2110 looks up the Path-ID in the Path-ID Mapping Table to retrieve the corresponding Path State entry, and then the method 2100 proceeds to block 2115. Block 2115 checks if the Path State entry is found for the Path-ID. If the Path State entry is found for the Path-ID then the method 2100 proceeds to block 2120, otherwise the method 2100 proceeds to block 2175. Block 2120 checks if the next-hop of the Path State entry indicates if this node is the egress router of the path. If this node is not the egress router then the method 2100 proceeds to block 2125, otherwise the method 2100 proceeds to block 2170. Block 2125 looks up the next-hop of the Path State entry in the Next-Hop Table, and then the method 2100 proceeds to block 2130. Block 2130 checks if the next-hop has failed. If next-hop has failed then the method 2100 proceeds to block 2135, otherwise the method 2100 proceeds to block 2150. Block 2135 resolves an alternate path (for FRR) to the destination (Parent of the Path State Entry). This block may be implemented using the method 2000 of FIG. 20. Block 2135 proceeds to block 2140. Block 2140 checks if an alternate path is resolved by block 2135. If an alternate path is resolved then the method 2100 proceeds to block 2145, otherwise the method 2100 proceeds to block 2175. Block 2145 looks up the next-hop of the alternate path in the Next-Hop Table, and then the method 2100 proceeds to block 2150. Block 2150 checks if the Path State entry has a Path-ID. If the Path State entry has a Path-ID then the method 2100 proceeds to block 2155, otherwise the method 2100 proceeds to block 2160. Block 2155 encodes the Path-ID into the packet, and then the method 2100 proceeds to block 2165. Block 2160 encodes the Path as source route into the packet, and then the method 2100 proceeds to block 2165. Block 2165 sends the packet to the next-hop of the path, and then the method 2100 proceeds to block 2199 where the method 2100 ends. Block 2170 process the packet based on its native header, and then the method proceeds to block 2199 where the method 2100 ends. Block 2175 drops the packet and then the method proceeds to block 2199 where the method 2100 ends. At block 2199, the method 2100 ends.

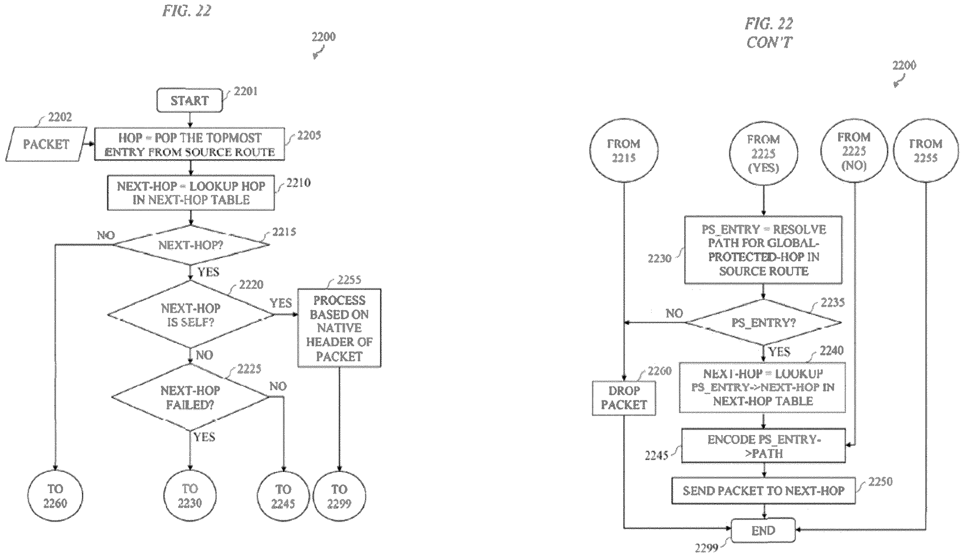

FIG. 22 depicts an example embodiment of a method for use by a transit router or an egress router to process a received packet encoded with a source route. It will be appreciated that, although primarily presented herein as being performed serially, at least a portion of the functions of method 2200 may be performed contemporaneously or in a different order than as presented in FIG. 22. At block 2201, the method 2200 begins. The input to the method 2200, as indicated by block 2202, includes a packet encoded with a source route. Block 2205 pops the topmost hop from the source route of the packet, and then the method 2200 proceeds to block 2210. Block 2210 looks up the hop in the Next-Hop Table, and then the method 2200 proceeds to block 2215. Block 2215 checks if the next-hop entry is found. If the next-hop entry is found then the method proceeds to block 2220, otherwise the method 2200 proceeds to block 2260. Block 2220 checks if the next-hop entry indicates if this node is the egress router. If this node is not the egress router then the method 2200 proceeds to block 2225, otherwise the method 2200 proceeds to block 2255. Block 2225 checks if the next-hop has failed. If the next-hop has not failed then the method 2200 proceeds to block 2230, otherwise the method 2200 proceeds to block 2245. Block 2230 resolves an alternate path (for FRR) to the destination (Parent of the Path State Entry). Block 2230 may be implemented by the method 2000 of FIG. 20. Block 2235 checks if an alternate path is resolved by block 2230. If an alternate path is resolved by block 2230 then the method 2200 proceeds to block 2240, otherwise the method 2200 proceeds to block 2260. Block 2240 looks up the next-hop of the alternate path in Next-Hop Table, and then the method 2200 proceeds to block 2245. Block 2245 encodes the Path as a source route into the packet, and then the method 2200 proceeds to block 2250. Block 22500 sends the packet to the next-hop of the path, and then the method proceeds to block 2299 where the method 2200 ends. Block 2255 process the packet based on its native header, and then the method proceeds to block 2299 where the method 2200 ends. Block 2260 drops the packet, then the method proceeds to block 2299 where the method 2200 ends.

Various example embodiments presented herein may be configured to support autonomous path construction and routing in various packet switching technologies, such as IP, Ethernet, MPLS, Bit Indexed Segment Routing (BI-SR), or the like, as well as various combinations thereof.

Various example embodiments presented herein, as indicated above, may be configured to support autonomous path construction and routing in IP networks.

In at least some example embodiments in which autonomous path construction and routing is supported in IP networks, the PSA distribution may be performed through the control plane.

Various IGP protocols used in IP networks include OSPF, OSPFv3, IS-IS, BGP-LS and the like. An IGP protocol in a router floods the status of locally connected links or externally learned networks throughout the network using Link State Advertisements (LSAs).

In at least some example embodiments for supporting PSA distribution through the IP control plane, such IGP protocols may be enhanced to support PSA distribution, based on support for distribution of PSAs, PSA Acknowledgements, PSA Requests, and notifications of path failures.

In at least some example embodiments, PSA distribution through the IP control plane may include support for distribution of PSAs.

In at least some example embodiments, various IGP protocols may be enhanced to support PSA distribution based on support for distribution of PSAs.

In at least some example embodiments, a PSA may encode at least the following fields: Destination, Path, Cost, and Path-ID.

The Destination field of the PSA is an IP Prefix that represents a subnet or an IP host address. For example, 10.10.0.0/16 is an IPv4 Prefix and 10.10.10.1/32 is an IPv4 host address.

The Path field is an ordered list of hops wherein each hop is an IP address. For example, a hop is an IP address configured on one end of a link. For example, assume that in the link X-Y, the IPv4 addresses of the link at X's end and Y's end are 10.10.10.1 and 10.10.10.2, respectively. Then, in a Path, hop X->Y is represented as 10.10.10.2 and hop Y->X is represented as 10.10.10.1.

The Cost field of the PSA includes the sum of the costs of the hops in the Path in the Path field.

The Path-ID field of the PSA encodes the Path-ID assigned by the router that advertises the PSA.

In at least some example embodiments, multiple PSAs may be bundled into a single protocol message of the IGP.

In at least some example embodiments, unsolicited PSAs advertised on a link (i.e., not explicitly requested by a neighbor) will be multicast on a link with destination address in IP header that indicates "all routers in the subnet".

It will be appreciated that various IGP protocols may be enhanced in various other ways to support PSA distribution based on support for distribution of PSAs.

It will be appreciated that, where autonomous path construction and routing is implemented in IP networks, support for PSA distribution in the IP control plane may be performed in various other ways.

In at least some example embodiments, PSA distribution through the IP control plane may include support for distribution of PSA Acknowledgments.

In at least some example embodiments, various IGP protocols may be enhanced to support PSA distribution based on support for distribution of PSA Acknowledgements.

In at least some example embodiments, a control plane protocol that does not operate atop a reliable transport protocol (e.g., TCP) will need to build reliable delivery of PSAs among the neighboring routers. Such control protocols are the IGPs such as OSPF, OSPFv3, and IS-IS.

In at least some example embodiments, the reliable delivery of PSAs may be implemented through an acknowledgement based mechanism. In at least some such embodiments, each PSA is acknowledged by the receiver with a PSA Acknowledgement (PSA Ack) where the PSA being acknowledged is indicated by its Path-ID. If a PSA is not acknowledged within a stipulated time then sender of the PSA may retransmit. Multiple PSA acknowledgements may be bundled in a single protocol message. PSA acknowledgements will be unicast to the sender of the PSAs.

It will be appreciated that various IGP protocols may be enhanced in various other ways to support PSA distribution based on support for distribution of PSA Acknowledgements.

It will be appreciated that, where autonomous path construction and routing is implemented in IP networks, support for PSA Acknowledgement distribution in the IP control plane may be performed in various other ways

In at least some example embodiments, PSA distribution through the IP control plane may include support for distribution of PSA Requests.

In at least some example embodiments, various IGP protocols may be enhanced to support PSA distribution based on support for distribution of PSA Requests.

In at least some example embodiments, a router may use a PSA Request to solicit PSAs from a neighboring router. The PSA request includes at least the following fields: Destination and Limit.

The Destination field includes the IP Prefix or the host IP address for which PSAs are requested. If the Destination field is set to value 0 then it means that all PSAs known by the neighbor are solicited.

The Limit field specifies the maximum number of PSAs per IP Prefix or host IP address that can be sent by the neighbor that is solicited.

The PSA Request may be unicast to a specific neighbor on a link or multicast to all neighbors on the link.

It will be appreciated that various IGP protocols may be enhanced in various other ways to support PSA distribution based on support for distribution of PSA Requests.

It will be appreciated that, where autonomous path construction and routing is implemented in IP networks, support for PSA Request distribution in the IP control plane may be performed in various other ways.

In at least some example embodiments, PSA distribution through the IP control plane may include support for notification of path failures.

In at least some example embodiments, various IGP protocols may be enhanced to support PSA distribution based on support for notifications of paths failures.

In general, when a link or a node fails, then routers encountering the failure flood LSAs for the corresponding failed link(s). This technique may be used by various example embodiments herein for convergence of paths for the failure. Namely, when a router receives an LSA on a link failure, it removes all paths that traversed the failed link.

It will be appreciated that various IGP protocols may be enhanced in various other ways to support PSA distribution based on support for notifications of path failures.

It will be appreciated that, where autonomous path construction and routing is implemented in IP networks, support for notification of path failures in the IP control plane may be performed in various other ways.

It will be appreciated that, where autonomous path construction and routing is implemented in IP networks, PSA distribution through the IP control plane may be performed in various other ways.

In at least some example embodiments in which autonomous path construction and routing is supported in IP networks, the PSA distribution may be performed through the data plane. In this case, the PSA may be considered to be distributed in-band in the data plane (e.g., using the IP header alone), thereby eliminating the need for a control plane protocol (although it will be appreciated that control plane protocols may still be used for other purposes).

In at least some example embodiments in which autonomous path construction and routing is supported in IP networks, the PSA distribution may be performed through the IPv4 data plane.

In at least some example embodiments, as discussed further below, PSA distribution through the IPv4 data plane may include support for topology discovery, PSA bundling, PSA Acknowledgement bundling, PSA Request bundling, and notifications of path failures.

In at least some example embodiments, PSA distribution through the IPv4 data plane may be based on the IPv4 Header and associated IPv4 Options.

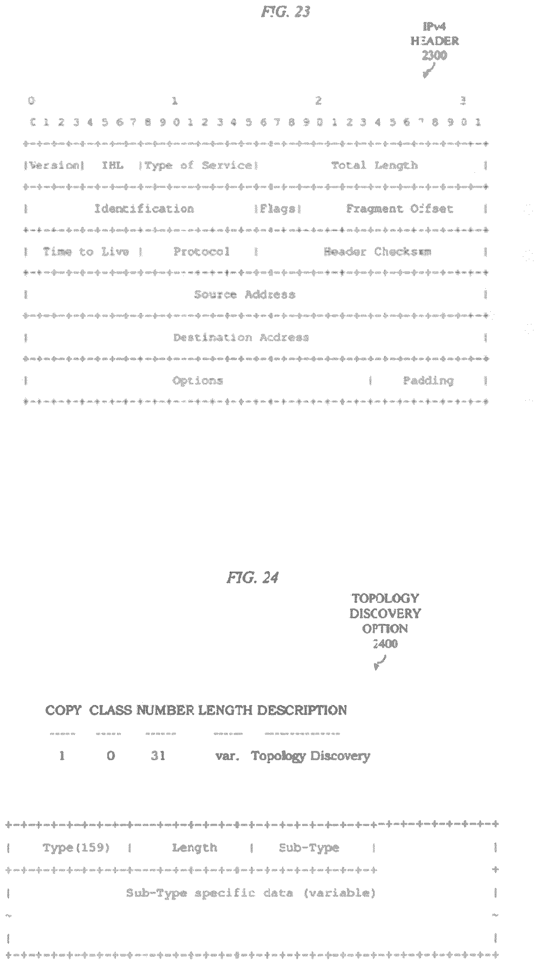

FIG. 23 depicts an example embodiment of an IPv4 Header configured for use in supporting PSA distribution through the IPv4 data plane.

As depicted in FIG. 23, the IPv4 Header includes various fields, such as a Version field, an IHL field, a Type of Service field, a Total Length field, an Identification field, a Flags field, a Fragment Offset field, a Time to Live field, a Protocol field, a Header Checksum field, a Source Address field, a Destination Address field, one or more Options fields, and a Padding field.

The IPv4 Options provide for control functions needed or useful in some situations but unnecessary for the most common communications. The options include provisions for timestamps, security, and special routing.

IPv4 Options start with a 1-octet Type field followed by a type specific encoding. Options are of variable length. Thus, the minimum size of an IPv4 Option is one octet (Only type) if it does not have any type-specific data. The maximum size of an IPv4 Option is limited by the maximum permissible value of the IHL field in the IPv4 Header.

In IPv4, the 1-octet Type is viewed as having three fields as follows: (1) a 1-bit Copied flag, (2) a 2-bit Option Class, and (3) a 5-bit Option Number. The Copied flag indicates whether or not the IPv4 Option is copied into fragments on fragmentation (e.g., 0 = not copied while 1 = copied). The Options Classes include: (a) 0 = control, (b) 1 = reserved for future use, (c) 2 = debugging and measurement, and (d) 3 = reserved for future use.

In at least some example embodiments, PSA distribution through the IPv4 data plane may include support for topology discovery.

In at least some example embodiments, a new IPv4 Option (referred to herein as the "Topology Discovery Option") may be defined to support any in-band network topology discovery options.

FIG. 24 depicts an example embodiment of a Topology Discovery Option configured for use in supporting PSA distribution through the IPv4 data plane.

As depicted in FIG. 24, the Topology Discovery Option 2400 includes a Type field, a Length field, a Sub-Type field, and Sub-Type specific data.

The Topology Discovery Option 2400 includes a Type field, a Length field, a Sub-Type field, and Sub-Type-specific data.

The Type field is a 1-octet field that indicates that this option is a Topology Discovery Option in tuples of COPY, CLASS and NUMBER, which is 159. The type field of the Topology Discovery Option 2400 is assigned the following values: Copy =1, Class =0, and Number = 31. The Copy bit being set to "1" means that the Topology Discovery option will be copied into all fragments, in case the IPv4 packet carrying the option is fragmented by a router.

The Length field is a 1-octet field that indicates the length of this option that includes the Type octet, the Length octet, the Sub-Type octet, and the octets of Sub-Type specific data.

The Sub-Type field is a 1-octet field that indicates a sub-type. In at least some example embodiments, the following sub-types may be defined: (a) Sub-Type 1 = Neighbor Discovery, (b) Sub-Type 2 = Link State Advertisement (LSA) Bundle, (c) Sub-Type 3 = LSA Acknowledgement / Ack Bundle, and (d) Sub-Type 4 = LSA Request Bundle.

When a router routes an IPv4 packet, the router checks to see if a Topology Discovery Option is present. If the Topology Discovery Option is present, then the Topology Discovery Option is processed by the router.

In at least some example embodiments, as discussed further below, the following Sub-Types may be supported for the Topology Discovery Option: (a) Sub-Type 5 = Path State Advertisement (PSA) Bundle, (b) Sub-Type 6 = PSA Acknowledgement/Ack Bundle, and (c) Sub-Type 7 = PSA Request Bundle.

It will be appreciated that, where autonomous path construction and routing is implemented in IPv4 networks, topology discovery in the IPv4 data plane may be performed in various other ways.

In at least some example embodiments, PSA distribution through the IPv4 data plane may include support for PSA bundling.

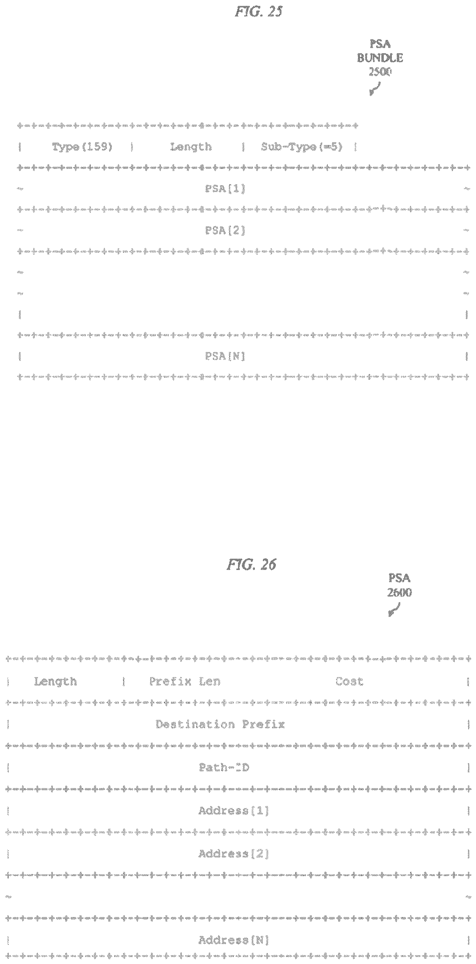

In at least some example embodiments, a router sends a PSA Bundle to advertise one or more PSAs on a link. An example embodiment of a PSA Bundle for use in IPv4 is depicted in FIG. 25.

FIG. 25 depicts an example embodiment of a PSA Bundle configured to support advertising of one or more PSAs on a link in an IPv4 data plane.

As depicted in FIG. 25, the PSA Bundle 2500 includes a Type field (set to 159 in this example, although it will be appreciated that any other suitable value may be used), a Length field, a Sub-Type field (Sub-Type=5), and a Data field. The Data field of the PSA Bundle 2500 includes one or more PSAs (denoted as PSA[1] through PSA[N]). The size of a PSA is variable. An example embodiment of a PSA for use in IPv4 is depicted in FIG. 26.

FIG. 26 depicts an example embodiment of a PSA configured for use in supporting PSA distribution through the IPv4 data plane.

As depicted in FIG. 26, the PSA 2600 includes a Length field, a Prefix Length (PrefixLen) field, a Cost field, a Destination Prefix field, a Path-ID field, and an Path (Address List) field.

The Length field is a 1-octet field that encodes the total number of octets in the PSA, including the Length field itself.

The Prefix Length field is a 1-octet field that encodes the number of bits in the subnet mask of the Destination Prefix that are set to 1.

The Cost field is a 2-octet field that indicates the total cost of all of the hops in the Path.

The Destination Prefix field is a 4-octet IPv4 Prefix that represents the destination.

The Path-ID field is a 4-octet Path-ID advertised by the first hop in the Path on the receiving link. The Path-ID uniquely identifies a PSA with respect to a neighbor on a link.

The Path field is composed of a series of IPv4 addresses where each address is 32 bits or 4 octets. The series of addresses is the ordered list of hops in the path, in the reverse order. So Address[1] is the last hop in the Path and Address[N] is the first hop in the path.

The originator of a PSA starts with the IPv4 address of the link on which the PSA is advertised as the only entry in Path. For unsolicited PSA advertisements on a link (i.e., not explicit requested by a neighbor on the link), the destination address in the IPv4 header is set to 224.0.0.2, addressing all routers in the IP subnet (on the link). The size of the PSA changes as subsequent routers append link/hop addresses to Path while advertising the PSA.

The receiver of a PSA processes the PSA. The receiver of the PSA may process the PSA using the method 1700 of FIG. 17.

When a router deletes an already advertised PSA, the router sends the PSA with the Path empty, i.e., the PSA is 12-octets in size with only the Length, Prefix Length, Cost, Destination Prefix, and Path-ID fields. The PSA deletion is advertised on all links where the PSA was advertised before.

It will be appreciated that, where autonomous path construction and routing is implemented in IPv4 networks, PSA bundling in the IPv4 data plane may be performed in various other ways.

In at least some example embodiments, PSA distribution through the IPv4 data plane may include support for PSA Acknowledgement bundling.

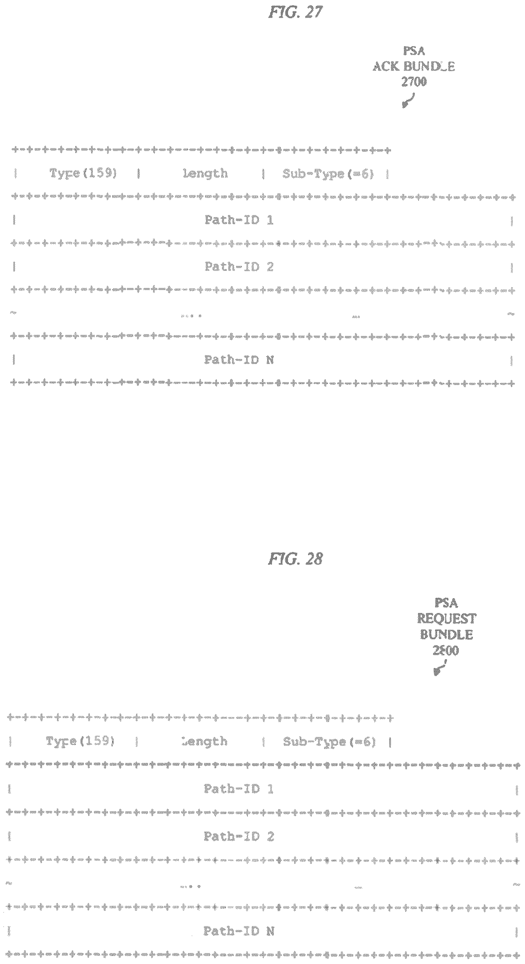

In at least some example embodiments, a router may use the PSA Ack Bundle (= Sub-Type 6) to acknowledge receipt of one or more PSAs to the common first hop in their Paths. An example embodiment of a PSA Ack Bundle for use in IPv4 is depicted in FIG. 27.

FIG. 27 depicts an example embodiment of a PSA Ack Bundle configured to support acknowledgment of one or more PSAs in the IPv4 data plane.

As depicted in FIG. 27, the PSA Ack Bundle 2700 includes a Type field (set to 159 in this example, although it will be appreciated that any other suitable value may be used), a Length field, a Sub-Type field (Sub-type=6), and a Data field. The Data field of the PSA Ack Bundle includes one or more 4-octet Path-ID fields encoding the Path-ID of a PSA being acknowledged (denoted as Path-ID 1 through Path-ID N). The destination address in the IPv4 Header will be the address of the common first hop in the Paths of the PSAs.

When a router sends a PSA Bundle on a link, the router waits for PSA Acks from each neighbor on each PSA included in the bundle. If a PSA Ack is not received from a neighbor within a stipulated time, then the router resends the PSA.

It will be appreciated that, where autonomous path construction and routing is implemented in IPv4 networks, PSA Acknowledgement bundling in the IPv4 data plane may be performed in various other ways.

In at least some example embodiments, PSA distribution through the IPv4 data plane may include support for PSA Request bundling.

In at least some example embodiments, a router may use the PSA Request Bundle (= Sub-Type 7) to solicit PSAs from a neighboring router. An example embodiment of a PSA Request Bundle for use in IPv4 is depicted in FIG. 28.

FIG. 28 depicts an example embodiment of a PSA Request Bundle configured for use to request PSAs from a neighboring router in the IPv4 data plane.

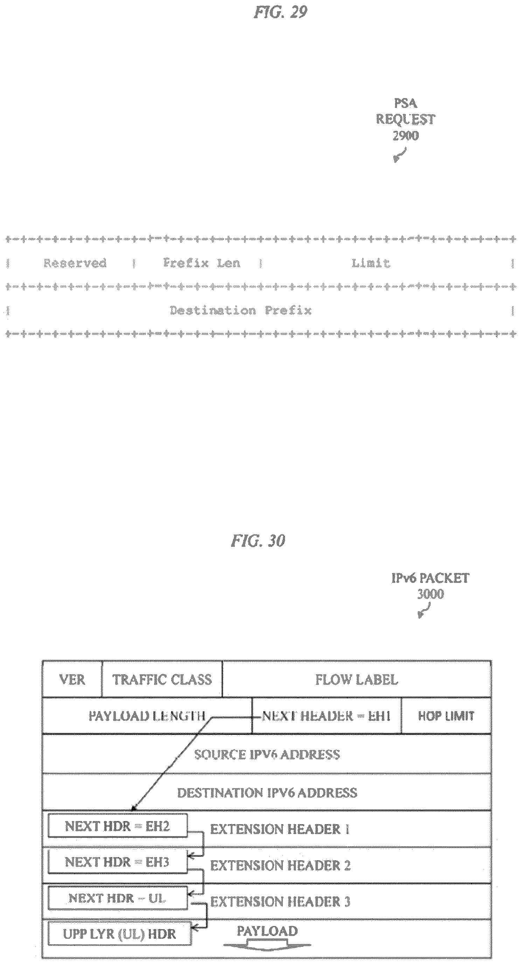

As depicted in FIG. 28, the PSA Request Bundle 2800 includes the Option Type, Length, and Sub-Type fields, as well as a data portion. The data portion of the PSA Request Bundle (Sub-Type 7) includes one or more PSA Requests (denoted as PSA Request[1] through PSA Request[N]). An example embodiment of a PSA Request for use in the IPv4 data plane is depicted in FIG. 29.

FIG. 29 depicts an example embodiment of a PSA Request configured for use in supporting PSA distribution through the IPv4 data plane.

As depicted in FIG. 29, the PSA Request 2900 is 8 octets and includes a Reserved field, a Prefix Length (PrefixLen) field, a Limit field, and a Destination Prefix field.

The Reserved field is a 1-octet field which is kept for future use. A sender will set its value as 0 and a receiver will ignore this field.

The Prefix Length field is a 1-octet field that encodes the number of bits in the subnet mask of the Destination Prefix that are set to 1.

The limit field is a 2-octet field that encodes the maximum number of PSAs per destination that can be sent by the receiver of the PSA Request. If the value is 0, then it means no limit.

The Destination Prefix field is a 4-octet IPv4 Prefix that represents the destination. If the value is 0, it means that all known destination prefixes are requested and this should be the only PSA Request in the PSA Request Bundle.

When a router sends a PSA Request Bundle, the router may unicast or multicast the PSA Request. A PSA Request Bundle may be unicast to a specific neighboring router on a link. In that case, the destination address in the IPv4 Header is set to the unicast address of the neighboring router on the link. A PSA Request Bundle may be multicast to all neighboring routers on a link. In that case, destination address in IPv4 Header is set to 224.0.0.2.

When a router receives a PSA Request Bundle on a link, it processes each PSA Request in the PSA Request Bundle.

In a PSA Request in a PSA Request Bundle, if the Destination Prefix is 0.0.0.0, then the router advertises PSAs for all known prefixes on the link. If Limit is non-zero, then the maximum number of PSAs advertised for each prefix is capped to the limit value; otherwise all PSAs for a prefix are advertised on the link.

In a PSA Request in a PSA Request Bundle, if the Destination Prefix is non-zero, then the router advertises PSAs for the prefix on the link. If Limit is non-zero, then the maximum number of PSAs advertised for the prefix is capped to the limit value; otherwise all PSAs for the prefix are advertised on the link.

In the advertised PSAs, the destination address in the IPv4 Header is the address of the neighbor that sent PSA Request. The address of the neighbor is the source address in the IPv4 header of the PSA Request Bundle.

It will be appreciated that, where autonomous path construction and routing is implemented in IPv4 networks, PSA Request bundling in the IPv4 data plane may be performed in various other ways.

In at least some example embodiments, PSA distribution through the IPv4 data plane may include support for notifications of path failures.

The notification of a path failure may be performed as follows. When a link or a node fails then the PSAs that traversed the link or node must be deleted across the network. First, a router adjacent to the failure deletes all the PSAs that traverse the failed link or node (i.e., the first hop in the Path of the PSA). Then, the router notifies the failure across the network. This may be achieved in two ways as follows.

In at least some example embodiments, the notification of the failure across the network may be performed as follows. The router notifies deletion of a PSA on all links where the PSA was advertised earlier. This notification is done by advertising the PSA with empty Path. The advertisement with empty Path gets flooded across the network and each receiving router deletes the corresponding PSA from its forwarding tables.

In at least some example embodiments, the notification of the failure across the network may be performed as follows. A router adjacent to the failure floods LSAs (Sub-Type = 1) for the corresponding failed link(s). This technique may be used for convergence of paths for the failure. When a router receives an LSA for a link failure, the router removes all paths that traversed the failed link. This technique is light weight compared to the first technique discussed above since here only one notification message is generated and flooded by a router adjacent to the failure.

It will be appreciated that, where autonomous path construction and routing is implemented in IPv4 networks, notification of path failures in the IPv4 data plane may be performed in various other ways.

It will be appreciated that, where autonomous path construction and routing is implemented in IP networks, PSA distribution through the IPv4 data plane may be performed in various other ways.

In at least some example embodiments in which autonomous path construction and routing is supported in IP networks, the PSA distribution may be performed through the IPv6 data plane.

In at least some example embodiments, as discussed further below, PSA distribution through the IPv6 data plane may include support for topology discovery, PSA bundling, PSA Acknowledgement bundling, PSA Request bundling, and notifications of path failures.

FIG. 30 depicts an example embodiment of an IPv6 Header configured for use in supporting PSA distribution through the IPv6 data plane.

As depicted in FIG. 30, the IPv6 Header 3000 includes a Version field, a Traffic Class field, a Flow Label field, a Payload Length field, a Next Header field, a Hop Limit field, a Source IPv6 Address field, and a Destination IPv6 Address field. The IPv6 Header 3000 also may include one or more IPv6 Extension Headers (EHs) that can be appended to the main part of the IPv6 Header.

The main IPv6 header remains fixed in size (40 bytes) while customized EHs are added as needed. The EHs provide for control functions needed or useful in some situations, but unnecessary for the most common communications. The EHs include provisions for timestamps, security, and special routing.

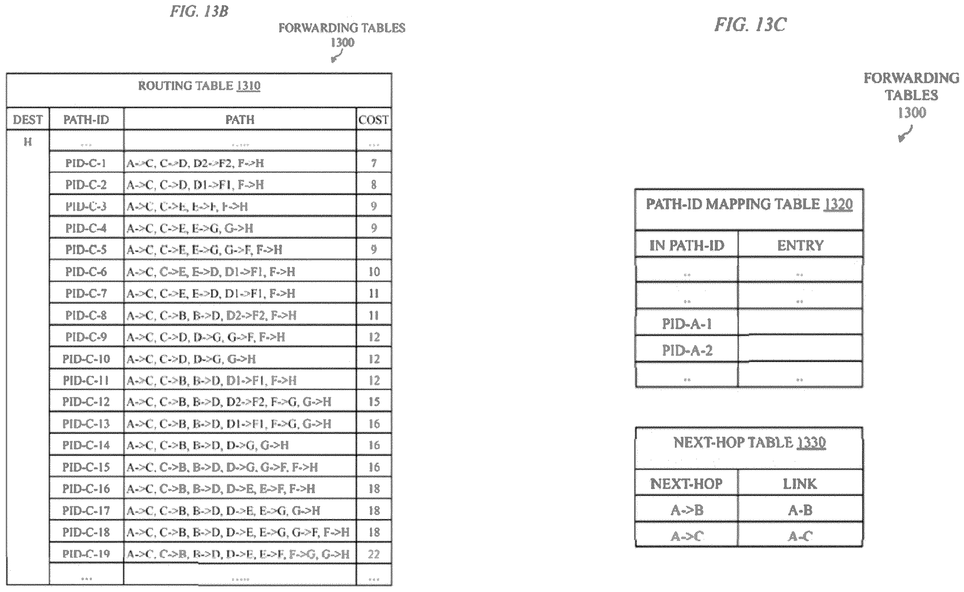

Every EH starts with a 1-octet Next Header field, followed by its own body. The format of the body is dependent on the type of EH. The Next Header field of an EH points to the type of the next EH. So, multiple EHs are chained together by their Next Header fields as shown in figure 13. The Next Header field on the last EH in the chain indicates the type of the IPv6 payload.

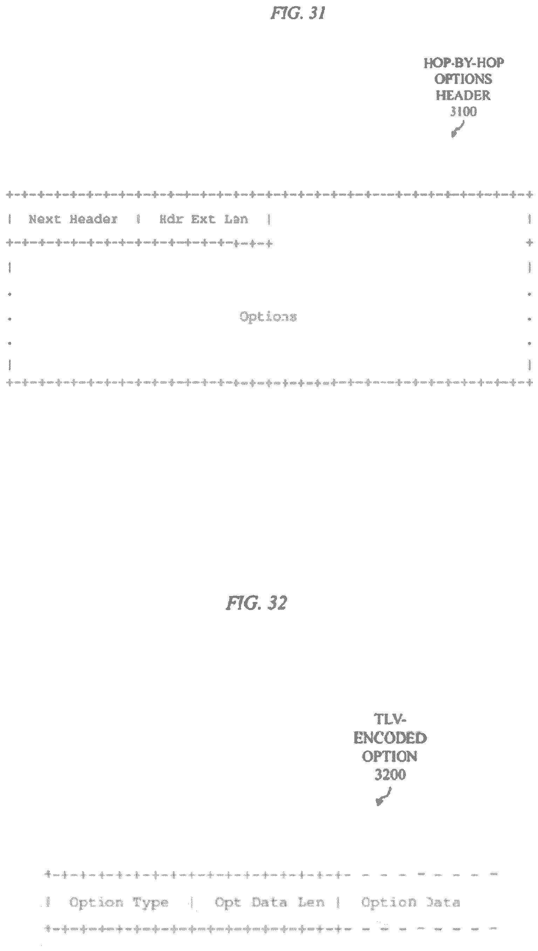

The "Hop-by-Hop Options Header" can be used to carry optional information that will be examined by every router along the delivery path of the packet. It is identified by the value of 0 in the Next Header field of the IPv6 header. This EH is generic and multiple options can be defined within it. So, any special directive to be examined by every transit router of an IPv6 packet is defined as an option within the Hop-by-Hop Options Header. An example embodiment of a Hop-by-Hop Options Header for use in IPv6 is depicted in FIG. 31.

FIG. 31 depicts an example embodiment of a Hop-by-Hop Options Header configured for use in supporting PSA distribution through the IPv6 data plane.

As depicted in FIG. 31, the Hop-by-Hop Options Header 3100 includes a Next Header field, a Header Extension Length (Hdr Ext Len) field, and an Options field. The Next Header field is an 8-bit selector that identifies the type of header immediately following the Hop-by-Hop Options header. The Header Extension Length field is an 8-bit unsigned integer that indicates the length of the Hop-by-Hop Options header in 8-octet units, not including the first 8 octets. The Options field is a variable-length field, of length such that the complete Hop-by-Hop Options header is an integer multiple of 8 octets long. The Options field includes one or more TLV-encoded options. An example embodiment of a TLV-encoded option for use in a Hop-by-Hop Options Header is depicted in FIG. 32.

FIG. 32 depicts an example embodiment of a TLV-encoded option configured for use in a Hop-by-Hop Options Header configured for use in supporting PSA distribution through the IPv6 data plane.

As depicted in FIG. 32, the TLV-encoded option 3200 for the Hop-by-Hop Options Header includes an Option Type field, an Option Data Length (Opt Data Len) field, and an Option Data field. The Option Type field includes an 8-bit identifier of the type of option. The Option Data Length field includes an 8-bit unsigned integer which indicates the length of the Option Data field of the option in octets. The Option Data field is a variable-length field that includes the Option-Type-specific data.

The sequence of options within a header will be processed strictly in the order in which the options appear in the header. A receiver should not, for example, scan through the header looking for a particular kind of option and process that option prior to processing the preceding options.

The Option Type identifiers are internally encoded such that their highest-order two bits specify the action to be taken if the processing IPv6 node does not recognize the Option Type: (a) 00 - skip over this option and continue processing the header, (b) 01 - discard the packet, (c) 10 - discard the packet and, regardless of whether or not the Destination Address of the packet was a multicast address, send an ICMP Parameter Problem, Code 2, message to the Source Address of the packet, pointing to the unrecognized Option Type, (d) 11 - discard the packet and, only if the Destination Address of the packet was not a multicast address, send an ICMP Parameter Problem, Code 2, message to the Source Address of the packet, pointing to the unrecognized Option Type.

The third-highest-order bit of the Option Type specifies whether or not the Option Data of that option can change en-route to the final destination of the packet. When an Authentication header (another type of EH that carries an authentication digest of the packet) is present in the packet, for any option whose data may change en-route, its entire Option Data field must be treated as zero-valued octets when computing or verifying the packet's authenticating digest. The third-highest-order bit of the Option Type may be set as follows: (a) 0 - Option Data does not change en-route and (b) 1 - Option Data may change en-route.

The three high-order bits described above are to be treated as part of the Option Type, not independent of the Option Type. That is, a particular option is identified by a full 8-bit Option Type, not just the low-order 5 bits of an Option Type.

In at least some example embodiments, PSA distribution through the IPv6 data plane may include support for topology discovery.

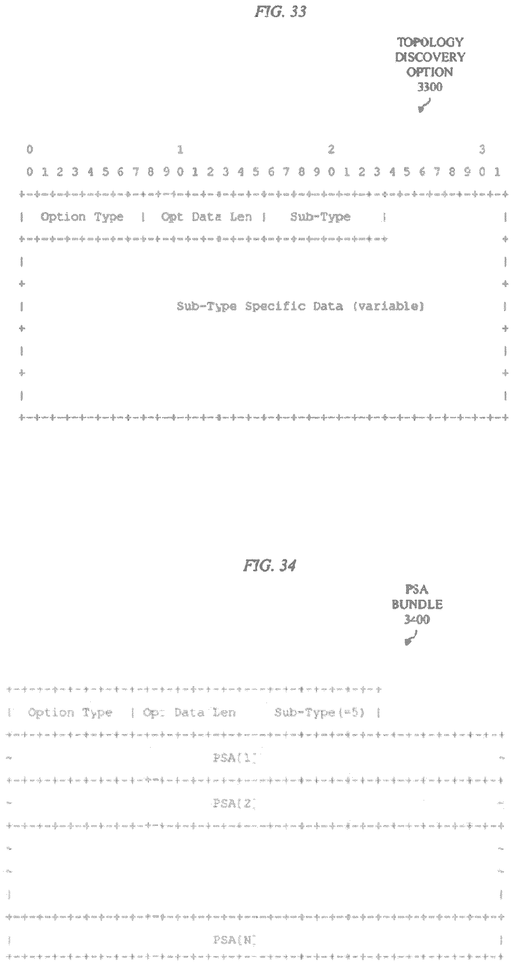

In at least some example embodiments, a new Option Type, referred to as a "Topology Discovery" option is defined for the Hop-by-Hop Options Header. An example embodiment of a Topology Discovery option for use in IPv6 is depicted in FIG. 33.

FIG. 33 depicts an example embodiment of a Topology Discovery Option configured for use in supporting PSA distribution through the IPv6 data plane.

As depicted in FIG. 33, the Topology Discovery Option 3300 includes an Option Type field, an Option Data Length (Opt Data Len) field, a Sub-Type field, and a Sub-Type Specific Data field.

The Option Type field encodes the option type that indicates that the option is a Topology Discovery option. The highest-order 2-bits are encoded with the following value: 10 - discard the packet and, regardless of whether or not the Destination Address of the packet was a multicast address, send an ICMP Parameter Problem, Code 2, message to the Source Address of the packet, pointing to the unrecognized Option Type. The 3^{rd} highest order bit is encoded with the following values depending of the data: (a) 1 - if Option Data may change at every hop/router and (b) 0 - if Option Data does not change at every hop/router. The remaining 5-bits are assigned the value 10011. This results in a value of 0x33 for the Option Type field.

The Option Data Length field indicates the length of the remaining types in the Topology Discovery option.

The Sub-Type field is a 1-octet field that indicates a sub-type. The following sub-types may be defined: (a) Sub-Type 1 = Link State Advertisement (LSA) Bundle, (b) Sub-Type 2 = LSA Acknowledgement/Ack Bundle, (c) Sub-Type 3 = Neighbor Discovery, and (d) Sub-Type 4 = LSA Request Bundle.

The Sub-Type Specific Data field is a variable-sized field that includes data specific to the sub-type.

When a router routes an IPv6 packet that includes a Hop-by-Hop Options Header, the router checks to see if the Topology Discovery option is present within the Header. If the Topology Discovery option is present, then the Topology Discovery Option is processed by the router.

In at least some example embodiments, the following sub-types may be supported: (a) Sub-Type 5 = Path State Advertisement (PSA) Bundle, (b) Sub-Type 6 = PSA Acknowledgement/Ack Bundle, and (c) Sub-Type 7 = PSA Request Bundle. Each of these sub-types is discussed further below.

It will be appreciated that, where autonomous path construction and routing is implemented in IPv6 networks, topology discovery in the IPv6 data plane may be performed in various other ways.

In at least some example embodiments, PSA distribution through the IPv6 data plane may include support for PSA bundling.

In at least some example embodiments, the sub-type of an Hop-by-Hop Options header may indicate a PSA Bundle (Sub-Type 5 = PSA Bundle). A router sends a PSA Bundle to advertise one or more PSAs on a link. An example embodiment of a PSA Bundle for use in IPv6 is depicted in FIG. 34.

FIG. 34 depicts an example embodiment of a PSA Bundle configured to support advertising of one or more PSAs on a link in an IPv6 data plane.

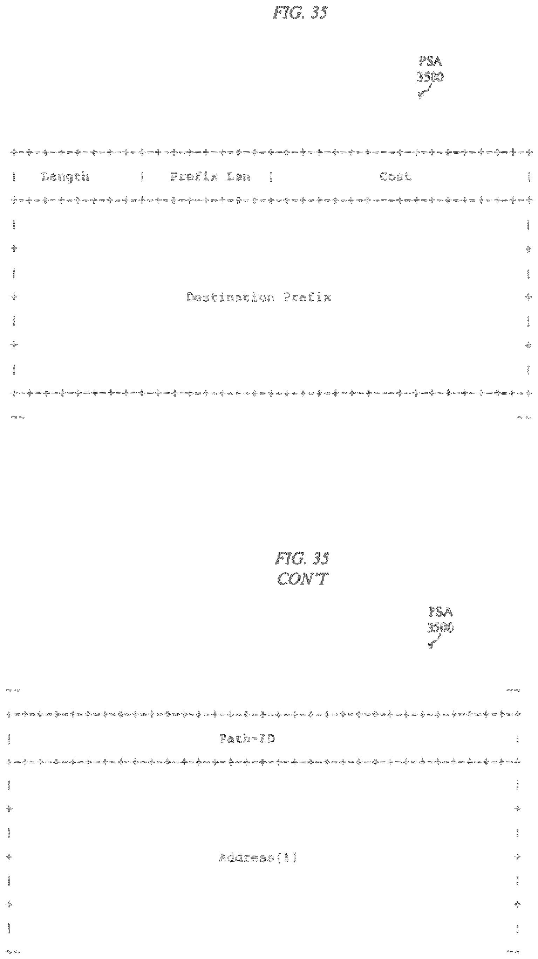

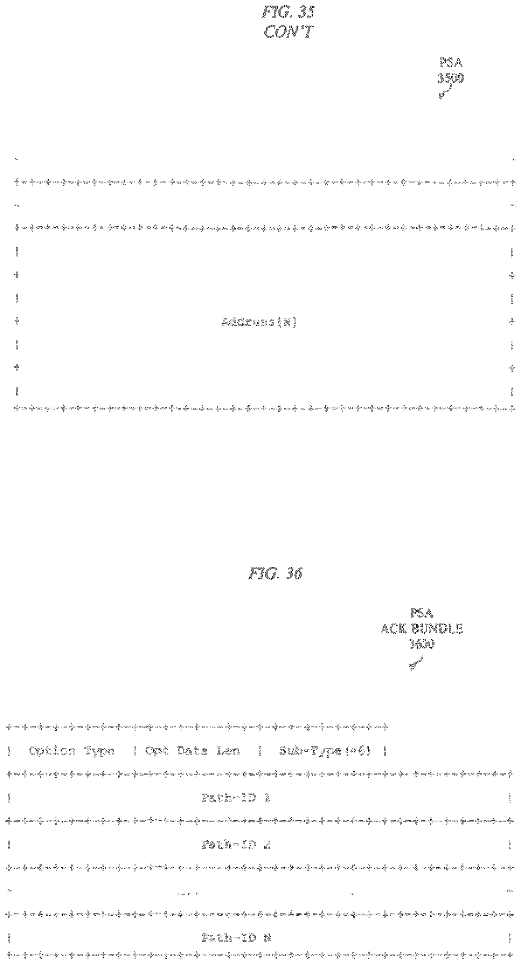

As depicted in FIG. 34, the PSA Bundle 3400 includes an Option Type field, an Option Data Length (Opt Data Len) field, a Sub-Type field (Sub-type=5), and a Data field. When a PSA Bundle is included in a Topology Discovery Option, the 3^{rd} highest order bit in Option Type will be set to 1, since PSAs are updated by every router that re-advertises the PSAs. The Data field of the PSA Bundle includes one or more PSAs (denoted as PSA[1] through PSA[N]). An example embodiment of a PSA for use in IPv6 is depicted in FIG. 35.

FIG. 35 depicts an example embodiment of a PSA configured for use in supporting PSA distribution through the IPv6 data plane.

As depicted in FIG. 35, the PSA 3500 includes a Length field, a Prefix Length (PrefixLen) field, a Cost field, a Destination Prefix field, a Path-ID field, a Path field.

The Length field is 1-octet field that encodes the total number of octets in the PSA, including the Length field itself.

The Prefix Length field is a 1-octet field that encodes the number of bits in the subnet mask of the Destination Prefix that are set to 1.

The Cost field is a 2-octet field that indicates the total cost of all hops in the Path.

The Destination Prefix field is a 16-octet IPv6 Prefix that represents the destination.

The Path-ID field is a 4-octet Path-ID advertised by the first hop in the Path on the receiving link. The Path-ID uniquely identifies a PSA with respect to a neighbor on a link.

The Path field is composed of a series of IPv6 addresses where each address is 128 bits or 16 octets. The series of addresses is the ordered list of hops in the path, in the reverse order. So Address[1] is the last hop in the Path and Address[N] is the first hop in the path.

The originator of PSA starts with the IPv6 address of the link on which the PSA is advertised as the only entry in Path. For unsolicited PSA advertisements on a link (i.e., not explicitly requested by a neighbor on the link), the destination address in the IPv6 header is set to the address for all routers in the IP subnet (on the link). The size of the PSA changes as subsequent routers append link/hop addresses to Path while advertising the PSA.

The receiver of a PSA processes the PSA. The receiver of the PSA may process the PSA using the method 1700 of FIG. 17.

When a router deletes an already advertised PSA, the router sends the PSA with an empty Path, i.e., the PSA is 24-octets in size with only the Length, PrefixLen, Cost, Destination Prefix, and Path-ID fields.

It will be appreciated that, where autonomous path construction and routing is implemented in IPv6 networks, PSA bundling in the IPv6 data plane may be performed in various other ways.

In at least some example embodiments, PSA distribution through the IPv6 data plane may include support for PSA Acknowledgement bundling.

In at least some example embodiments, a router may use the PSA Ack Bundle (= Sub-Type 6) to acknowledge receipt of one or more PSAs to the common first hop in their Paths. An example embodiment of a PSA Ack Bundle for use in IPv6 is depicted in FIG. 36.

FIG. 36 depicts an example embodiment of a PSA Ack Bundle configured to support acknowledgment of one or more PSAs in the IPv6 data plane.

As depicted in FIG. 36, the PSA Ack Bundle 3600 includes the Option Type, Option Data Length, and Sub-Type fields, as well as a data portion. The data portion of the PSA Ack Bundle (Sub-Type 6) includes one or more 4-octet Path-IDs. Each Path-ID encodes the Path-ID of a PSA being acknowledged, respectively. The destination address in the IPv6 Header will be the address of the common first hop in the Paths of the PSAs.

When a router sends a PSA Bundle on a link, the router waits for PSA Acks from each neighbor on each PSA included in the bundle. If a PSA Ack is not received from a neighbor within a stipulated time, then the router resends the PSA.

It will be appreciated that, where autonomous path construction and routing is implemented in IPv6 networks, PSA Acknowledgement bundling in the IPv6 data plane may be performed in various other ways.

In at least some example embodiments, PSA distribution through the IPv6 data plane may include support for PSA request bundling.

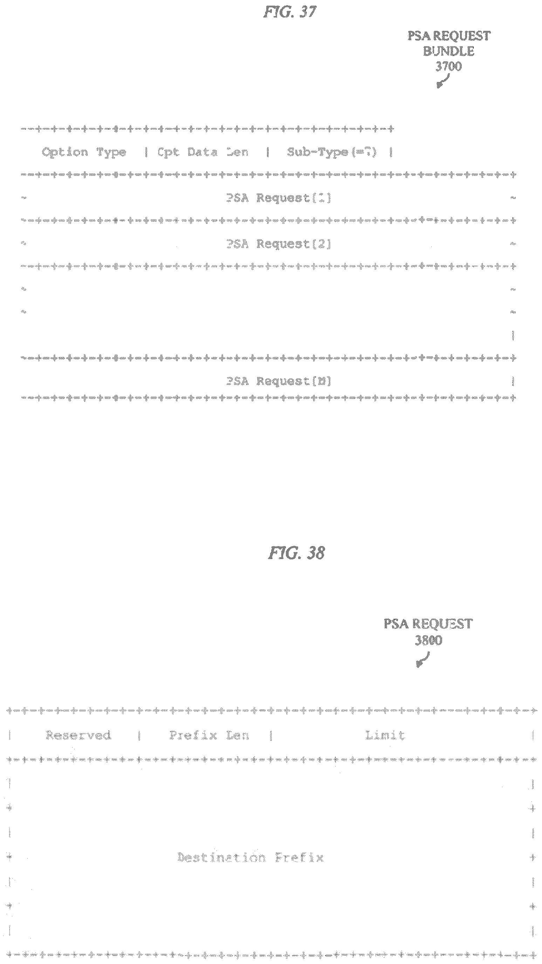

In at least some example embodiments, a router may use the PSA Request Bundle (= Sub-Type 7) to solicit PSAs from a neighboring router. An example embodiment of a PSA Request Bundle for use in IPv6 is depicted in FIG. 37.

FIG. 37 depicts an example embodiment of a PSA Request Bundle configured for use to request PSAs from a neighboring router in the IPv6 data plane.

As depicted in FIG. 37, the PSA Request Bundle 3700 includes the Option Type, Option Data Length (Opt Data Len), and Sub-Type fields, as well as a data portion. The data portion of the PSA Request Bundle (Sub-Type 7) includes one or more PSA Requests (denoted as PSA Request[1] through PSA Request[N]). An example embodiment of a PSA Request for use in IPv6 is depicted in FIG. 38.

FIG. 38 depicts an example embodiment of a PSA Request configured for use in supporting PSA distribution through the IPv6 data plane.

As depicted in FIG. 38, the PSA Request 3800 is 20 octets and includes a Reserved field, a Prefix Length (PrefixLen) field, a Limit field, and a Destination Prefix field.

The Reserved field is 1-octet field which is kept for future use. A sender will set its value as 0 and receiver will ignore this field.

The Prefix Length field is a 1-octet field that encodes the number of bits in the subnet mask of the Destination Prefix that are set to 1.

The Limit field is a 2-octet field that encodes the maximum number of PSAs per destination that can be sent by the receiver of the PSA Request. If value is 0, then it means that there is no limit.

The Destination Prefix field is a 16-octet IPv6 Prefix that represents the destination. If the value is 0, it means that all known destination prefixes are requested and this should be the only PSA Request in the PSA Request Bundle.

When a router sends a PSA Request Bundle, the router may unicast or multicast the PSA Request. The PSA Request Bundle may be unicast to a specific neighboring router on a link. In that case, the destination address in the IPv6 Header is set to the unicast address of the neighboring router on the link. The PSA Request Bundle may be multicast to all neighboring routers on a link. In that case, the destination address in the IPv6 Header is set to "all routers in the subnet."

When a router receives a PSA Request Bundle on a link, it processes each PSA Request in it as follows.

In a PSA Request, if the Destination Prefix field is all zeros, then the router advertises PSAs for all known prefixes on the link. If the Limit is non-zero then the maximum number of PSAs advertised for each prefix is capped to the limit value; otherwise all PSAs for a prefix are advertised on the link.

In a PSA Request, if the Destination Prefix is non-zero, then the router advertises PSAs for the prefix on the link. If the Limit is non-zero then the maximum number of PSAs advertised for the prefix is capped to the limit value; otherwise all PSAs for the prefix are advertised on the link.

In the advertised PSAs, the destination address in the IPv6 Header is the address of the neighbor that sent PSA Request. The address of the neighbor is the source address in the IPv6 header of the PSA Request Bundle.

It will be appreciated that, where autonomous path construction and routing is implemented in IPv6 networks, PSA Request bundling in the IPv6 data plane may be performed in various other ways.

In at least some example embodiments, PSA distribution through the IPv6 data plane may include support for notifications of path failures.

The notification of a path failure may be performed as follows. When a link or a node fails then the PSAs that traversed the link or node must be deleted across the network. First, a router adjacent to the failure deletes all the PSAs that traverse the failed link or node (i.e., the first hop in the Path of the PSA). Then, the router notifies the failure across the network. This may be achieved in two ways as follows.

In at least some example embodiments, the notification of the failure across the network may be performed as follows. The router notifies deletion of a PSA on all links where the PSA was advertised earlier. This notification is done by advertising the PSA with empty Path. The advertisement with empty Path gets flooded across the network and each receiving router deletes the corresponding PSA from its forwarding tables.

In at least some example embodiments, the notification of the failure across the network may be performed as follows. A router adjacent to the failure floods LSAs (Sub-Type = 1) for the corresponding failed link(s). This technique may be used for convergence of paths for the failure. When a router receives an LSA for a link failure, the router removes all paths that traversed the failed link. This technique is light weight compared to the first technique discussed above since here only one notification message is generated and flooded by a router adjacent to the failure.

It will be appreciated that, where autonomous path construction and routing is implemented in IPv6 networks, notification of path failures in the IPv6 data plane may be performed in various other ways.

It will be appreciated that, where autonomous path construction and routing is implemented in IP networks, PSA distribution through the IPv6 data plane may be performed in various other ways.

It will be appreciated that, where autonomous path construction and routing is implemented in IP networks, PSA distribution through the data plane may be performed in various other ways.

In at least some example embodiments in which autonomous path construction and routing is supported in IP networks, the Path-ID may be encoded in data packets. This may be used where the IP data packets are forwarded along a path using Path-ID switching at every hop.

In at least some example embodiments in which autonomous path construction and routing is supported in IP networks, the Path-ID may be encoded in IPv4 data packets.

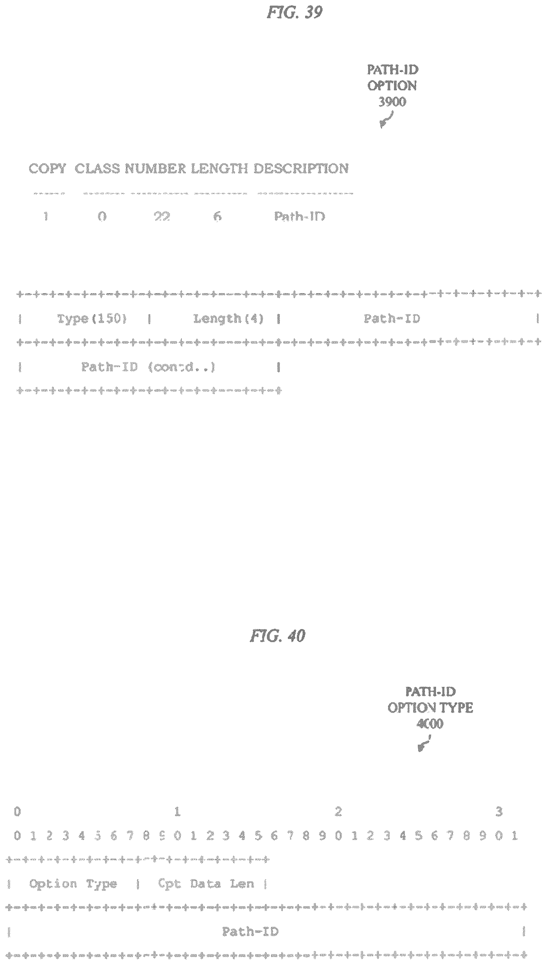

In at least some example embodiments, encoding of the Path-ID in an IPv4 packet sent along a path to the destination may be performed using a newly defined IPv4 Option (which may be referred to as an "Path-ID Option"). An example embodiment of the Path-ID Option is depicted in FIG. 39.

FIG. 39 depicts an example embodiment of a Path-ID Option configured for use in supporting encoding of a Path-ID in IPv4 data packets.

As depicted in FIG. 39, the Path-ID Option 3900 includes a Type field, a Length field, and a Path-ID field. The Type field is a 1-octet field that indicates the Path-ID Option in tuples of COPY, CLASS and NUMBER, which is 150. The Length field is a 1-octet field that indicates the total size of the Type, Length, and Path-ID fields, which is 6 octets. The Path-ID field is a 4-octet field that includes the Path-ID value.

It will be appreciated that, where autonomous path construction and routing is implemented in IP networks, the encoding of Path-ID in IPv4 data packets may be performed in various other ways.

In at least some example embodiments in which autonomous path construction and routing is supported in IP networks, the Path-ID may be encoded in IPv6 data packets.

In at least some example embodiments, encoding of Path-ID in an IPv6 packet sent along a path to the destination may be performed using a newly defined Option Type for the Hop-by-Hop Options Header (where the Option Type may be referred to as a "Path-ID" option). It may be encoded as a Hop-by-Hop option type since the Path-ID needs to be looked up at each hop along the path. An example embodiment of the Path-ID Option Type is depicted in FIG. 40.

FIG. 40 depicts an example embodiment of a Path-ID Option Type configured for use in supporting encoding of a Path-ID in IPv6 data packets.

As depicted in FIG. 40, the Path-ID Option Type 4000 includes an Option Type field, an Option Data Length (Opt Data Len) field, and a Path-ID field.

The Option Type field encodes the option type that indicates it as being a Path-ID option. The highest-order 2-bits are encoded with the following value: 10 - discard the packet and, regardless of whether or not the Destination Address of the packet was a multicast address, send an ICMP Parameter Problem, Code 2, message to the Source Address of the packet, pointing to the unrecognized Option Type. The 3^{rd} highest order bit is encoded with the following because the Path-ID value changes at every hop: 1 - since the Option Data may change at every hop/router. The remaining 5-bits are assigned the value 10012. This results in the value of Option Type field as 0x34.

The Option Data Length field carries the fixed value of 4 since the size of Data (Path-ID) is 4-octets.

The Path-ID field is a 4-octet field that encodes the Path-ID.

It will be appreciated that, where autonomous path construction and routing is implemented in IP networks, the encoding of Path-ID in IPv6 data packets may be performed in various other ways.

It will be appreciated that, where autonomous path construction and routing is implemented in IP networks, encoding of the Path-ID in data packets may be performed in various other ways.

In at least some example embodiments in which autonomous path construction and routing is supported in IP networks, the Path may be encoded in data packets. This may be used where the IP data packets are forwarded along a path based on encoding of the Path within the packet where the Path is defined as {an ordered list of hops along the path, <global-protected-hop>}.

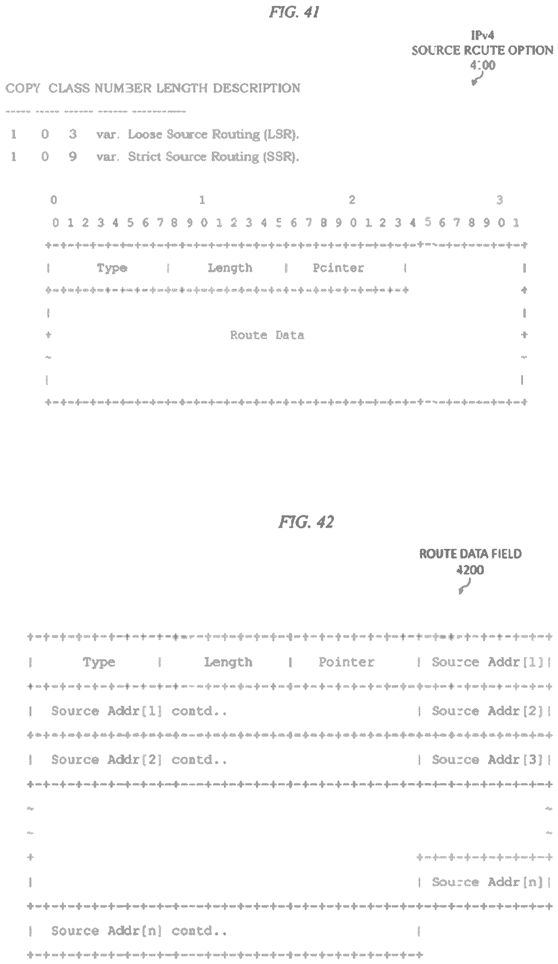

In at least some example embodiments in which autonomous path construction and routing is supported in IP networks, the Path may be encoded in IPv4 data packets. The encoding of a Path in IPv4 data packets may be further understood by considering IPv4 Source Routing options as presented with respect to FIG. 41.

FIG. 41 depicts an example embodiment of an IPv4 Source Routing Option configured for supporting encoding of a Path in IPv4 data packets.

As depicted in FIG. 41, the IPv4 Source Routing Option 4100 supports two types of options which may be used for source routing: a Loose Source Routing (LSR) option and a Strict Source Routing (SSR) option. Both LSR and SSR options provide means for the source of an IPV4 packet to supply routing information to be used by the intermediate routers in forwarding the packet to the destination, and to record the route information.

As depicted in FIG. 41, the IPv4 Source Route Option 4100 includes a Type field, a Length field, a Pointer field, and a Route Data field.

The Type field is a 1-octet field that indicates whether the option is an LSR or SSR type option in tuples of COPY, CLASS and NUMBER.

The Length field is a 1-octet field that indicates the length of this option that includes the Type octet, the Length octet, the Pointer octet, and the octets of Route Data.

The Pointer is a 1-octet field that indicates the octet in Route Data which begins the next source address to be processed by the receiving router. The pointer is relative to this option, and the smallest legal value for the Pointer is 4, which points to the first IPV4 source address in the Route Data field.

The Route Data field is composed of a series of IPv4 addresses where each address is a 4-octet Source Address (denoted as Source Addr[1] through Source Addr[n]). An example embodiment of a Route Data field configured for use in the IPv4 Source Route Option is depicted in FIG. 42.

FIG. 42 depicts an example embodiment of a Route Data field configured for use in an IPv4 Source Route Option configured for supporting encoding of a Path in IPv4 data packets.

As depicted in FIG. 42, the Route Data field 4200 includes a Type field, a Length field, a Pointer field, and a Source Address field including a series of source addresses (denoted as Source Addr[1] through Source Addr[n]).

If the Pointer is greater than the Length, the source route is considered as empty (and the recorded route is full) and the routing is to be based on the Destination Address field in the IPv4 Header.

If the address in Destination Address field has been reached and the Pointer is not greater than the Length, the next address in the source route replaces the address in the Destination Address field, the recorded route address replaces the source address just used, and the Pointer is increased by four. Thus, the packet gets forwarded along each hop specified in the Route Data.

In at least some example embodiments, the LSR/SSR options may be used to encode the Path into an IPv4 packet. The final destination address is encoded as the last address (i.e., Source Addr[n] in FIG. 42) in the LSR/SSR option, which is also the global-protected-hop. In order to perform a FRR, a router needs to parse the global-protected-hop from the last address in the LSR/SSR option.

It will be appreciated that, where autonomous path construction and routing is implemented in IP networks, the encoding of the Path in IPv4 data packets may be performed in various other ways.

In at least some example embodiments in which autonomous path construction and routing is supported in IP networks, the Path may be encoded in IPv6 data packets.

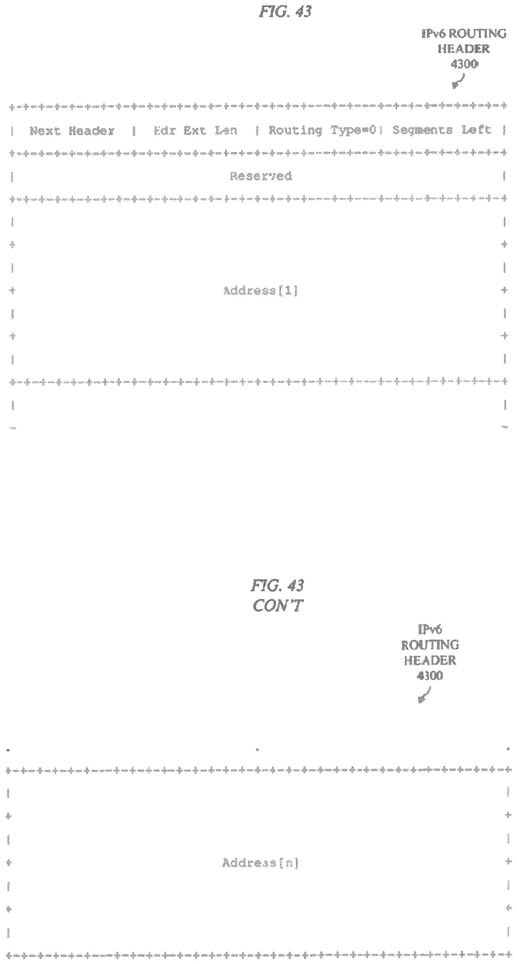

In at least some example embodiments, the encoding of the Path in IPv6 data packets may be based on IPv6 Routing Headers. The IPv6 specification defined an EH Type 0, referred to as a Routing Header, which is used for source routing in IPv6. The encoding of a Path in IPv6 data packets may be further understood by considering the format of the IPv6 Routing Header as presented with respect to FIG. 43.

FIG. 43 depicts an example embodiment of an IPv6 Routing Header configured for supporting encoding of a Path in IPv6 data packets.

As depicted in FIG. 43, the IPv6 Routing Header includes a Next Header field, a Header Extension Length (Hdr Ext Len) field, a Routing Type field, a Segments Left field, a Reserved field, and an Address List field (denoted as Address[1...n]).

The Next Header field is an 8-bit selector that identifies the type of header immediately following the Routing header. This field uses the same values as the IPv4 Protocol field (e.g., RFC 1700).

The Header Extension Length field is an 8-bit unsigned integer that indicates the length of the Routing Header in 8-octet units, not including the first 8 octets. For the Type 0 Routing header, the Header Extension Length is equal to two times the number of addresses in the header.

The Routing Type field is an 8-bit field that encodes the routing type. Here, the Routing Type field is set to zero (0).

The Segments Left field is an 8-bit unsigned integer that indicates the number of route segments remaining, i.e., the number of explicitly listed intermediate nodes still to be visited before reaching the final destination.

The Reserved field is a 32-bit field that is initialized to zero for transmission and ignored on reception.

The Address List field (Address[1..n]) is a vector of 128-bit addresses, numbered 1 to n.

If Segments Left is 0, the source route is considered as empty (and the recorded route is full) and the routing is to be based on the Destination Address field in IPV6 Header.

If the address in the Destination Address field has been reached and the Segments Left is not 0, the next address in the source route (= Address [n-Segments_Left + 1]) replaces the address in the Destination Address field, the replaced Destination Address is recorded in Address[n-Segments_Left + 1], and Segments _Left is decremented by 1. Thus, the packet gets forwarded along each hop specified in the Address[] vector.

In at least some example embodiments, the Routing Header may be used to encode the Path into an IPv6 packet. The final destination address is encoded as the last address (i.e., Address[n] in FIG. 43) in the Routing Header, which is also the global-protected-hop. In order to perform a FRR, a router needs to parse the global-protected-hop from the last address in the option.

It will be appreciated that, where autonomous path construction and routing is implemented in IP networks, the encoding of the Path in IPv6 data packets may be performed in various other ways.

It will be appreciated that, where autonomous path construction and routing is implemented in IP networks, encoding of the Path in data packets may be performed in various other ways.

Various example embodiments for supporting autonomous path construction and routing in IP networks may be configured to support various other functions for supporting autonomous path construction and routing in IP networks.

Various example embodiments presented herein, as indicated above, may be configured to support autonomous path construction and routing in Ethernet networks.

In at least some example embodiments in which autonomous path construction and routing is supported in Ethernet networks, the PSA distribution may be performed through the control plane.

In at least some example embodiments, Ethernet control plane protocols may be enhanced for path construction by distribution of PSAs across an Ethernet network.

In at least some example embodiments IS-IS, which is an Ethernet control plane protocol for Shortest Path Bridging (SPB), may be adapted to support path construction and PSA distribution.

In at least some example embodiments, as discussed further below, PSA distribution through the Ethernet control plane using IS-IS may include support for PSA distribution, PSA Acknowledgement distribution, PSA Request distribution, and notifications of path failures.

In at least some example embodiments, PSA distribution through the Ethernet control plane using IS-IS may be supported as follows.

In at least some example embodiments, a PSA may encode at least the following fields: a Destination field, a Path field, a Cost field, and a Path-ID field.

The Destination field of the PSA encodes a MAC address that represents a destination of the path.

The Path field of the PSA encodes an ordered list of hops, where each hop is a MAC address or a VLAN Identifier (VID). For example, a hop is a MAC address configured on one end of a link. Assume that in the link X-Y, the MAC addresses of the link at X's end and Y's end are M1 and M2 respectively. Then, in a Path, hop X->Y is represented as M2 and hop Y->X is represented as M1. Alternately, a hop may be assigned a unique VID as its identifier.

The Cost field of the PSA encodes the sum of the costs of the hops in the Path of the Path field.

The Path-ID field of the PSA encodes the Path-ID assigned by the bridge that advertises a PSA.

It is noted that multiple PSAs may be bundled into a single IS-IS message.

It is noted that PSAs advertised on a link will be broadcast on a link with destination address in Ethernet Header as a broadcast MAC address.

It will be appreciated that, where autonomous path construction and routing is implemented in Ethernet networks, support for PSA distribution in the Ethernet control plane using IS-IS may be performed in various other ways.

In at least some example embodiments, PSA distribution through the Ethernet control plane using IS-IS may include support for distribution of PSA Acknowledgments.

In at least some example embodiments, since IS-IS does not operate atop a reliable transport protocol (e.g., TCP), IS-IS will need to build reliable delivery of PSAs over the links.

In at least some example embodiments, the reliable delivery of PSAs may be implemented through an acknowledgement-based mechanism. Each PSA may be acknowledged by the receiver with a PSA Acknowledgement (PSA Ack), where the PSA being acknowledged is indicated by its Path-ID. If a PSA is not acknowledged within a stipulated time then sender of the PSA may retransmit. Multiple PSA acknowledgements may be bundled in a single protocol message.

It will be appreciated that, where autonomous path construction and routing is implemented in Ethernet networks, support for PSA Acknowledgment distribution in the Ethernet control plane using IS-IS may be performed in various other ways.

In at least some example embodiments, PSA distribution through the Ethernet control plane using IS-IS may include support for distribution of PSA Requests.

In at least some example embodiments, a router may use the PSA Request to solicit PSAs from a neighboring router. The PSA Request may include at least the following fields: a Destination field and a Limit field.

The Destination field specifies the MAC address for which PSAs are requested. If the field is set to a value of 0 then it means that all PSAs known by the neighboring bridge are being solicited.

The Limit field specifies the maximum number of PSAs per destination that can be sent by the neighbor in response to the PSA Request.

The PSA Request may be broadcast on a link.

It will be appreciated that, where autonomous path construction and routing is implemented in Ethernet networks, support for PSA Request distribution in the Ethernet control plane using IS-IS may be performed in various other ways.

In at least some example embodiments, PSA distribution through the Ethernet control plane using IS-IS may include support for notification of path failures.

In general, when a link or a node fails, then routers encountering the failure flood LSAs for the corresponding failed link(s). This technique may be used by various example embodiments herein for convergence of paths for the failure. Namely, when a router receives an LSA on a link failure, it removes all paths that traversed the failed link.

It will be appreciated that, where autonomous path construction and routing is implemented in Ethernet networks, support for notification of path failures in the Ethernet control plane using IS-IS may be performed in various other ways.

It will be appreciated that, where autonomous path construction and routing is implemented in Ethernet networks, PSA distribution through the Ethernet control plane using IS-IS may be performed in various other ways.

In at least some example embodiments in which autonomous path construction and routing is supported in Ethernet networks, the PSA distribution may be performed through the data plane.

In at least some example embodiments, as discussed further below, PSA distribution through the Ethernet data plane may include support for topology discovery, PSA bundling, PSA Acknowledgement bundling, PSA Request bundling, and notifications of path failures.

It will be appreciated that use of PSA distribution through the Ethernet data plane for path construction and PSA distribution eliminates the need for use of any control plane protocol (e.g., IS-IS) for path construction and PSA distribution.

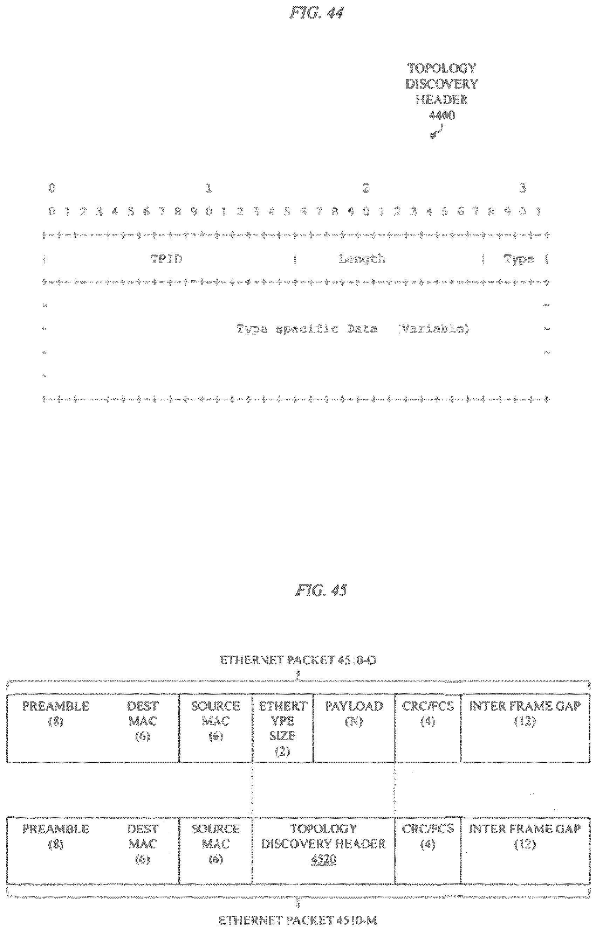

In at least some example embodiments, topology discovery using the data plane may be based on use of a Topology Discovery Header as an extension to the Ethernet Header. An example embodiment of a Topology Discovery Header is depicted in FIG. 44.

FIG. 44 depicts an example embodiment of a Topology Discovery Header configured to support topology discovery in the Ethernet data plane.

As depicted in FIG. 44, the Topology Discovery Header 4400 includes a Tag Protocol Identifier (TPID) field, a Length field, a Type field, and a Type-Specific Data field.

The Tag Protocol Identifier (TPID) field is a 16-bit field set to a value in order to identify that the packet carries a Topology Discovery Header. This field is located at the same position as the EtherType field in untagged frames and, thus, is used to distinguish the frame from untagged frames. It will be appreciated that any value currently available in the IEEE 802 Numbers registry in IANA (e.g., 0xB002 or any other suitable value) may be used to indicate the presence of a Topology Discovery Header.

The Length field is a 12-bit field that indicates the length of the header in number of octets, excluding the first 4-octets.

The Type field is a 4-bit field that encodes the type of topology information included in the Topology Discovery Header. The following types may be supported: (1) Type 1 = Link State Advertisement (LSA) Bundle, (b) Type 2 = LSA Acknowledgement/Ack Bundle, (c) Type 3 = Neighbor Discovery, and (d) Type 4 = LSA Request Bundle.

The Type-Specific Data field is a variable-length field that includes Type-specific information.

In at least some example embodiments, the Topology Discovery Header may be inserted after the Ethernet Header, without any Ethertype field or Payload field being present after the Topology Discovery Header. An example embodiment for insertion of the Topology Discovery Header after the Ethernet Header is depicted in FIG. 45.

FIG. 45 depicts an example embodiment for insertion of a Topology Discovery Header within an untagged Ethernet packet for supporting topology discovery in the Ethernet data plane.

As depicted in FIG. 45, an Ethernet packet 4510 is modified by inserting the Topology Discovery Header 4520 after the Ethernet header that includes the Destination and Source MAC Addresses. The Ethernet packet 4510-O is the original Ethernet packet and the Ethernet packet 4510-M illustrates modification of the original Ethernet packet to include the Topology Discovery Header 4520.

As depicted in FIG. 45, since the TPID in Topology Discovery Header now takes the position of Ethertype field, the TPID indicates that a Topology Discovery Header is present. It is noted that no header, such as an 802. 1Q header, should be present after the Ethernet Header other than the Topology Discovery Header. The Topology Discovery Header is part of the Ethernet layer, similar to how the 802. 1Q header and other headers are considered to be part of the Ethernet Layer.

In at least some example embodiments, a special destination MAC address is encoded in the Ethernet Header to indicate that the Ethernet Header carries Topology Discovery Header. This address is referred to herein as a "Topology Discovery Address". When a bridge receives an Ethernet packet in which the DMAC is the Topology Discovery Address, the bridge processes the Topology Header. The source MAC address will be the address on the link at the sender.

In at least some example embodiments, the following new Types may be supported for the Topology Discovery Header: (a) Type 5 = Path State Advertisement (PSA) Bundle, (b) Type 6 = PSA Acknowledgement/Ack Bundle, and (c) Type 7 = PSA Request Bundle.

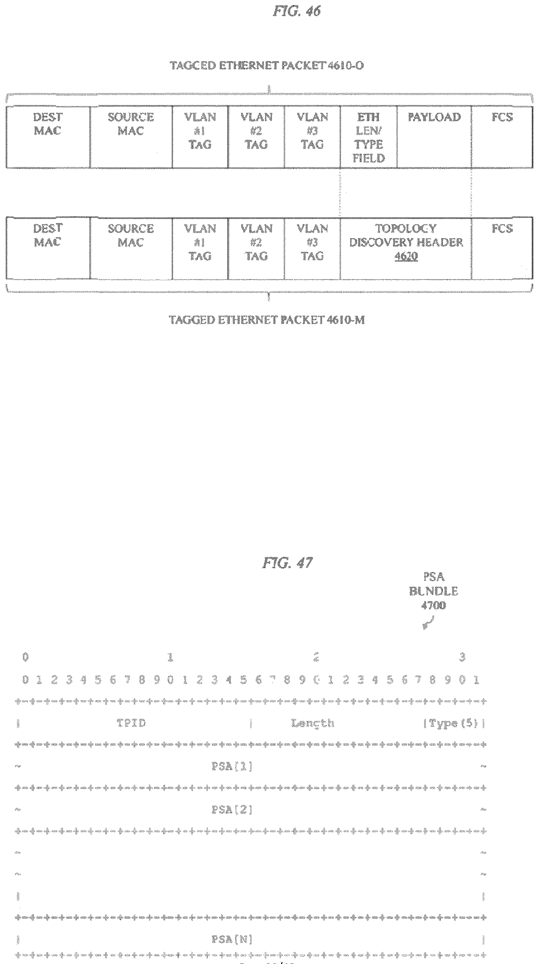

In at least some example embodiments, these new Types (namely, Typs 5-7) may be sent within the context of an Ethernet network domain such as VLAN. In that case, the Topology Discovery Header is inserted after the VLAN tag (802.1Q header). The VLAN for which PSAs are exchanged may be transported over other VLANs (e.g., Q-in-Q) and, in that case, there could be multiple 802.1Q tags preceding the Topology Discovery Header. An example embodiment for insertion of the Topology Discovery Header into a tagged Ethernet packet is depicted in FIG. 46.

FIG. 46 depicts an example embodiment for insertion of a Topology Discovery Header within a tagged Ethernet packet for supporting topology discovery in the Ethernet data plane.

As depicted in FIG. 46, a tagged Ethernet packet 4610 is modified by inserting the Topology Discovery Header 4520 after the tags of the Ethernet header. The tagged Ethernet packet 4610-O is the original tagged Ethernet packet and the tagged Ethernet packet 4610-M illustrates modification of the original tagged Ethernet packet to include the Topology Discovery Header 4620.

In at least some example embodiments, PSA distribution through the Ethernet data plane may include support for PSA bundling.

In at least some example embodiments, a bridge sends a PSA Bundle (Type 5) to advertise one or more PSAs on a link. An example embodiment of a PSA Bundle for use in Ethernet is depicted in FIG. 47.

FIG. 47 depicts an example embodiment of a PSA Bundle configured to support advertising of one or more PSAs on a link in an Ethernet data plane.

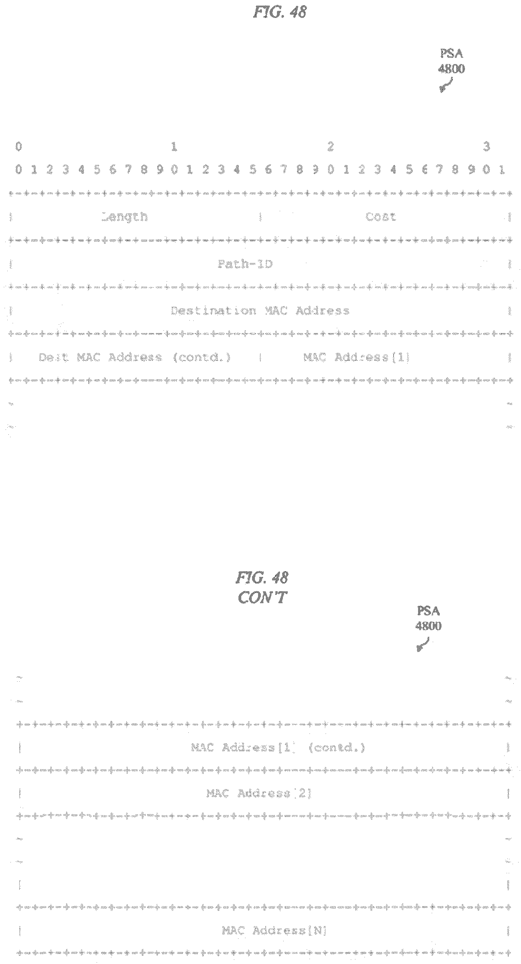

As depicted in FIG. 47, the PSA Bundle 4700 includes the TPID field, the Length field, and the Type field (Type 5), as well as a data portion. The data portion of the PSA Bundle (Type 5) includes one or more PSAs (denoted as PSA[1] through PSA[N]). An example embodiment of a PSA for use in the Ethernet data plane is depicted in FIG. 48.

FIG. 48 depicts an example embodiment of a PSA configured for use in supporting PSA distribution through the Ethernet data plane.

As depicted in FIG. 48, the PSA 4800 includes a Length field, a Cost field, a Path-ID field, a Destination MAC address field, and a Path field that encodes a set of one or more MAC Address fields (denoted as MAC Address [1] through MAC Address [N]) of the path.

The Length field is a 1-octet field that encodes the total number of octets in the PSA, including the Length field itself.

The Cost field is a 2-octet field that indicates the total cost of all hops in the Path.

The Path-ID field is a 4-octet Path-ID advertised by the neighboring bridge on the received link. The Path-ID uniquely identifies a PSA with respect to a neighbor on a link.

The Destination MAC Address field is a 6-octet field that encodes the MAC address that represents the destination.

The Path field is composed of a series of one or more MAC addresses. The series of MAC addresses is the ordered list of hops in the path, in the reverse order. So MAC Address[1] is the last hop in the Path and MAC Address[N] is the first hop in the path.

The originator of PSA starts with an empty Path. When a bridge receives a PSA, the PSA is processed as per the method in FIG. 17. When a bridge deletes an already advertised PSA, the bridge sends the PSA with the Length, Cost, and Path-ID fields, with the Cost being set to zero. The PSA deletion is advertised on all links where the PSA was previously advertised.

It will be appreciated that, where autonomous path construction and routing is implemented in Ethernet networks, PSA bundling in the Ethernet data plane may be performed in various other ways.

In at least some example embodiments, PSA distribution through the Ethernet data plane may include support for PSA Acknowledgement bundling.

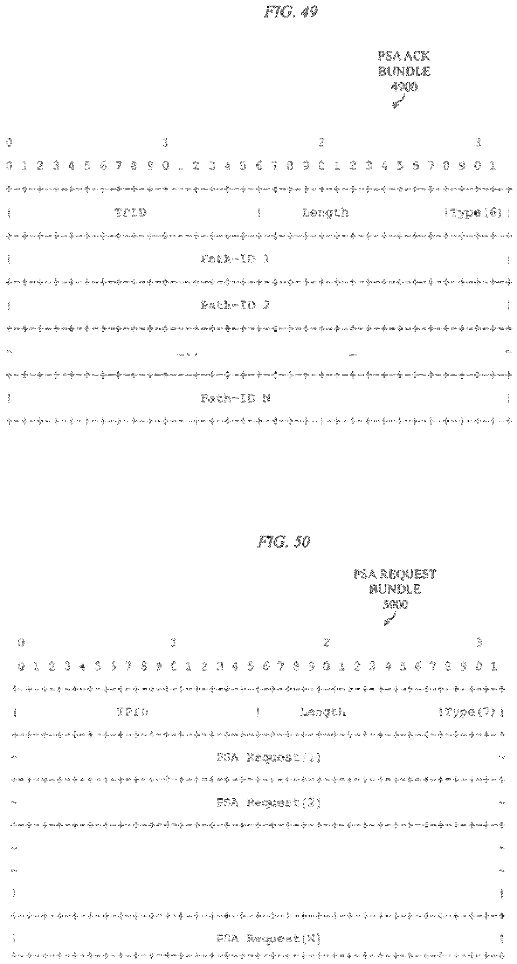

In at least some example embodiments, a bridge sends a PSA Acknowledgment Bundle (Type 6) to acknowledge receipt of one or more PSAs to the neighbor on a link. An example embodiment of a PSA Ack Bundle for use in the Ethernet data plane is depicted in FIG. 49.

FIG. 49 depicts an example embodiment of a PSA Ack Bundle configured to support acknowledgment of one or more PSAs in the Ethernet data plane.

As depicted in FIG. 49, the PSA Acknowledgment Bundle 4900 includes the TPID field, the Length field, and the Type field (Type 6), as well as a data portion. The data portion of the PSA Acknowledgement Bundle (Type 6) includes one or more Path-IDs (denoted as Path-ID 1 through Path-ID N). Each Path-ID encodes the Path-ID of a PSA being acknowledged.

When a bridge sends a PSA Bundle on a link, it waits for PSA Acknowledgements from the neighboring bridge on each PSA included in the bundle. If a PSA Acknowledgement is not received from a neighbor within a stipulated time, then the router resends the PSA.

It will be appreciated that, where autonomous path construction and routing is implemented in Ethernet networks, PSA Acknowledgment bundling in the Ethernet data plane may be performed in various other ways.

In at least some example embodiments, PSA distribution through the Ethernet data plane may include support for PSA Request bundling.

In at least some example embodiments, a bridge sends a PSA Request Bundle (Type 7) to solicit PSAs from a neighboring bridge. The example embodiment of a PSA Request Bundle for use in the Ethernet data plane is depicted in FIG. 50.

FIG. 50 depicts an example embodiment of a PSA Request Bundle configured for use to request PSAs from a neighboring router in the Ethernet data plane.

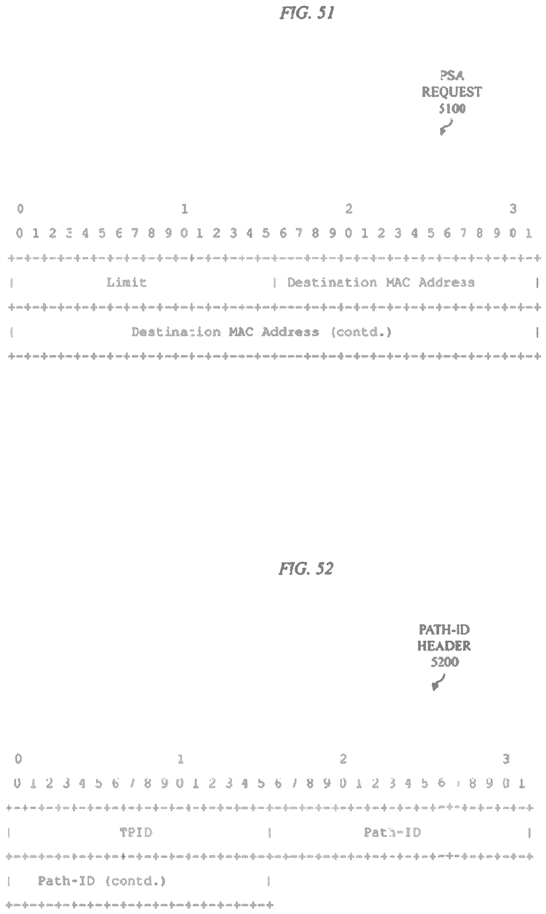

As depicted in FIG. 50, the PSA Request Bundle 5000 includes the TPID field, the Length field, and the Type field (Type 7), as well as a data portion. The data portion of the PSA Request Bundle (Type 7) includes one or more PSA Requests (denoted as PSA Request[1] through PSA Request[N]). An example embodiment of a PSA Request for use in the Ethernet data plane is depicted in FIG. 51.

FIG. 51 depicts an example embodiment of a PSA Request configured for use in supporting PSA distribution through the Ethernet data plane;

As depicted in FIG. 51, the PSA Request 5100 includes a Limit field and a Destination MAC Address field.

The Limit field is a 2-octet field that encodes the maximum number of PSAs per destination that can be sent by the receiver of PSA Request. If the value is 0, then it means that there is no limit.

The Destination MAC address specifies a 6-octet MAC address that represents the destination. If the value is 0, it means that all known destination MAC addresses are requested and this should be the only PSA Request in the PSA Request Bundle.

When a router receives a PSA Request Bundle on a link, it processes each PSA Request in the PSA Request Bundle. The processing of a PSA Request depends on whether the Destination MAC Address in the PSA Request is all zeros or is non-zero.

In a PSA Request, if the Destination MAC Address is all zeros, then the router advertises PSAs for all known MAC addresses on the link. If Limit is non-zero then the maximum number of PSAs advertised for each MAC address is capped to the limit value; otherwise, all PSAs for a MAC address are advertised on the link.

In a PSA Request, if the Destination MAC address is non-zero, then the router advertises PSAs for the MAC address on the link. If Limit is non-zero then the maximum number of PSAs advertised for the MAC address is capped to the limit value; otherwise all PSAs for the MAC address are advertised on the link.

It will be appreciated that, where autonomous path construction and routing is implemented in Ethernet networks, PSA Request bundling in the Ethernet data plane may be performed in various other ways.

In at least some example embodiments, PSA distribution through the Ethernet data plane may include support for notification of path failures.

When a link or a node fails then the PSAs that traverse the link or node will be deleted across the network. First, a bridge adjacent to the failure deletes all the PSAs that traverse the failed link or bridge. Then, the bridge notifies the failure across the network. The notification of the failure across the network may be achieved in two ways as follows.

In at least some example embodiments (referred to herein as the first option), the notification of the failure across the network may be achieved as follows. The bridge notifies deletion of a PSA on all links where the PSA was advertised earlier. This notification is done by advertising the PSA with only the Length, Cost, and Path-ID fields. The notification gets flooded across the network and each receiving bridge deletes the corresponding PSA from its forwarding tables.

In at least some example embodiments (referred to herein as the second option), the notification of the failure across the network may be achieved as follows. A bridge adjacent to the failure floods LSAs (Type = 1) for the corresponding failed link(s). This technique may be used for convergence of paths for the failure. When a bridge receives an LSA on a link failure, the bridge removes all paths that traversed the failed link. This technique is light weight compared to the first option, since here only one notification message is generated and flooded by a bridge adjacent to the failure.

It will be appreciated that, where autonomous path construction and routing is implemented in Ethernet networks, notification of path failures in the Ethernet data plane may be performed in various other ways.

It will be appreciated that, where autonomous path construction and routing is implemented in Ethernet networks, PSA distribution through the data plane may be performed in various other ways.

In at least some example embodiments in which autonomous path construction and routing is supported in Ethernet networks, the Path-ID may be encoded in Ethernet data packets.

In at least some example embodiments, in order to encode a Path-ID into an Ethernet packet, a Path-ID Header is encoded into an Ethernet packet. An example embodiment of a Path-ID Header is depicted in FIG. 52.

FIG. 52 depicts an example embodiment of a Path-ID Header configured for supporting encoding of a Path-ID in Ethernet packets.

As depicted in FIG. 52, the Path-ID Header 5200 includes a Tag Protocol Identifier (TPID) field and a Path-ID field.

The Tag Protocol Identifier (TPID) field is a 16-bit field set to a value in order to identify that the packet carried a Path-ID Header. This field is located at the same position as the EtherType field in untagged frames and, thus, is used to distinguish the frame from untagged frames. It will be appreciated that any value currently available in the IEEE 802 Numbers registry in IANA (e.g., 0xB003 or any other suitable value) may be used to indicate the presence of a Path-ID Header.

The Path-ID field is a 4-octet field that encodes the Path-ID.

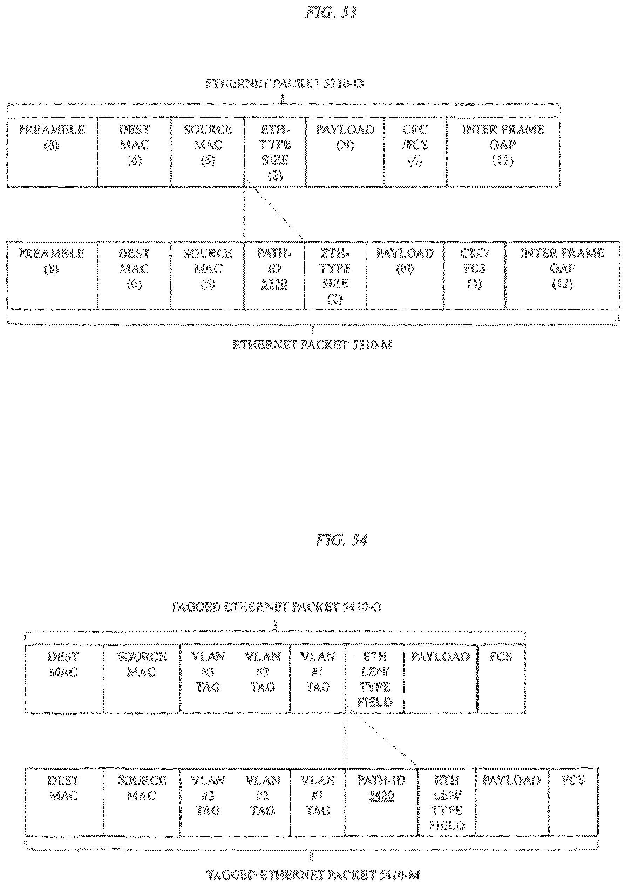

In at least some example embodiments, the Path-ID Header may be inserted into an untagged Ethernet packet (e.g., no VLAN tag or other extra headers after the Ethernet header). An example embodiment illustrating insertion of a Path-ID into an untagged Ethernet packet is depicted in FIG. 53.

FIG. 53 depicts an example embodiment for insertion of a Path-ID within an untagged Ethernet packet.

As depicted in FIG. 53, an Ethernet packet 5310 is modified by inserting the Path-ID 5320 between the Source MAC Address field and the Ethertype field. The Ethernet packet 5310-0 is the original Ethernet packet and the Ethernet packet 5310-M illustrates modification of the original Ethernet packet to include the Path-ID Header which is denoted as Path-ID 5320.

It is noted that, when the Path-ID Header is inserted into an untagged Ethernet packet, since the TPID in the Path-ID Header now takes the position of Ethertype field, the TPID indicates that a Path-ID Header is present. The erstwhile Ethertype field of the Ethernet Header that determines the payload type of the Ethernet packet now moves after the Path-ID Header.

In at least some example embodiments, the Path-ID Header may be inserted into tagged Ethernet packets (e.g., an 802.1Q header that identifies the VLAN to which the packet and Path-ID belong). An example embodiment illustrating insertion of a Path-ID into a tagged Ethernet packet is depicted in FIG. 54.

FIG. 54 depicts an example embodiment for insertion of a Path-ID within a tagged Ethernet packet.

As depicted in FIG. 54, a tagged Ethernet packet 5410 is modified by inserting the Path-ID 5420 between the stack of VLAN tags and the Ethernet Len/Type field. The tagged Ethernet packet 5410-0 is the original tagged Ethernet packet and the tagged Ethernet packet 5410-M illustrates modification of the original tagged Ethernet packet to include the Path-ID Header which is denoted as Path-ID 5420. Here, the Path-ID is applicable to the VLAN #1 Tag.

It is noted that, when the Path-ID Header is inserted into a tagged Ethernet packet, the destination MAC address in the Ethernet Header will be encoded with the next-hop MAC address of the path.

It is further noted that, when the Path-ID Header is inserted into a tagged Ethernet packet, when a bridge receives an Ethernet packet with the destination MAC address as a local MAC address then the bridge will look for the presence of a Path-ID Header. If a Path-ID Header is present then the bridge will process the packet, e.g., by looking up the Path-ID mapping table for the Path-ID and performing the associated action (e.g., based on the method in FIG. 21).

It will be appreciated that, where autonomous path construction and routing is implemented in Ethernet networks, the encoding of Path-ID in Ethernet data packets may be performed in various other ways.

In at least some example embodiments in which autonomous path construction and routing is supported in Ethernet networks, the Path may be encoded in Ethernet data packets.

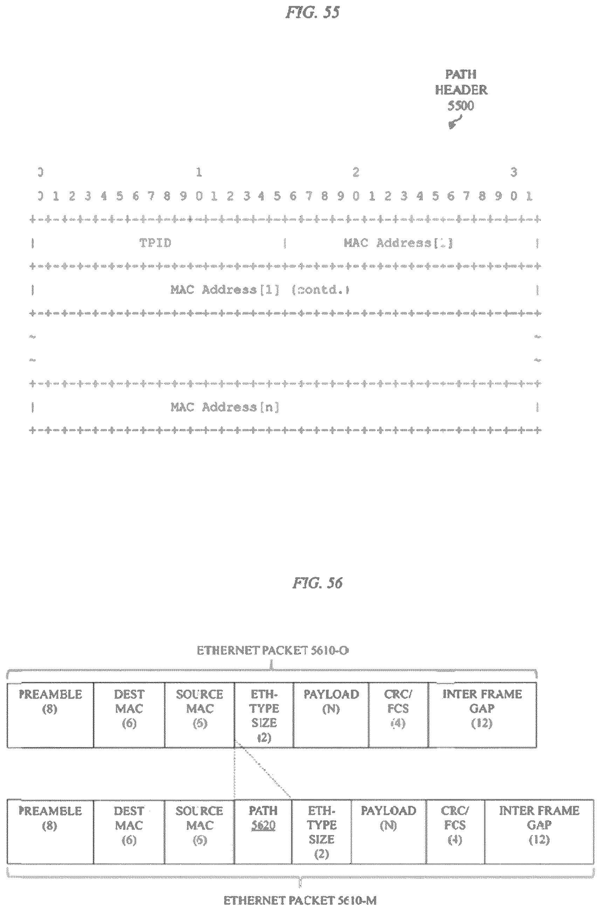

In at least some example embodiments, a Path may be encoded into an Ethernet packet based on encoding of a Path Header into the Ethernet packet. An example embodiment of a Path Header is depicted in FIG. 55.

FIG. 55 depicts an example embodiment of a Path Header configured for supporting encoding of a Path-ID in Ethernet packets.

As depicted in FIG. 55, the Path Header 5500 includes a Tag Protocol Identifier (TPID) field and a set of one or more MAC Address fields (denoted as MAC Address [1] through MAC Address [n]).

The Tag Protocol Identifier (TPID) field is a 16-bit field set to a value that indicates that the Ethernet packet includes a Path Header. This field is located at the same position as the EtherType field in untagged frames and, thus, is used to distinguish the frame from untagged frames. It will be appreciated that any value currently available in the IEEE 802 Numbers registry in IANA (e.g., 0xB004 or any other suitable value) may be used to indicate the presence of a Path Header.

The set of one or more MAC Address fields (denoted as MAC Address[1] to MAC Address[n]) includes an ordered list of hops in the path, where each hop is encoded by the MAC address that represents the hop.

In at least some example embodiments, the Path Header may be inserted into an untagged Ethernet packet (e.g., no VLAN tag or other extra headers after the Ethernet header). An example embodiment illustrating insertion of a Path into an untagged Ethernet packet is depicted in FIG. 56.

FIG. 56 depicts an example embodiment for insertion of a Path within an untagged Ethernet packet.

As depicted in FIG. 56, an Ethernet packet 5610 is modified by inserting the Path 5620 between the Source MAC Address field and the Ethertype field. The Ethernet packet 5610-0 is the original Ethernet packet and the Ethernet packet 5610-M illustrates modification of the original Ethernet packet to include the Path Header which is denoted as Path 5620.

It is noted that, when the Path Header is inserted into an untagged Ethernet packet, since the TPID in the Path Header now takes the position of Ethertype field, the TPID indicates that a Path Header is present. The erstwhile Ethertype field of the Ethernet Header that determines the payload type of the Ethernet packet now moves after the Path Header.

In at least some example embodiments, the Path Header may be inserted into tagged Ethernet packets (e.g., an 802.1Q header that identifies the VLAN to which the packet and Path belong).

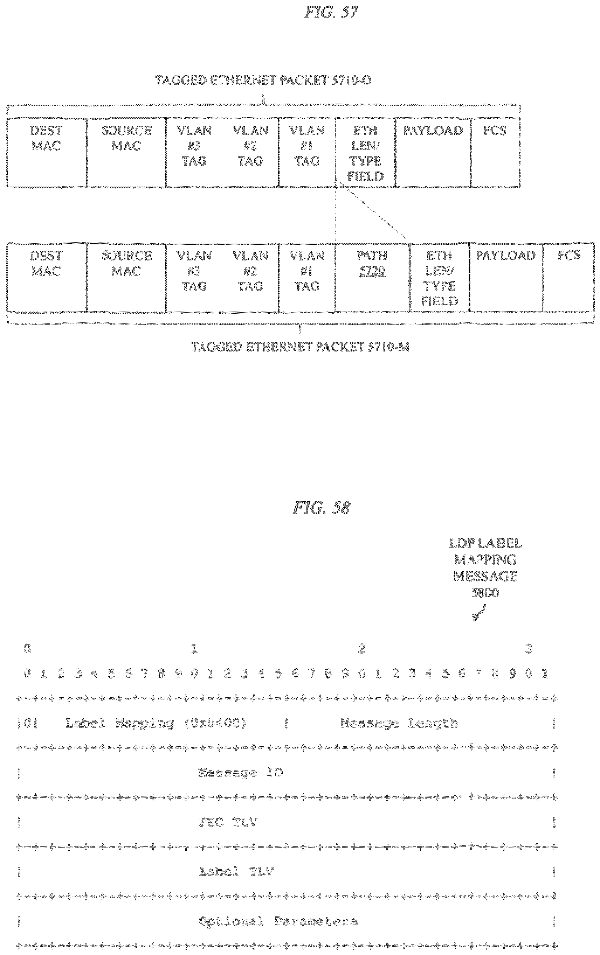

FIG. 57 depicts an example embodiment for insertion of a Path within a tagged Ethernet packet.

As depicted in FIG. 57, a tagged Ethernet packet 5710 is modified by inserting the Path 5720 between the stack of VLAN tags and the Ethernet Len/Type field. The tagged Ethernet packet 5710-0 is the original tagged Ethernet packet and the tagged Ethernet packet 5710-M illustrates modification of the original tagged Ethernet packet to include the Path Header which is denoted as Path 5720. Here, the Path is applicable to the VLAN #1 Tag.

It is noted that, when the Path Header is inserted into a tagged Ethernet packet, the destination MAC address in the Ethernet Header will be encoded with the next-hop MAC address of the path.

It is further noted that, when the Path Header is inserted into a tagged Ethernet packet, when a bridge receives an Ethernet packet with the destination MAC address as a local MAC address then the bridge will look for the presence of a Path Header. If a Path Header is present then the bridge will process the packet, e.g., by looking up the Path mapping table for the Path and performing the associated action (e.g., based on the method in FIG. 21).

It will be appreciated that, where autonomous path construction and routing is implemented in Ethernet networks, the encoding of Path in Ethernet data packets may be performed in various other ways.

Various example embodiments for supporting autonomous path construction and routing in Ethernet networks may be configured to support various other functions for supporting autonomous path construction and routing in Ethernet networks.

Various example embodiments presented herein, as indicated above, may be configured to support autonomous path construction and routing in MPLS networks.

In at least some example embodiments in which autonomous path construction and routing is supported in MPLS networks, the PSA distribution may be performed through the control plane.

In LDP, a Forwarding Equivalence Class (FEC) describes a class of packets that receive the same forwarding treatment, i.e., sent over the same LSP. So, the FEC is an identifier of the LSP to which a label is assigned by an LSR, and the label mapping is advertised to neighbors. The distribution of PSAs through the MPLS control plane may be further understood by considering the LDP Label Mapping Message as presented with respect to FIG. 58.

FIG. 58 depicts an example embodiment of an LDP Label Mapping Message configured to support PSA distribution in the MPLS control plane.

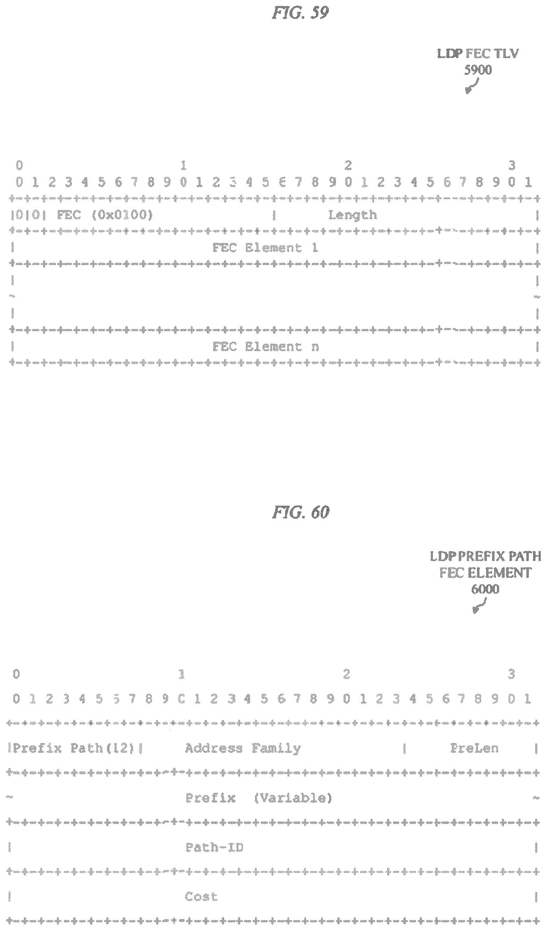

As depicted in FIG. 58, the LDP Label Mapping Message 5800 includes a number of fields, including the FEC TLV field and the Label TLV field. The FEC TLV field encodes the FEC. An example embodiment of an LDP FEC TLV is depicted in FIG. 59. The Label TLV field encodes the label assigned to the FEC. There are various types of Label TLVs.

FIG. 59 depicts an example embodiment of an LDP FEC TLV configured to support PSA distribution in the MPLS control plane.

As depicted in FIG. 59, the LDP FEC TLV 5900 includes a number of fields followed by one or more FEC elements (denoted as FEC Element 1 through FEC Element n). There are several types of FEC Elements defined for LDP. Each FEC Element starts with a 1-octet Type field and the encoding of remaining octets of the FEC Element depends on the Type specified in the 1-octet Type field.

In at least some example embodiments, a new FEC Element (referred to herein as the "Prefix Path FEC Element") may be defined in LDP. The "Prefix Path FEC Element" identifies a PSA for a destination IP Prefix. The Type value assigned is 12 (although it will be appreciated that any other suitable value may be used for this purpose). It is noted that, if this capability is standardized then the Type value that is used to denote the "Prefix Path FEC Element" may be reserved in the LDP Registry in IANA. An example embodiment of an LDP Prefix Path FEC Element is depicted in FIG. 60.

FIG. 60 depicts an example embodiment of an LDP Prefix Path FEC Element configured to support PSA distribution in the MPLS control plane.

As depicted in FIG. 60, the LDP Prefix Path FEC Element 6000 includes a number of fields, including a Type field (denoted as Prefix Path since, in this example, the Type is the LDP Prefix Path FEC Element), an Address family field, a Prefix Length (PreLen) field, a Prefix field, a Path-ID field, and a Cost field.

The Type field is a 1-octet field which, as indicated above, is encoded with a value (e.g., 12 in this example, although it will be appreciated that other suitable values may be used) that indicates that the FEC Element is an LDP Prefix Path FEC Element.

The Address Family field is a 2-octet field that specifies a value from ADDRESS FAMILY NUMBERS in [ASSIGNED_AF] that encodes the address family for the address prefix in the Prefix field.

The Prefix Length (PreLen) field is a 1-octet unsigned integer that specifies the length in bits of the address prefix that follows in the Prefix field. A length of zero indicates a prefix that matches all addresses (the default destination); in this case, the Prefix itself is zero octets).

The Prefix field includes an address prefix encoded according to the Address Family field, whose length, in bits, was specified in the Prefix Length field, padded to a byte boundary.

The Path-ID field specifies the Path-ID assigned for the Path to the Prefix specified in the Prefix field.

The Cost field specifies the cost of the Path identified by the Path-ID in the Path-ID field.

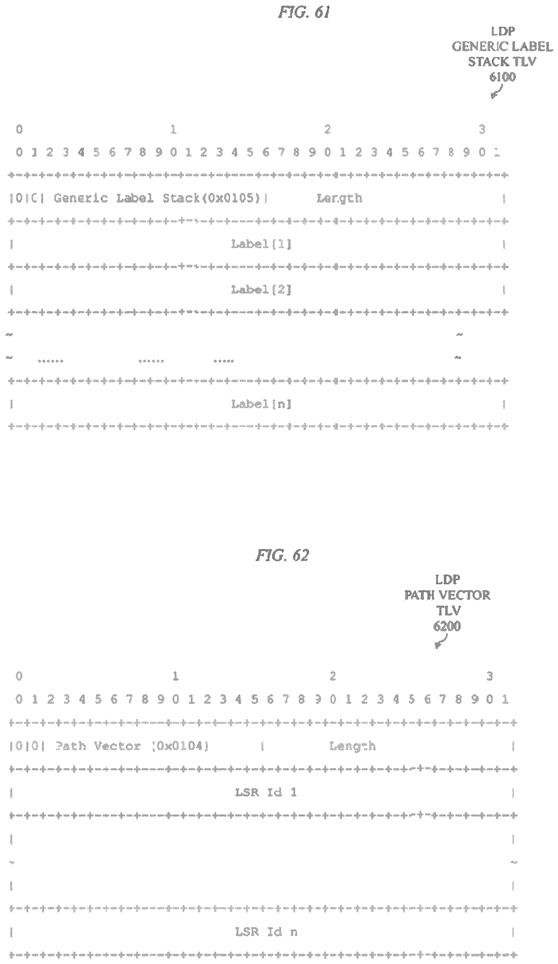

In at least some example embodiments, a new type of Label TLV (referred to herein as the "Generic Label Stack TLV") may be defined in LDP. The "Generic Label Stack TLV" encodes the ordered list of labels indicating the hops in the path represented by a Prefix Path FEC Element. An example embodiment of an LDP Generic Label Stack TLV is depicted in FIG. 61.

FIG. 61 depicts an example embodiment of an LDP Generic Label Stack TLV configured to support PSA distribution in the MPLS control plane.

As depicted in FIG. 61, the LDP Generic Label Stack TLV 6100 includes a number of fields, including a set of one or more Label fields (denoted as Label [1] through Label [n]). The set of one or more Label fields encodes the ordered list of labels indicating the hops in the path represented by a Prefix Path FEC Element.

In at least some example embodiments, a Label Mapping Message is used as a PSA. The PSA can be encoded in two ways as follows: (a) Method 1 - using a Prefix Path FEC Element, a Generic Label Stack TLV, and a Path Vector TLV or (b) Method 2 - using a Prefix Path FEC Element, a Label TLV, and a Path Vector TLV.

The Path Vector TLV is included for loop detection of PSAs. The Path Vector TLV records the LSRs traversed by the PSA along its path. An example embodiment of an LDP Path Vector TLV is depicted in FIG. 62.

FIG. 62 depicts an example embodiment of an LDP Path Vector TLV configured to support PSA distribution in the MPLS control plane.

As depicted in FIG. 62, the LDP Path Vector TLV 6200 includes a number of fields, including a set of one or more LSR Identifier fields (denoted as LSR Id 1 through LSR Id n). The set of one or more LSR Identifier fields provides a list of router identifiers indicating the path of LSRs that the message has traversed. Each LSR Id is the first four octets (router-id) of the LDP Identifier for the corresponding LSR, thereby ensuring that it is unique within the LSR network.

It will be appreciated that path construction and PSA distribution using LDP may be performed in various ways, including a first method and a second method discussed further below.

In at least some example embodiments, path construction and PSA distribution using LDP may be performed using a first method as follows.

In this first method, each LSR allocates a label to identify a neighboring LSR on an interface. It is noted that that an LSR may have multiple interfaces to a neighboring LSR and, in that case, a label is assigned to the neighbor on each interface.

In this first method, the originating LSR of the PSA performs the following actions (which follow the method described in FIG. 17). The originating LSR allocates a local Path-ID and encodes the Prefix Path FEC Element with the prefix, the local Path-ID, and cost as 0. The originating LSR allocates a label to identify the prefix, and encodes the label in the Generic Label Stack TLV. The originating LSR encodes the Path Vector TLV with its LSR-Id as the only element. The originating LSR advertises the PSA on the LDP sessions to all neighboring LSRs.

In this first method, when an LSR receives a PSA from a neighboring LSR, the LSR performs the following actions (which follow the method described in FIG. 17). The LSR checks for its LSR-Id in the Path Vector TLV. If its LSR-Id is found then it means that the PSA has traversed this LSR before and now makes a loop, and so the packet is dropped. The LSR installs a path entry (against the Prefix in Prefix FEC element) on each interface to the neighboring LSR. It is noted that there could be multiple interfaces to the neighboring LSR and each path entry is uniquely identified by the tuple {Path-ID in Prefix FEC Element, Next-hop (Neighbor) on the Interface}. Each path entry is installed with the path as the label stack describing the ordered list of hops, where the label stack is formed by pushing the label that identifies the neighboring LSR on the interface onto the label stack in the received Generic Label Stack TLV. The cost of the path entry is the cost of the interface added to the cost in the Prefix Path FEC Element. The LSR allocates a local Path-ID for each installed path entry. The LSR advertises a PSA for each path entry, where Path-ID in the PSA is encoded with the local Path-ID. Path Vector TLV includes the LSR-Ids from the original PSA plus the LSR-Id of this LSR. The PSA is advertised to all neighboring LSRs, except the LSR from which the original PSA was received.

In at least some example embodiments, path construction and PSA distribution using LDP may be performed using a second method as follows.

In this second method, the originating LSR of the PSA performs the following actions (which follow the method described in FIG. 17). The originating LSR allocates a local Path-ID and encodes the Prefix Path FEC Element with the prefix, local Path-ID, and cost as 0. The originating LSR allocates a label to identify the Prefix Path FEC Element. The originating LSR encodes the label in the Generic Label TLV. An implementation may also use the label as local Path-ID and encode it as the Path-ID in the Prefix Path FEC Element, which avoids allocation of an independent local Path-ID. The originating LSR encodes the Path Vector TLV with its LSR-Id as the only element. The originating LSR advertises the PSA on the LDP sessions to all neighboring LSRs.

In this second method, when an LSR receives a PSA from a neighboring LSR, the LSR performs the following actions (which follow the method described in FIG. 21). The LSR checks for its LSR-Id in the Path Vector TLV. If its LSR-Id is found then it means that the PSA has traversed this LSR before and now makes a loop, and so the packet is dropped. The LSR installs a path entry (against the Prefix in Prefix FEC element) on each interface to the neighboring LSR. It is noted that there could be multiple interfaces to the neighboring LSR and each path entry is uniquely identified by the tuple {Path-ID in Prefix FEC Element, Next-hop (Neighbor) on the Interface}. Each path entry is installed with the label received in the Generic Label TLV as the next-hop label. The cost of the path entry is the cost of the interface added to the cost in the Prefix Path FEC Element. The LSR allocates a local label for each path entry. The LSR creates a PSA for each path entry and encodes Path-ID in the Prefix FEC Element with the local label and Cost in the Prefix FEC Element with the cost of the path entry. The LSR Encodes the local label into the Generic Label TLV. Path Vector TLV includes the LSR-Ids from the original PSA plus the LSR-Id of this LSR. The PSA is advertised to all neighboring LSRs, except the LSR from which the original PSA was received.

It will be appreciated that, where autonomous path construction and routing is implemented in MPLS networks, PSA distribution through the MPLS control plane may be performed in various other ways.

In at least some example embodiments in which autonomous path construction and routing is supported in MPLS networks, the PSA distribution may be performed through the data plane.

The encoding of MPLS data packets sent over a path automatically constructed through propagation of PSAs in the MPLS data plane may depend on the manner in which a path is constructed by PSAs distributed within the MPLS data plane (i.e., the first method or the second method as discussed above).

In at least some example embodiments, in which a path is constructed by a PSA distributed based on the second method discussed above for distribution of PSAs in the MPLS data plane, the data packet may be sent over the path by encoding the label advertised by the next-hop of the path (where this label is equivalent to the Path-ID). In this case, the data packet may be considered to be sent over the path based on encoding of the Path-ID in the data packet.

In at least some example embodiments, in which a path is constructed by a PSA distributed based on the first method discussed above for distribution of PSAs in the MPLS data plane, the data packet may be sent over the path by encoding the label stack associated with the path. The labels in the stack represent the ordered list of hops in the path. Evert LSR along the path pops the topmost label and forwards the packet to the next-hop identified by the label. This pop-n-forward continues until the label stack becomes empty. In this case, the data packet may be considered to be sent over the path based on encoding of the Path Label in the data packet.

Various example embodiments for supporting autonomous path construction and routing in MPLS networks may be configured to support various other functions for supporting autonomous path construction and routing in MPLS networks.

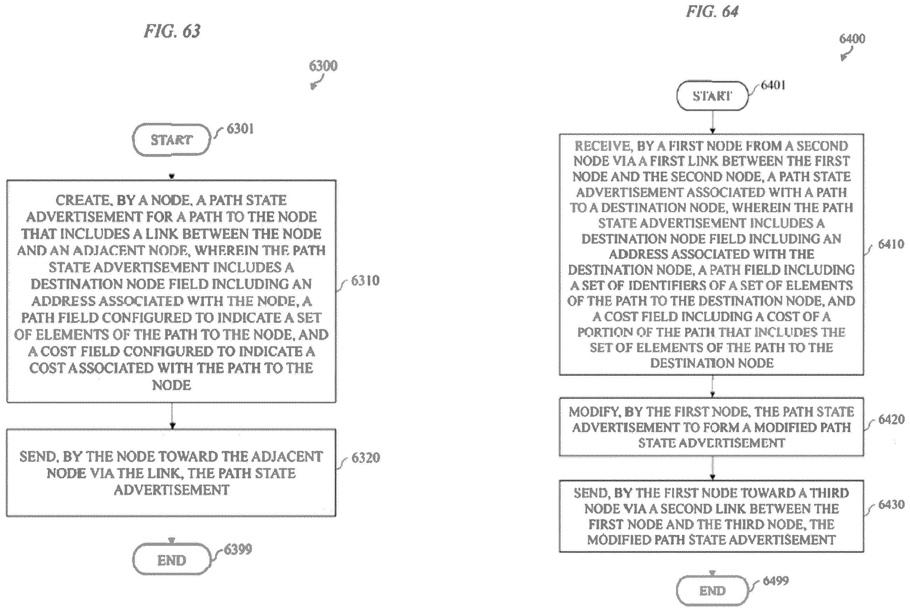

FIG. 63 depicts an example embodiment of a method for supporting autonomous path construction in a communication network. It will be appreciated that, although primarily presented herein as being performed serially, at least a portion of the functions of method 6300 may be performed contemporaneously or in a different order than as presented in FIG. 63. At block 6301, the method 6300 begins. At block 6310, create, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node. At block 6320, send, by the node toward the adjacent node via the link, the path state advertisement. At block 6399, the method 6300 ends. It will be appreciated that the method 6300 may incorporate various other functions presented herein.

FIG. 64 depicts an example embodiment of a method for supporting autonomous path construction in a communication network. It will be appreciated that, although primarily presented herein as being performed serially, at least a portion of the functions of method 6400 may be performed contemporaneously or in a different order than as presented in FIG. 64. At block 6401, the method 6400 begins. At block 6410, receive, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node. At block 6420, modify, by the first node, the path state advertisement to form a modified path state advertisement. At block 6430, send, by the first node toward a third node via a second link between the first node and the third node, the modified path state advertisement. At block 6499, the method 6400 ends. It will be appreciated that the method 6400 may incorporate various other functions presented herein.

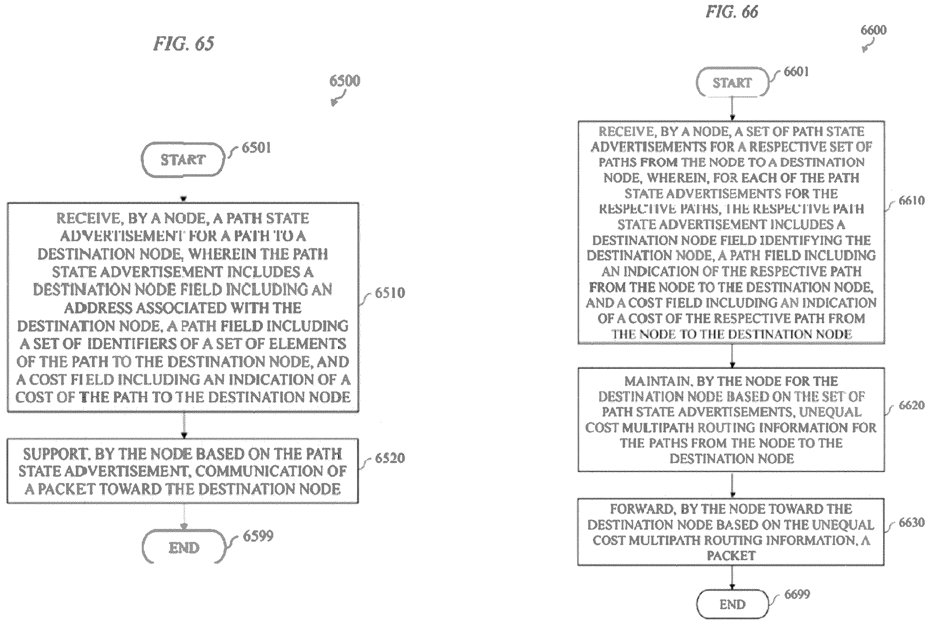

FIG. 65 depicts an example embodiment of a method for supporting routing of packets over autonomously constructed paths in a communication network. It will be appreciated that, although primarily presented herein as being performed serially, at least a portion of the functions of method 6500 may be performed contemporaneously or in a different order than as presented in FIG. 65. At block 6501, the method 6500 begins. At block 6510, receive, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node. At block 6520, support, by the node based on the path state advertisement, communication of a packet toward the destination node. At block 6599, the method 6500 ends. It will be appreciated that the method 6500 may incorporate various other functions presented herein.

FIG. 66 depicts an example embodiment of a method for supporting routing of packets over autonomously constructed paths in a communication network. It will be appreciated that, although primarily presented herein as being performed serially, at least a portion of the functions of method 6600 may be performed contemporaneously or in a different order than as presented in FIG. 66. At block 6601, the method 6600 begins. At block 6610, receive, by a node, a set of path state advertisements for a respective set of paths from the node to a destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node. At block 6620, maintain, by the node for the destination node based on the set of path state advertisements, unequal cost multipath routing information for the paths from the node to the destination node. At block 6630, forward, by the node toward the destination node based on the unequal cost multipath routing information, a packet. At block 6699, the method 6600 ends. It will be appreciated that the method 6600 may incorporate various other functions presented herein.

Various example embodiments for supporting autonomous path construction and routing in a communication network may provide various advantages or potential advantages. For example, various example embodiments for supporting autonomous path construction and routing in a communication network may be configured to support a new paradigm of routing in packet switched networks, which is a leap forward from the shortest path routing paradigm. For example, various example embodiments for supporting autonomous path construction and routing in a communication network may be configured to provide a routing paradigm in non-TE networks that is able to achieve optimal utilization of the network and maximize throughput. Various example embodiments for supporting autonomous path construction and routing in a communication network may provide various other advantages or potential advantages.

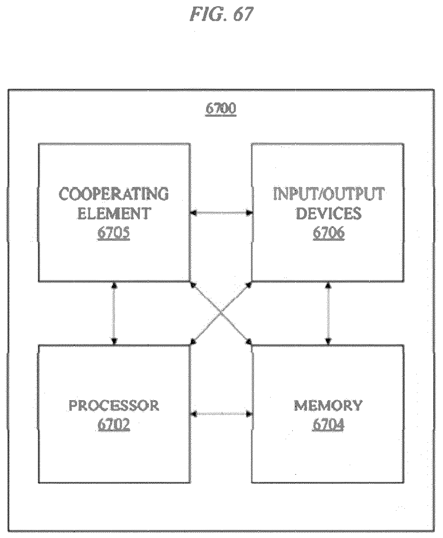

FIG. 67 depicts an example embodiment of a computer suitable for use in performing various functions presented herein.

The computer 6700 includes a processor 6702 (e.g., a central processing unit (CPU), a processor, a processor having a set of processor cores, a processor core of a processor, or the like) and a memory 6704 (e.g., a random access memory (RAM), a read-only memory (ROM), or the like). In at least some example embodiments, the computer 6700 may include at least one processor and at least one memory storing instructions that, when executed by the at least one processor, cause the computer to perform various functions presented herein.

The computer 6700 also may include a cooperating element 6705. The cooperating element 6705 may be a hardware device. The cooperating element 6705 may be a process that can be loaded into the memory 6704 and executed by the processor 6702 to implement various functions presented herein (in which case, for example, the cooperating element 6705 (including associated data structures) can be stored on a non-transitory computer readable medium, such as a storage device or other suitable type of storage element (e.g., a magnetic drive, an optical drive, or the like)).

The computer 6700 also may include one or more input/output devices 6706. The input/output devices 6706 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 6700 may represent a general architecture and functionality suitable for implementing functional elements described herein, portions of functional elements described herein, or the like, as well as various combinations thereof. For example, computer 6700 may provide a general architecture and functionality that is suitable for implementing one or more elements presented herein. For example, computer 6600 may provide a general architecture and functionality suitable for implementing a node (e.g., a router or other node supporting communication of packets) or a portion thereof, a controller or a portion thereof, or the like.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory including instructions that, when executed by the at least one processor, cause the apparatus at least to:
create, by a node, a path state advertisement for a path to the node that includes a link between the node and an adjacent node, wherein the path state advertisement includes a destination node field including an address associated with the node, a path field configured to indicate a set of elements of the path to the node, and a cost field configured to indicate a cost associated with the path to the node; and
send, by the node toward the adjacent node via the link, the path state advertisement.

2. The apparatus according to claim 1, wherein the address associated with the node includes an address of the node or an address learned by the node.

3. The apparatus according to any of claims 1 to 2, wherein at least one of:
the path field is empty and the cost field is empty; or
the path field includes an identifier of the link and the cost field includes a cost of the link.

4. The apparatus according to any of claims 1 to 3, wherein the path state advertisement includes a path identifier assigned by the node for the path to the node.

5. An apparatus, comprising:
at least one processor; and
at least one memory including instructions that, when executed by the at least one processor, cause the apparatus at least to:
receive, by a first node from a second node via a first link between the first node and the second node, a path state advertisement associated with a path to a destination node, wherein the path state advertisement includes a destination node field including an address associated with the destination node, a path field including a set of identifiers of a set of elements of the path to the destination node, and a cost field including a cost of a portion of the path that includes the set of elements of the path to the destination node;
modify, by the first node, the path state advertisement to form a modified path state advertisement; and
send, by the first node toward a third node via a second link between the first node and the third node, the modified path state advertisement.

6. The apparatus according to claim 5, wherein, to modify the path state advertisement to form the modified path state advertisement, the instructions, when executed by the at least one processor, cause the apparatus at least to:
update the set of identifiers in the path field of the path state advertisement to include an identifier of the first link; and
update the cost in the cost field of the path state advertisement by adding the cost of the first link.

7. The apparatus according to claim 5, wherein the path field includes an identifier of the first link, wherein the cost includes a link cost of the first link.

8. The apparatus according to claim 7, wherein, to modify the path state advertisement to form the modified path state advertisement, the instructions, when executed by the at least one processor, cause the apparatus at least to:
update the set of identifiers in the path field of the path state advertisement to include an identifier of the second link; and
update the cost in the cost field of the path state advertisement by adding the cost of the second link.

9. The apparatus according to claim 5, wherein the instructions, when executed by the at least one processor, cause the apparatus at least to:
maintain, by the node in a forwarding table of the node, a path state entry for the destination node, wherein the path state entry includes a mapping of the address associated with the destination node to the set of identifiers and the cost.

10. The apparatus according to claim 5, wherein the path state advertisement includes a path identifier assigned by the second node for the path to the destination node.

11. The apparatus according to claim 10, wherein the modified path state advertisement includes a path identifier assigned by the node for the path to the destination node.

12. An apparatus, comprising:
at least one processor; and
at least one memory including instructions that, when executed by the at least one processor, cause the apparatus at least to:
receive, by a node, a path state advertisement for a path to a destination node, wherein the path state advertisement includes a destination node field including an address associated with the destination node, a path field including a set of identifiers of a set of elements of the path to the destination node, and a cost field including an indication of a cost of the path to the destination node; and
support, by the node based on the path state advertisement, communication of a packet toward the destination node.

13. The apparatus according to claim 12, wherein, to support communication of the packet toward the destination node, the instructions, when executed by the at least one processor, cause the apparatus at least to:
select, by the node from a set of available paths to the destination based on the cost of the path to the destination node, the path to the destination node; and
forward, by the node via the path to the destination node, the packet.

14. The apparatus according to claim 12, wherein, to support communication of the packet toward the destination node, the instructions, when executed by the at least one processor, cause the apparatus at least to:
include, by the node within the packet, a source route including the set of identifiers of the set of elements of the path to the destination node; and
forward, by the node toward a second node associated with a first identifier in the set of identifiers of the set of elements of the path to the destination node, the packet.

15. The apparatus according to claim 12, wherein, the instructions, when executed by the at least one processor, cause the apparatus at least to:
receive, by the node, a set of path state advertisements for a respective set of paths from the node to the destination node, wherein, for each of the path state advertisements for the respective paths, the respective path state advertisement includes a destination node field identifying the destination node, a path field including an indication of the respective path from the node to the destination node, and a cost field including an indication of a cost of the respective path from the node to the destination node;
maintain, by the node for the destination node based on the set of path state advertisements, unequal cost multipath routing information for the paths from the node to the destination node; and
forward, by the node toward the destination node based on the unequal cost multipath routing information, a packet.
